(19)

**Europäisches Patentamt**
**European Patent Office**
**Office européen des brevets**

(11) **EP 4 571 656 A1**

(12) **EUROPEAN PATENT APPLICATION**

(43) Date of publication:
**18.06.2025 Bulletin 2025/25**

(21) Application number: **24205635.6**

(22) Date of filing: **09.10.2024**

(51) International Patent Classification (IPC):
*G06T 15/06* (2011.01)

(52) Cooperative Patent Classification (CPC):
**G06T 15/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.12.2023 US 202363608808 P**
**28.03.2024 US 202418620944**

(71) Applicant: **INTEL Corporation**
**Santa Clara, CA 95054 (US)**

(72) Inventors:
• **Drabinski, Radoslaw**
**80-280 Gdansk (PL)**
• **Majewski, Pawel**
**83-010 Rotmanka (PL)**
• **Woop, Sven**
**66333 Voelklingen SL (DE)**
• **Wu, Ruijin**
**Irvine CA, 92618 (US)**
• **Martewicz, Artur Ludwik**
**80-369 Gdansk (PL)**
• **Zirr, Tobias**
**76133 Karlsruhe BW (DE)**
• **Pyrzowski, Michal**
**80-354 Gdansk (PL)**

(74) Representative: **Samson & Partner Patentanwälte mbB**
**Widenmayerstraße 6**
**80538 München (DE)**

(54) **APPARATUS AND METHOD FOR MANAGEABLE FRAGMENTED ACCELERATION STRUCTURES**

(57) Apparatus and method for manageable fragmented acceleration structures. For example, one embodiment of an apparatus comprises: acceleration structure construction logic to build an acceleration structure (AS) including a multi-level linkage hierarchy with different types of AS fragments, the different types of AS fragments including a first type of AS fragments with leaves, a second type of AS fragments including AS linkages, and a third type of AS fragment including both leaves and AS linkages, wherein to construct an AS fragment, the acceleration structure construction logic is to: evaluate a plurality of primitive references, determine whether each primitive reference indicates a primitive or an AS fragment, and if the primitive reference indicates an AS fragment, then encode a pointer or offset directly or indirectly into a bounding volume hierarchy (BVH) of the AS fragment; and traversal hardware logic to traverse a ray through the AS.

**FIG. 46**

EP 4 571 656 A1

## Description

### BACKGROUND

### Field of the Invention

This invention relates generally to the field of graphics processors. More particularly, the invention relates to an apparatus and method for manageable fragmented acceleration structures.

### Description of the Related Art

Ray tracing is a technique in which a light transport is simulated through physically-based rendering. Widely used in cinematic rendering, it was considered too resource-intensive for real-time performance until just a few years ago. One of the key operations in ray tracing is processing a visibility query for ray-scene intersections known as "ray traversal" which computes ray-scene intersections by traversing and intersecting nodes in a bounding volume hierarchy (BVH).

Rasterization is a technique in which, screen objects are created from 3D models of objects created from a mesh of triangles. The vertices of each triangle intersect with the vertices of other triangles of different shapes and sizes. Each vertex has a position in space as well as information about color, texture and its normal, which is used to determine the way the surface of an object is facing. A rasterization unit converts the triangles of the 3D models into pixels in a 2D screen space and each pixel can be assigned an initial color value based on the vertex data.

### BRIEF DESCRIPTION OF THE DRAWINGS

A better understanding of the present invention can be obtained from the following detailed description in conjunction with the following drawings, in which:

FIG. 1 is a block diagram of a processing system, according to an embodiment.
FIG. 2A is a block diagram of an embodiment of a processor having one or more processor cores, an integrated memory controller, and an integrated graphics processor.
FIG. 2B is a block diagram of hardware logic of a graphics processor core block, according to some embodiments described herein.
FIG. 2C illustrates a graphics processing unit (GPU) that includes dedicated sets of graphics processing resources arranged into multi-core groups.
FIG. 2D is a block diagram of general-purpose graphics processing unit (GPGPU) that can be configured as a graphics processor and/or compute accelerator, according to embodiments described herein.
FIG. 3A is a block diagram of a graphics processor, which may be a discrete graphics processing unit, or may be a graphics processor integrated with a plurality of processing cores, or other semiconductor devices such as, but not limited to, memory devices or network interfaces.
FIG. 3B illustrates a graphics processor having a tiled architecture, according to embodiments described herein.
FIG. 3C illustrates a compute accelerator, according to embodiments described herein.
FIG. 4 is a block diagram of a graphics processing engine of a graphics processor in accordance with some embodiments.
FIG. 5A illustrates graphics core cluster, according to an embodiment.
FIG. 5B illustrates a vector engine of a graphics core, according to an embodiment.
FIG. 5C illustrates a matrix engine of a graphics core, according to an embodiment.
FIG. 6 illustrates a tile of a multi-tile processor, according to an embodiment.
FIG. 7 is a block diagram illustrating graphics processor instruction formats according to some embodiments.
FIG. 8 is a block diagram of another embodiment of a graphics processor.
FIG. 9A is a block diagram illustrating a graphics processor command format that may be used to program graphics processing pipelines according to some embodiments.
FIG. 9B is a block diagram illustrating a graphics processor command sequence according to an embodiment.
FIG. 10 illustrates an exemplary graphics software architecture for a data processing system according to some embodiments.
FIG. 11A is a block diagram illustrating an IP core development system that may be used to manufacture an integrated circuit to perform operations according to an embodiment.
FIG. 11B illustrates a cross-section side view of an integrated circuit package assembly, according to some embodiments described herein.
FIG. 11C illustrates a package assembly that includes multiple units of hardware logic chiplets connected to a substrate.

FIG. 11D illustrates a package assembly including interchangeable chiplets, according to an embodiment.

FIG. 12 is a block diagram illustrating an exemplary system on a chip integrated circuit that may be fabricated using one or more IP cores, according to an embodiment.

FIG. 13 illustrates an exemplary graphics processor of a system on a chip integrated circuit that may be fabricated using one or more IP cores;

FIG. 14 illustrates an additional exemplary graphics processor of a system on a chip integrated circuit that may be fabricated using one or more IP cores;

FIG. 15 illustrates a processing architecture which includes ray tracing cores and tensor cores;

FIG. 16 illustrates an exemplary hybrid ray tracing apparatus;

FIG. 17 illustrates stacks used for ray tracing operations;

FIG. 18 illustrates additional details for a hybrid ray tracing apparatus;

FIG. 19 illustrates a bounding volume hierarchy;

FIG. 20 illustrates a call stack and traversal state storage;

FIG. 21 illustrates operational flow of a programmable ray tracing pipeline;

FIGS. 22A-B illustrate how multiple dispatch cycles are required to execute certain shaders;

FIG. 23 illustrates how a single dispatch cycle executes a plurality of shaders;

FIG. 24 illustrates how a single dispatch cycle executes a plurality of shaders;

FIG. 25 illustrates an architecture for executing ray tracing instructions;

FIG. 26 illustrates a method for executing ray tracing instructions within a thread;

FIG. 27 illustrates one embodiment of an architecture for asynchronous ray tracing;

FIG. 28A illustrates a displacement function applied to a mesh;

FIG. 28B illustrates one embodiment of compression circuitry for compressing a mesh or meshlet;

FIG. 29A illustrates displacement mapping on a base subdivision surface;

FIGS. 29B-C illustrates difference vectors relative to a coarse base mesh;

FIG. 30 illustrates a method in accordance with one embodiment of the invention;

FIGS. 31-33 illustrate a mesh comprising a plurality of interconnected vertices;

FIG. 34 illustrates one embodiment of a tesselator for generating a mesh;

FIGS. 35-36 illustrates one embodiment in which bounding volumes are formed based on a mesh;

FIG. 37 illustrates one embodiment of a mesh sharing overlapping vertices;

FIG. 38 illustrates a mesh with shared edges between triangles;

FIG. 39 illustrates a ray tracing engine in accordance with one embodiment;

FIG. 40 illustrate a BVH compressor in accordance with one embodiment;

FIG. 41A illustrates one embodiment of a ray tracing architecture;

FIG. 41B illustrates one embodiment which includes meshlet compression;

FIG. 42 illustrates a plurality of threads including synchronous threads, diverging spawn threads, regular spawn threads, and converging spawn threads;

FIG. 43 illustrates one embodiment of a ray tracing architecture with a bindless thread dispatcher;

FIG. 44 illustrates intra-BVH level-of-detail (LoD) selection during traversal in accordance with one embodiment of the invention;

FIG. 45 illustrates a method for intra-BVH level-of-detail (LoD) selection during traversal in accordance with one embodiment of the invention;

FIG. 46 illustrates a hierarchical arrangement of acceleration structures (ASs) according to some embodiments of the invention;

FIG. 47 illustrates an example of a linkage acceleration structure with an internal node referencing another AS; and

FIG. 48 illustrates another example of a linkage acceleration structure with an internal node referencing a children region containing references to another AS.

## DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

EXEMPLARY GRAPHICS PROCESSOR ARCHITECTURES AND DATA TYPES

## System Overview

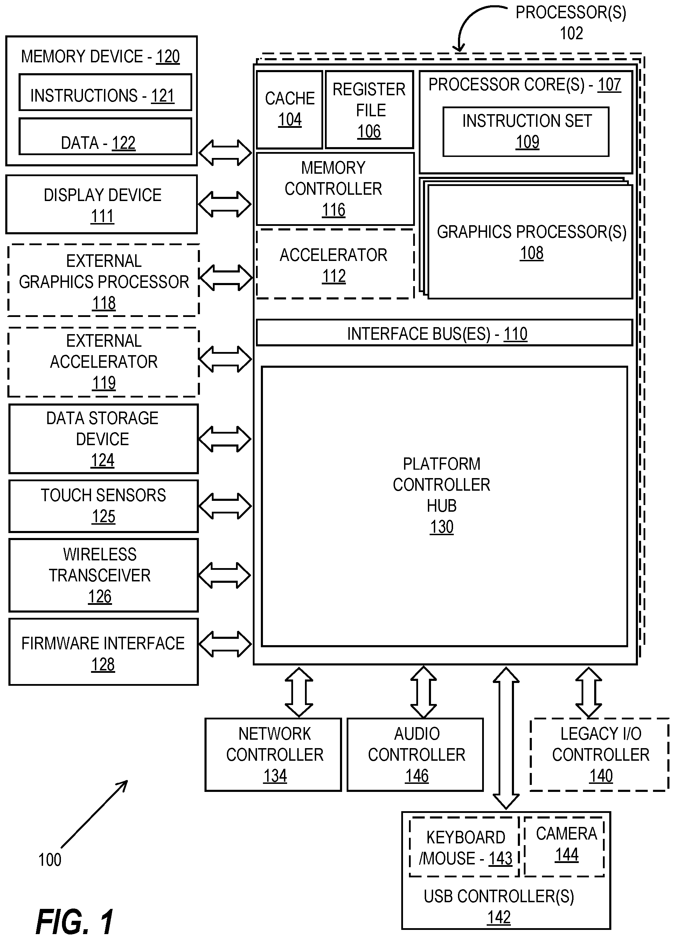

FIG. 1 is a block diagram of a processing system 100, according to an embodiment. Processing system 100 may be used in a single processor desktop system, a multiprocessor workstation system, or a server system having a large number of processors 102 or processor cores 107. In one embodiment, the processing system 100 is a processing platform incorporated within a system-on-a-chip (SoC) integrated circuit for use in mobile, handheld, or embedded devices such as within Internet-of-things (IoT) devices with wired or wireless connectivity to a local or wide area network.

In one embodiment, processing system 100 can include, couple with, or be integrated within: a server-based gaming platform; a game console, including a game and media console; a mobile gaming console, a handheld game console, or an online game console. In some embodiments the processing system 100 is part of a mobile phone, smart phone, tablet computing device or mobile Internet-connected device such as a laptop with low internal storage capacity. Processing system 100 can also include, couple with, or be integrated within: a wearable device, such as a smart watch wearable device; smart eyewear or clothing enhanced with augmented reality (AR) or virtual reality (VR) features to provide visual, audio or tactile outputs to supplement real world visual, audio or tactile experiences or otherwise provide text, audio, graphics, video, holographic images or video, or tactile feedback; other augmented reality (AR) device; or other virtual reality (VR) device. In some embodiments, the processing system 100 includes or is part of a television or set top box device. In one embodiment, processing system 100 can include, couple with, or be integrated within a self-driving vehicle such as a bus, tractor trailer, car, motor or electric power cycle, plane, or glider (or any combination thereof). The self-driving vehicle may use processing system 100 to process the environment sensed around the vehicle.

In some embodiments, the one or more processors 102 each include one or more processor cores 107 to process instructions which, when executed, perform operations for system or user software. In some embodiments, at least one of the one or more processor cores 107 is configured to process a specific instruction set 109. In some embodiments, instruction set 109 may facilitate Complex Instruction Set Computing (CISC), Reduced Instruction Set Computing (RISC), or computing via a Very Long Instruction Word (VLIW). One or more processor cores 107 may process a different instruction set 109, which may include instructions to facilitate the emulation of other instruction sets. Processor core 107 may also include other processing devices, such as a Digital Signal Processor (DSP).

In some embodiments, the processor 102 includes cache memory 104. Depending on the architecture, the processor 102 can have a single internal cache or multiple levels of internal cache. In some embodiments, the cache memory is shared among various components of the processor 102. In some embodiments, the processor 102 also uses an external cache (e.g., a Level-3 (L3) cache or Last Level Cache (LLC)) (not shown), which may be shared among processor cores 107 using known cache coherency techniques. A register file 106 can be additionally included in processor 102 and may include different types of registers for storing different types of data (e.g., integer registers, floating point registers, status registers, and an instruction pointer register). Some registers may be general-purpose registers, while other registers may be specific to the design of the processor 102.

In some embodiments, one or more processor(s) 102 are coupled with one or more interface bus(es) 110 to transmit communication signals such as address, data, or control signals between processor 102 and other components in the processing system 100. The interface bus 110, in one embodiment, can be a processor bus, such as a version of the Direct Media Interface (DMI) bus. However, processor busses are not limited to the DMI bus, and may include one or more Peripheral Component Interconnect buses (e.g., PCI, PCI express), memory busses, or other types of interface busses. In one embodiment the processor(s) 102 include a memory controller 116 and a platform controller hub 130. The memory controller 116 facilitates communication between a memory device and other components of the processing system 100, while the platform controller hub (PCH) 130 provides connections to I/O devices via a local I/O bus.

The memory device 120 can be a dynamic random-access memory (DRAM) device, a static random-access memory (SRAM) device, flash memory device, phase-change memory device, or some other memory device having suitable performance to serve as process memory. In one embodiment the memory device 120 can operate as system memory for the processing system 100, to store data 122 and instructions 121 for use when the one or more processors 102 executes an application or process. The memory controller 116 also couples with an optional external graphics processor 118, which may communicate with the one or more graphics processors 108 in processors 102 to perform graphics and media operations. In some embodiments, graphics, media, and or compute operations may be assisted by an accelerator 112 which is a coprocessor that can be configured to perform a specialized set of graphics, media, or compute operations. For example, in one embodiment the accelerator 112 is a matrix multiplication accelerator used to optimize machine learning or compute operations. In one embodiment the accelerator 112 is a ray-tracing accelerator that can be used to perform ray-tracing operations in concert with the graphics processor 108. In one embodiment, an external accelerator 119 may be used in place of or in concert with the accelerator 112.

In some embodiments a display device 111 can connect to the processor(s) 102. The display device 111 can be one or more of an internal display device, as in a mobile electronic device or a laptop device or an external display device attached via a display interface (e.g., DisplayPort, etc.). In one embodiment the display device 111 can be a head mounted display (HMD) such as a stereoscopic display device for use in virtual reality (VR) applications or augmented reality (AR) applications.

In some embodiments the platform controller hub 130 enables peripherals to connect to memory device 120 and processor 102 via a high-speed I/O bus. The I/O peripherals include, but are not limited to, an audio controller 146, a network controller 134, a firmware interface 128, a wireless transceiver 126, touch sensors 125, a data storage device 124 (e.g., non-volatile memory, volatile memory, hard disk drive, flash memory, NAND, 3D NAND, 3D XPoint, etc.). The data storage device 124 can connect via a storage interface (e.g., SATA) or via a peripheral bus, such as a Peripheral Component Interconnect bus (e.g., PCI, PCI express). The touch sensors 125 can include touch screen sensors, pressure sensors, or fingerprint sensors. The wireless transceiver 126 can be a Wi-Fi transceiver, a Bluetooth transceiver, or a mobile network transceiver such as a 3G, 4G, 5G, or Long-Term Evolution (LTE) transceiver. The firmware interface 128 enables communication with system firmware, and can be, for example, a unified extensible firmware interface (UEFI). The network controller 134 can enable a network connection to a wired network. In some embodiments, a high-performance network controller (not shown) couples with the interface bus 110. The audio controller 146, in one embodiment, is a multi-channel high-definition audio controller. In one embodiment the processing system 100 includes an optional legacy I/O controller 140 for coupling legacy (e.g., Personal System 2 (PS/2)) devices to the system. The platform controller hub 130 can also connect to one or more Universal Serial Bus (USB) controllers 142 to connect to input devices, such as keyboard and mouse 143 combinations, a camera 144, or other USB input devices.

It will be appreciated that the processing system 100 shown is exemplary and not limiting, as other types of data processing systems that are differently configured may also be used. For example, an instance of the memory controller 116 and platform controller hub 130 may be integrated into a discrete external graphics processor, such as the external graphics processor 118. In one embodiment the platform controller hub 130 and/or memory controller 116 may be external to the one or more processor(s) 102 and reside in a system chipset that is in communication with the processor(s) 102.

For example, circuit boards ("sleds") can be used on which components such as CPUs, memory, and other components are placed, and are designed for increased thermal performance. In some examples, processing components such as the processors are located on a top side of a sled while near memory, such as DIMMs, are located on a bottom side of the sled. As a result of the enhanced airflow provided by this design, the components may operate at higher frequencies and power levels than in typical systems, thereby increasing performance. Furthermore, the sleds are configured to blindly mate with power and data communication cables in a rack, thereby enhancing their ability to be quickly removed, upgraded, reinstalled, and/or replaced. Similarly, individual components located on the sleds, such as processors, accelerators, memory, and data storage drives, are configured to be easily upgraded due to their increased spacing from each other. In the illustrative embodiment, the components additionally include hardware attestation features to prove their authenticity.

A data center can utilize a single network architecture ("fabric") that supports multiple other network architectures including Ethernet and Omni-Path. The sleds can be coupled to switches via optical fibers, which provide higher bandwidth and lower latency than typical twisted pair cabling (e.g., Category 5, Category 5e, Category 6, etc.). Due to the high bandwidth, low latency interconnections and network architecture, the data center may, in use, pool resources, such as memory, accelerators (e.g., GPUs, graphics accelerators, FPGAs, ASICs, neural network and/or artificial intelligence accelerators, etc.), and data storage drives that are physically disaggregated, and provide them to compute resources (e.g., processors) on an as needed basis, enabling the compute resources to access the pooled resources as if they were local.

A power supply or source can provide voltage and/or current to processing system 100 or any component or system described herein. In one example, the power supply includes an AC to DC (alternating current to direct current) adapter to plug into a wall outlet. Such AC power can be renewable energy (e.g., solar power) power source. In one example, power source includes a DC power source, such as an external AC to DC converter. In one example, power source or power supply includes wireless charging hardware to charge via proximity to a charging field. In one example, power source can include an internal battery, alternating current supply, motion-based power supply, solar power supply, or fuel cell source.

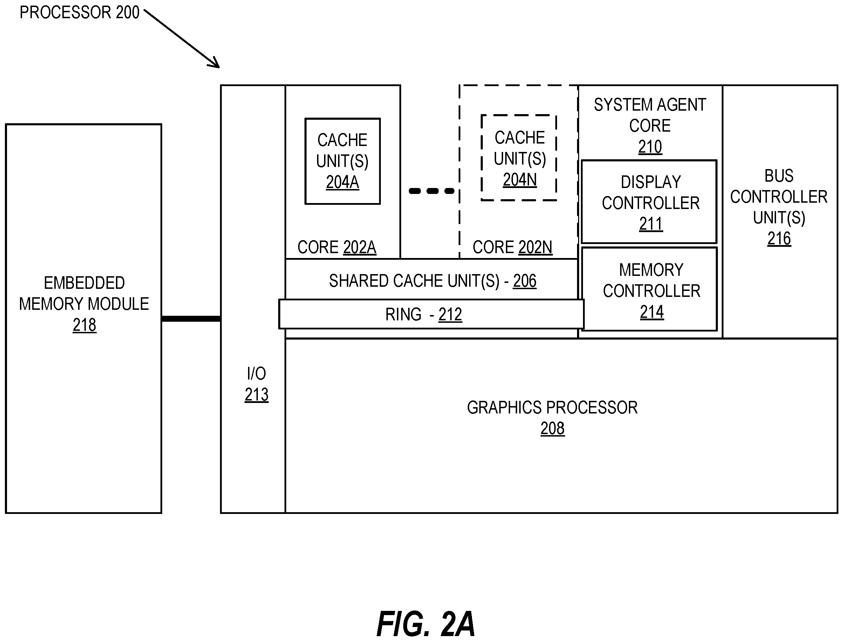

Figs. 2A-2D illustrate computing systems and graphics processors provided by embodiments described herein. The elements of Figs. 2A-2D having the same reference numbers (or names) as the elements of any other figure herein can operate or function in any manner similar to that described elsewhere herein, but are not limited to such.

FIG. 2A is a block diagram of an embodiment of a processor 200 having one or more processor cores 202A-202N, an integrated memory controller 214, and an integrated graphics processor 208. Processor 200 can include additional cores up to and including additional core 202N represented by the dashed lined boxes. Each of processor cores 202A-202N includes one or more internal cache units 204A-204N. In some embodiments each processor core also has access to one or more shared cached units 206. The internal cache units 204A-204N and shared cache units 206 represent a cache memory hierarchy within the processor 200. The cache memory hierarchy may include at least one level of instruction and data cache within each processor core and one or more levels of shared mid-level cache, such as a Level 2 (L2), Level 3 (L3), Level 4 (L4), or other levels of cache, where the highest level of cache before external memory is classified as the LLC. In some embodiments, cache coherency logic maintains coherency between the various cache units 206 and 204A-204N.

In some embodiments, processor 200 may also include a set of one or more bus controller units 216 and a system agent core 210. The one or more bus controller units 216 manage a set of peripheral buses, such as one or more PCI or PCI express busses. System agent core 210 provides management functionality for the various processor components. In some embodiments, system agent core 210 includes one or more integrated memory controllers 214 to manage access to various external memory devices (not shown).

In some embodiments, one or more of the processor cores 202A-202N include support for simultaneous multi-threading. In such embodiment, the system agent core 210 includes components for coordinating and operating cores 202A-202N during multi-threaded processing. System agent core 210 may additionally include a power control unit (PCU), which includes logic and components to regulate the power state of processor cores 202A-202N and graphics processor 208.

In some embodiments, processor 200 additionally includes graphics processor 208 to execute graphics processing operations. In some embodiments, the graphics processor 208 couples with the set of shared cache units 206, and the system agent core 210, including the one or more integrated memory controllers 214. In some embodiments, the system agent core 210 also includes a display controller 211 to drive graphics processor output to one or more coupled displays. In some embodiments, display controller 211 may also be a separate module coupled with the graphics processor via at least one interconnect, or may be integrated within the graphics processor 208.

In some embodiments, a ring-based interconnect 212 is used to couple the internal components of the processor 200. However, an alternative interconnect unit may be used, such as a point-to-point interconnect, a switched interconnect, a mesh interconnect, or other techniques, including techniques well known in the art. In some embodiments, graphics processor 208 couples with the ring-based interconnect 212 via an I/O link 213.

The exemplary I/O link 213 represents at least one of multiple varieties of I/O interconnects, including an on package I/O interconnect which facilitates communication between various processor components and a high-performance embedded memory module 218, such as an eDRAM module or a high-bandwidth memory (HBM) module. In some embodiments, each of the processor cores 202A-202N and graphics processor 208 can use the embedded memory module 218 as a shared Last Level Cache.

In some embodiments, processor cores 202A-202N are homogenous cores executing the same instruction set architecture. In another embodiment, processor cores 202A-202N are heterogeneous in terms of instruction set architecture (ISA), where one or more of processor cores 202A-202N execute a first instruction set, while at least one of the other cores executes a subset of the first instruction set or a different instruction set. In one embodiment, processor cores 202A-202N are heterogeneous in terms of microarchitecture, where one or more cores having a relatively higher power consumption couple with one or more power cores having a lower power consumption. In one embodiment, processor cores 202A-202N are heterogeneous in terms of computational capability. Additionally, processor 200 can be implemented on one or more chips or as an SoC integrated circuit having the illustrated components, in addition to other components.

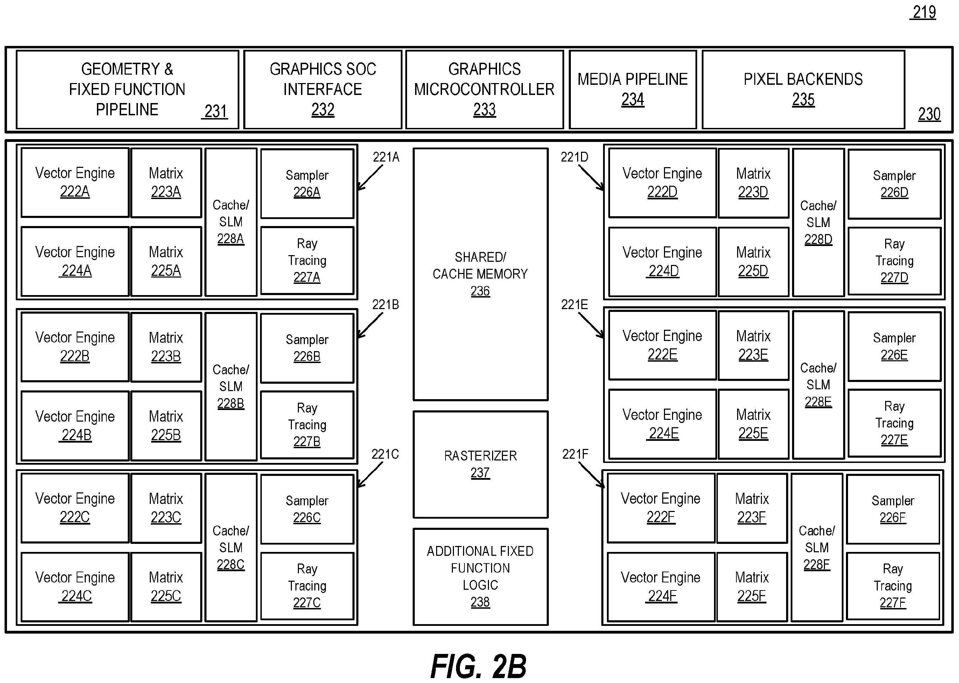

FIG. 2B is a block diagram of hardware logic of a graphics processor core block 219, according to some embodiments described herein. In some embodiments, elements of FIG. 2B having the same reference numbers (or names) as the elements of any other figure herein may operate or function in a manner similar to that described elsewhere herein. The graphics processor core block 219 is exemplary of one partition of a graphics processor. The graphics processor core block 219 can be included within the integrated graphics processor 208 of FIG. 2A or a discrete graphics processor, parallel processor, and/or compute accelerator. A graphics processor as described herein may include multiple graphics core blocks based on target power and performance envelopes. Each graphics processor core block 219 can include a function block 230 coupled with multiple graphics cores 221A-221F that include modular blocks of fixed function logic and general-purpose programmable logic. The graphics processor core block 219 also includes shared/cache memory 236 that is accessible by all graphics cores 221A-221F, rasterizer logic 237, and additional fixed function logic 238.

In some embodiments, the function block 230 includes a geometry/fixed function pipeline 231 that can be shared by all graphics cores in the graphics processor core block 219. In various embodiments, the geometry/fixed function pipeline 231 includes a 3D geometry pipeline a video front-end unit, a thread spawner and global thread dispatcher, and a unified return buffer manager, which manages unified return buffers. In one embodiment the function block 230 also includes a graphics SoC interface 232, a graphics microcontroller 233, and a media pipeline 234. The graphics SoC interface 232 provides an interface between the graphics processor core block 219 and other core blocks within a graphics processor or compute accelerator SoC. The graphics microcontroller 233 is a programmable sub-processor that is configurable to manage various functions of the graphics processor core block 219, including thread dispatch, scheduling, and pre-emption. The media pipeline 234 includes logic to facilitate the decoding, encoding, pre-processing, and/or post-processing of multimedia data, including image and video data. The media pipeline 234 implement media operations via requests to compute or sampling logic within the graphics cores 221-221F. One or more pixel backends 235 can also be included within the function block 230. The pixel backends 235 include a cache memory to store pixel color values and can perform blend operations and lossless color compression of rendered pixel data.

In one embodiment the graphics SoC interface 232 enables the graphics processor core block 219 to communicate with general-purpose application processor cores (e.g., CPUs) and/or other components within an SoC or a system host CPU that is coupled with the SoC via a peripheral interface. The graphics SoC interface 232 also enables communication with off-chip memory hierarchy elements such as a shared last level cache memory, system RAM, and/or embedded on-chip or on-package DRAM. The SoC interface 232 can also enable communication with fixed function devices within the SoC, such as camera imaging pipelines, and enables the use of and/or implements global memory atomics that may be shared between the graphics processor core block 219 and CPUs within the SoC. The graphics SoC interface 232 can also implement power management controls for the graphics processor core block 219 and enable an interface between a clock domain of the graphics processor core block 219 and other clock domains within the SoC. In one embodiment the graphics SoC interface 232 enables receipt of command buffers from a command streamer and global thread dispatcher that are configured to provide commands and instructions to each of one or more graphics cores within a graphics processor. The commands and instructions can be dispatched to the media pipeline 234 when media operations are to be performed, the geometry and fixed function pipeline 231 when graphics processing operations are to be performed. When compute operations are to be performed, compute dispatch logic can dispatch the commands to the graphics cores 221A-221F, bypassing the geometry and media pipelines.

The graphics microcontroller 233 can be configured to perform various scheduling and management tasks for the graphics processor core block 219. In one embodiment the graphics microcontroller 233 can perform graphics and/or compute workload scheduling on the various vector engines 222A-222F, 224A-224F and matrix engines 223A-223F, 225A-225F within the graphics cores 221A-221F. In this scheduling model, host software executing on a CPU core of an SoC including the graphics processor core block 219 can submit workloads to one of multiple graphics processor doorbells, which invokes a scheduling operation on the appropriate graphics engine. Scheduling operations include determining which workload to run next, submitting a workload to a command streamer, pre-empting existing workloads running on an engine, monitoring progress of a workload, and notifying host software when a workload is complete. In one embodiment the graphics microcontroller 233 can also facilitate low-power or idle states for the graphics processor core block 219, providing the graphics processor core block 219 with the ability to save and restore registers within the graphics processor core block 219 across low-power state transitions independently from the operating system and/or graphics driver software on the system.

The graphics processor core block 219 may have greater than or fewer than the illustrated graphics cores 221A-221F, up to N modular graphics cores. For each set of N graphics cores, the graphics processor core block 219 can also include shared/cache memory 236, which can be configured as shared memory or cache memory, rasterizer logic 237, and additional fixed function logic 238 to accelerate various graphics and compute processing operations.

Within each graphics cores 221A-221F is set of execution resources that may be used to perform graphics, media, and compute operations in response to requests by graphics pipeline, media pipeline, or shader programs. The graphics cores 221A-221F include multiple vector engines 222A-222F, 224A-224F, matrix acceleration units 223A-223F, 225A-225D, cache/shared local memory (SLM), a sampler 226A-226F, and a ray tracing unit 227A-227F.

The vector engines 222A-222F, 224A-224F are general-purpose graphics processing units capable of performing floating-point and integer/fixed-point logic operations in service of a graphics, media, or compute operation, including graphics, media, or compute/GPGPU programs. The vector engines 222A-222F, 224A-224F can operate at variable vector widths using SIMD, SIMT, or SIMT+SIMD execution modes. The matrix acceleration units 223A-223F, 225A-225D include matrix-matrix and matrix-vector acceleration logic that improves performance on matrix operations, particularly low and mixed precision (e.g., INT8, FP16, BF16) matrix operations used for machine learning. In one embodiment, each of the matrix acceleration units 223A-223F, 225A-225D includes one or more systolic arrays of processing elements that can perform concurrent matrix multiply or dot product operations on matrix elements.

The sampler 226A-226F can read media or texture data into memory and can sample data differently based on a configured sampler state and the texture/media format that is being read. Threads executing on the vector engines 222A-222F, 224A-224F or matrix acceleration units 223A-223F, 225A-225D can make use of the cache/SLM 228A-228F within each execution core. The cache/SLM 228A-228F can be configured as cache memory or as a pool of shared memory that is local to each of the respective graphics cores 221A-221F. The ray tracing units 227A-227F within the graphics cores 221A-221F include ray traversal/intersection circuitry for performing ray traversal using bounding volume hierarchies (BVHs) and identifying intersections between rays and primitives enclosed within the BVH volumes. In one embodiment the ray tracing units 227A-227F include circuitry for performing depth testing and culling (e.g., using a depth buffer or similar arrangement). In one implementation, the ray tracing units 227A-227F perform traversal and intersection operations in concert with image denoising, at least a portion of which may be performed using an associated matrix acceleration unit 223A-223F, 225A-225D.

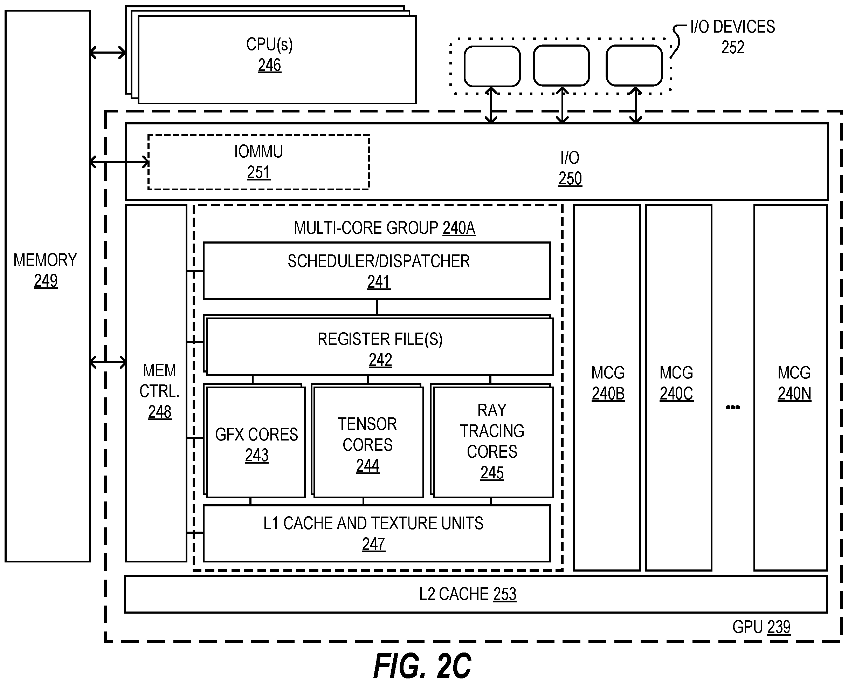

FIG. 2C illustrates a graphics processing unit (GPU) 239 that includes dedicated sets of graphics processing resources arranged into multi-core groups 240A-240N. The details of multi-core group 240A are illustrated. Multi-core groups 240B-240N may be equipped with the same or similar sets of graphics processing resources.

As illustrated, a multi-core group 240A may include a set of graphics cores 243, a set of tensor cores 244, and a set of ray tracing cores 245. A scheduler/dispatcher 241 schedules and dispatches the graphics threads for execution on the various cores 243, 244, 245. In one embodiment the tensor cores 244 are sparse tensor cores with hardware to enable multiplication operations having a zero-value input to be bypassed. The graphics cores 243 of the GPU 239 of FIG. 2C differ in hierarchical abstraction level relative to the graphics cores 221A-221F of FIG. 2B, which are analogous to the multi-core groups 240A-240N of FIG. 2C. The graphics cores 243, tensor cores 244, and ray tracing cores 245 of FIG. 2C are analogous to, respectively, the vector engines 222A-222F, 224A-224F, matrix engines 223A-223F, 225A-225F, and ray tracing units 227A-227F of FIG. 2B.

A set of register files 242 can store operand values used by the cores 243, 244, 245 when executing the graphics threads. These may include, for example, integer registers for storing integer values, floating point registers for storing floating point values, vector registers for storing packed data elements (integer and/or floating-point data elements) and tile registers for storing tensor/matrix values. In one embodiment, the tile registers are implemented as combined sets of vector registers.

One or more combined level 1 (L1) caches and shared memory units 247 store graphics data such as texture data, vertex data, pixel data, ray data, bounding volume data, etc., locally within each multi-core group 240A. One or more texture units 247 can also be used to perform texturing operations, such as texture mapping and sampling. A Level 2 (L2) cache 253 shared by all or a subset of the multi-core groups 240A-240N stores graphics data and/or instructions for multiple concurrent graphics threads. As illustrated, the L2 cache 253 may be shared across a plurality of multi-core groups 240A-240N. One or more memory controllers 248 couple the GPU 239 to a memory 249 which may be a system memory (e.g., DRAM) and/or a dedicated graphics memory (e.g., GDDR6 memory).

Input/output (I/O) circuitry 250 couples the GPU 239 to one or more I/O devices 252 such as digital signal processors (DSPs), network controllers, or user input devices. An on-chip interconnect may be used to couple the I/O devices 252 to the GPU 239 and memory 249. One or more I/O memory management units (IOMMUs) 251 of the I/O circuitry 250 couple the I/O devices 252 directly to the memory 249. In one embodiment, the IOMMU 251 manages multiple sets of page tables to map virtual addresses to physical addresses in memory 249. In this embodiment, the I/O devices 252, CPU(s) 246, and GPU 239 may share the same virtual address space.

In one implementation, the IOMMU 251 supports virtualization. In this case, it may manage a first set of page tables to map guest/graphics virtual addresses to guest/graphics physical addresses and a second set of page tables to map the guest/graphics physical addresses to system/host physical addresses (e.g., within memory 249). The base addresses of each of the first and second sets of page tables may be stored in control registers and swapped out on a context switch (e.g., so that the new context is provided with access to the relevant set of page tables). While not illustrated in FIG. 2C, each of the cores 243, 244, 245 and/or multi-core groups 240A-240N may include translation lookaside buffers (TLBs) to cache guest virtual to guest physical translations, guest physical to host physical translations, and guest virtual to host physical translations.

In one embodiment, the CPUs 246, GPU 239, and I/O devices 252 are integrated on a single semiconductor chip and/or chip package. The memory 249 may be integrated on the same chip or may be coupled to the memory controllers 248 via an off-chip interface. In one implementation, the memory 249 comprises GDDR6 memory which shares the same virtual address space as other physical system-level memories, although the underlying principles of the embodiments described herein are not limited to this specific implementation.

In one embodiment, the tensor cores 244 include a plurality of functional units specifically designed to perform matrix operations, which are the fundamental compute operation used to perform deep learning operations. For example, simultaneous matrix multiplication operations may be used for neural network training and inferencing. The tensor cores 244 may perform matrix processing using a variety of operand precisions including single precision floating-point (e.g., 32 bits), half-precision floating point (e.g., 16 bits), integer words (16 bits), bytes (8 bits), and half-bytes (4 bits). In one embodiment, a neural network implementation extracts features of each rendered scene, potentially combining details from multiple frames, to construct a high-quality final image.

In deep learning implementations, parallel matrix multiplication work may be scheduled for execution on the tensor cores 244. The training of neural networks, in particular, requires a significant number of matrix dot product operations. In order to process an inner-product formulation of an $N \times N \times N$ matrix multiply, the tensor cores 244 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 244 to ensure that the most efficient precision is used for different workloads (e.g., such as inferencing workloads which can tolerate quantization to bytes and half-bytes).

In one embodiment, the ray tracing cores 245 accelerate ray tracing operations for both real-time ray tracing and non-real-time ray tracing implementations. In particular, the ray tracing cores 245 include ray traversal/intersection circuitry for performing ray traversal using bounding volume hierarchies (BVHs) and identifying intersections between rays and primitives enclosed within the BVH volumes. The ray tracing cores 245 may also include circuitry for performing depth testing and culling (e.g., using a Z buffer or similar arrangement). In one implementation, the ray tracing cores 245 perform traversal and intersection operations in concert with the image denoising techniques described herein, at least a portion of which may be executed on the tensor cores 244. For example, in one embodiment, the tensor cores 244 implement a deep learning neural network to perform denoising of frames generated by the ray tracing cores 245. However, the CPU(s) 246, graphics cores 243, and/or ray tracing cores 245 may also implement all or a portion of the denoising and/or deep learning algorithms.

In addition, as described above, a distributed approach to denoising may be employed in which the GPU 239 is in a computing device coupled to other computing devices over a network or high-speed interconnect. In this embodiment, the interconnected computing devices share neural network learning/training data to improve the speed with which the overall system learns to perform denoising for different types of image frames and/or different graphics applications.

In one embodiment, the ray tracing cores 245 process all BVH traversal and ray-primitive intersections, saving the graphics cores 243 from being overloaded with thousands of instructions per ray. In one embodiment, each ray tracing core 245 includes a first set of specialized circuitry for performing bounding box tests (e.g., for traversal operations) and a second set of specialized circuitry for performing the ray-triangle intersection tests (e.g., intersecting rays which have been traversed). Thus, in one embodiment, the multi-core group 240A can simply launch a ray probe, and the ray tracing cores 245 independently perform ray traversal and intersection and return hit data (e.g., a hit, no hit, multiple hits, etc.) to the thread context. The other cores 243, 244 are freed to perform other graphics or compute work while the ray tracing cores 245 perform the traversal and intersection operations.

In one embodiment, each ray tracing core 245 includes a traversal unit to perform BVH testing operations and an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 243 and tensor cores 244) are freed to perform other forms of graphics work.

In one particular embodiment described below, a hybrid rasterization/ray tracing approach is used in which work is distributed between the graphics cores 243 and ray tracing cores 245.

In one embodiment, the ray tracing cores 245 (and/or other cores 243, 244) include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 245, graphics cores 243 and tensor cores 244 is Vulkan 1.1.85. Note, however, that the underlying principles of the embodiments described herein are not limited to any particular ray tracing ISA.

In general, the various cores 245, 244, 243 may support a ray tracing instruction set that includes instructions/-functions for ray generation, closest hit, any hit, ray-primitive intersection, per-primitive and hierarchical bounding box construction, miss, visit, and exceptions. More specifically, one embodiment includes ray tracing instructions to perform the following functions:

Ray Generation - Ray generation instructions may be executed for each pixel, sample, or other user-defined work assignment.

Closest Hit - A closest hit instruction may be executed to locate the closest intersection point of a ray with primitives within a scene.

Any Hit - An any hit instruction identifies multiple intersections between a ray and primitives within a scene, potentially to identify a new closest intersection point.

Intersection - An intersection instruction performs a ray-primitive intersection test and outputs a result.

Per-primitive Bounding box Construction - This instruction builds a bounding box around a given primitive or group of primitives (e.g., when building a new BVH or other acceleration data structure).

Miss - Indicates that a ray misses all geometry within a scene, or specified region of a scene.

Visit - Indicates the child volumes a ray will traverse.

Exceptions - Includes various types of exception handlers (e.g., invoked for various error conditions).

In one embodiment the ray tracing cores 245 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 245 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 245 can also be used to perform computations that are not directly analogous to ray tracing. For example, mesh projection, mesh refinement, and volume sampling computations can be accelerated using the ray tracing cores 245. Generic coordinate space calculations, such as nearest neighbor calculations can also be performed. For example, the set of points near a given point can be discovered by defining a bounding box in the coordinate space around the point. BVH and ray probe logic within the ray tracing cores 245 can then be used to determine the set of point intersections within the bounding box. The intersections constitute the origin point and the nearest neighbors to that origin point. Computations that are performed using the ray tracing cores 245 can be performed in parallel with computations performed on the graphics cores 243 and tensor cores 244. A shader compiler can be configured to compile a compute shader or other general-purpose graphics processing program into low level primitives that can be parallelized across the graphics cores 243, tensor cores 244, and ray tracing cores 245.

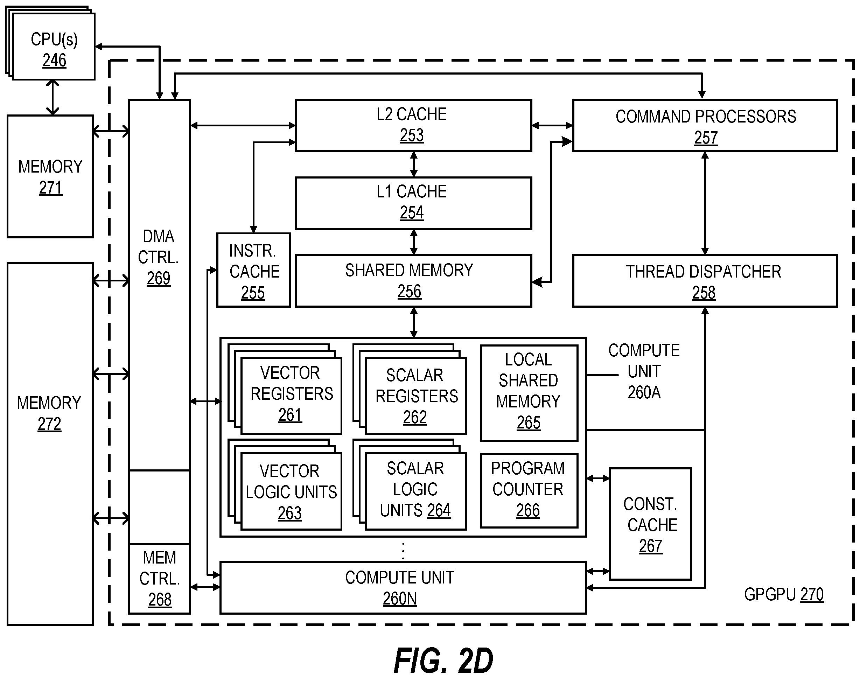

FIG. 2D is a block diagram of general-purpose graphics processing unit (GPGPU) 270 that can be configured as a graphics processor and/or compute accelerator, according to embodiments described herein. The GPGPU 270 can interconnect with host processors (e.g., one or more CPU(s) 246) and memory 271, 272 via one or more system and/or memory busses. In one embodiment the memory 271 is system memory that may be shared with the one or more CPU(s) 246, while memory 272 is device memory that is dedicated to the GPGPU 270. In one embodiment, components within the GPGPU 270 and memory 272 may be mapped into memory addresses that are accessible to the one or more CPU(s) 246. Access to memory 271 and 272 may be facilitated via a memory controller 268. In one embodiment the memory controller 268 includes an internal direct memory access (DMA) controller 269 or can include logic to perform operations that would otherwise be performed by a DMA controller.

The GPGPU 270 includes multiple cache memories, including an L2 cache 253, L1 cache 254, an instruction cache 255, and shared memory 256, at least a portion of which may also be partitioned as a cache memory. The GPGPU 270 also includes multiple compute units 260A-260N, which represent a hierarchical abstraction level analogous to the graphics cores 221A-221F of FIG. 2B and the multi-core groups 240A-240N of FIG. 2C. Each compute unit 260A-260N includes a set of vector registers 261, scalar registers 262, vector logic units 263, and scalar logic units 264. The compute units 260A-260N can also include local shared memory 265 and a program counter 266. The compute units 260A-260N can couple with a constant cache 267, which can be used to store constant data, which is data that will not change during the run of kernel or shader program that executes on the GPGPU 270. In one embodiment the constant cache 267 is a scalar data cache and cached data can be fetched directly into the scalar registers 262.

During operation, the one or more CPU(s) 246 can write commands into registers or memory in the GPGPU 270 that has been mapped into an accessible address space. The command processors 257 can read the commands from registers or memory and determine how those commands will be processed within the GPGPU 270. A thread dispatcher 258 can then be used to dispatch threads to the compute units 260A-260N to perform those commands. Each compute unit 260A-260N can execute threads independently of the other compute units. Additionally, each compute unit 260A-260N can be independently configured for conditional computation and can conditionally output the results of computation to memory. The command processors 257 can interrupt the one or more CPU(s) 246 when the submitted commands are complete.

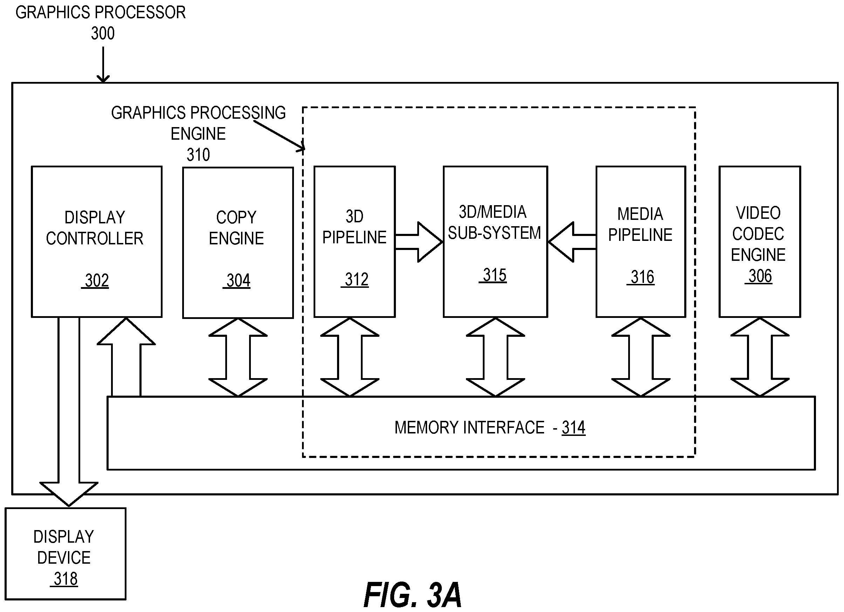

Figs. 3A-3C illustrate block diagrams of additional graphics processor and compute accelerator architectures provided by embodiments described herein. The elements of Figs. 3A-3C having the same reference numbers (or names) as the elements of any other figure herein can operate or function in any manner similar to that described elsewhere herein, but are not limited to such.

FIG. 3A is a block diagram of a graphics processor 300, which may be a discrete graphics processing unit, or may be a graphics processor integrated with a plurality of processing cores, or other semiconductor devices such as, but not limited to, memory devices or network interfaces. In some embodiments, the graphics processor communicates via a memory mapped I/O interface to registers on the graphics processor and with commands placed into the processor memory. In some embodiments, graphics processor 300 includes a memory interface 314 to access memory. Memory interface 314 can be an interface to local memory, one or more internal caches, one or more shared external caches, and/or to system memory.

In some embodiments, graphics processor 300 also includes a display controller 302 to drive display output data to a display device 318. Display controller 302 includes hardware for one or more overlay planes for the display and composition of multiple layers of video or user interface elements. The display device 318 can be an internal or external display device. In one embodiment the display device 318 is a head mounted display device, such as a virtual reality (VR) display device or an augmented reality (AR) display device. In some embodiments, graphics processor 300 includes a video codec engine 306 to encode, decode, or transcode media to, from, or between one or more media encoding formats, including, but not limited to Moving Picture Experts Group (MPEG) formats such as MPEG-2, Advanced Video Coding (AVC) formats such as H.264/MPEG-4 AVC, H.265/HEVC, Alliance for Open Media (AOMedia) VP8, VP9, as well as the Society of Motion Picture & Television Engineers (SMPTE) 421M/VC-1, and Joint Photographic Experts Group (JPEG) formats such as JPEG, and Motion JPEG (MJPEG) formats.

In some embodiments, graphics processor 300 includes a block image transfer (BLIT) engine to perform two-dimensional (2D) rasterizer operations including, for example, bit-boundary block transfers. However, in one embodiment, 2D graphics operations are performed using one or more components of graphics processing engine (GPE) 310. In some embodiments, GPE 310 is a compute engine for performing graphics operations, including three-dimensional (3D) graphics operations and media operations.

In some embodiments, GPE 310 includes a 3D pipeline 312 for performing 3D operations, such as rendering three-dimensional images and scenes using processing functions that act upon 3D primitive shapes (e.g., rectangle, triangle, etc.). The 3D pipeline 312 includes programmable and fixed function elements that perform various tasks within the element and/or spawn execution threads to a 3D/Media subsystem 315. While 3D pipeline 312 can be used to perform media operations, an embodiment of GPE 310 also includes a media pipeline 316 that is specifically used to perform media operations, such as video post-processing and image enhancement.

In some embodiments, media pipeline 316 includes fixed function or programmable logic units to perform one or more specialized media operations, such as video decode acceleration, video de-interlacing, and video encode acceleration in place of, or on behalf of video codec engine 306. In some embodiments, media pipeline 316 additionally includes a thread spawning unit to spawn threads for execution on 3D/Media subsystem 315. The spawned threads perform computations for the media operations on one or more graphics cores included in 3D/Media subsystem 315.

In some embodiments, 3D/Media subsystem 315 includes logic for executing threads spawned by 3D pipeline 312 and media pipeline 316. In one embodiment, the pipelines send thread execution requests to 3D/Media subsystem 315, which includes thread dispatch logic for arbitrating and dispatching the various requests to available thread execution resources. The execution resources include an array of graphics cores to process the 3D and media threads. In some embodiments, 3D/Media subsystem 315 includes one or more internal caches for thread instructions and data. In some embodiments, the subsystem also includes shared memory, including registers and addressable memory, to share data between threads and to store output data.

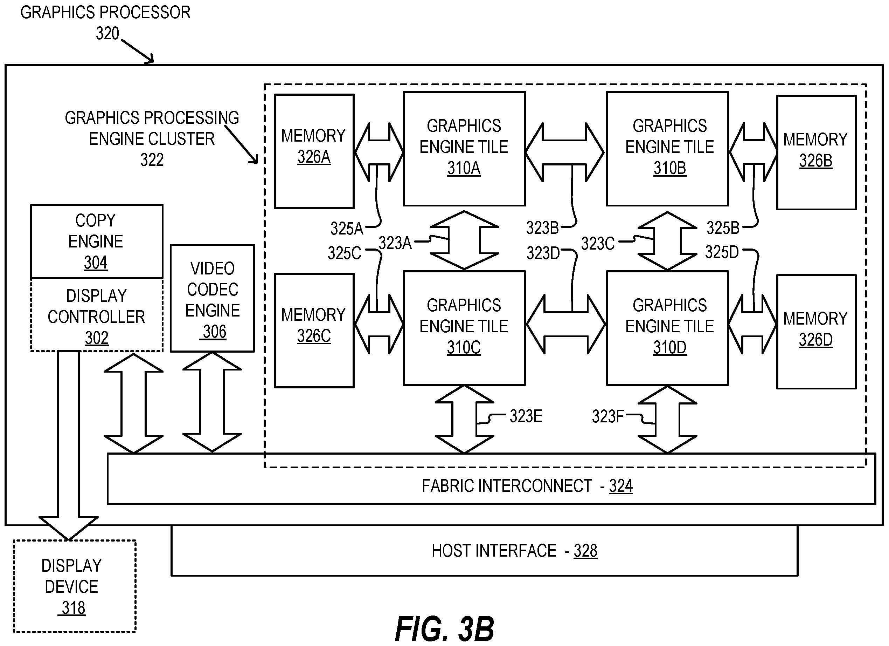

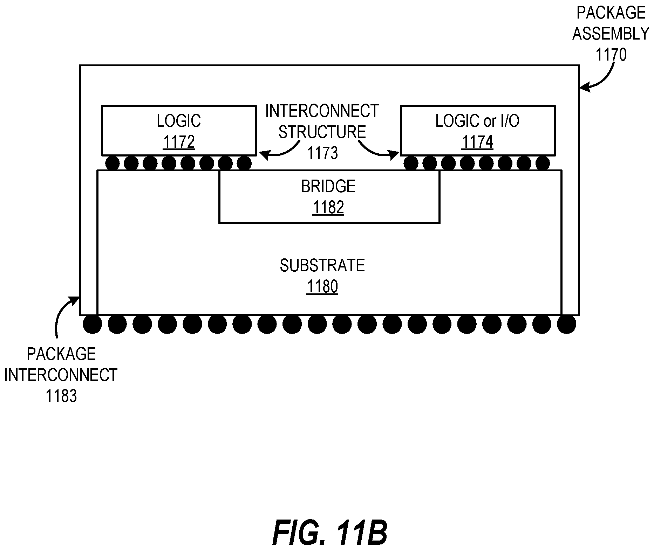

FIG. 3B illustrates a graphics processor 320 having a tiled architecture, according to embodiments described herein. In one embodiment the graphics processor 320 includes a graphics processing engine cluster 322 having multiple instances of the graphics processing engine 310 of FIG. 3A within a graphics engine tile 310A-310D. Each graphics engine tile 310A-310D can be interconnected via a set of tile interconnects 323A-323F. Each graphics engine tile 310A-310D can also be connected to a memory module or memory device 326A-326D via memory interconnects 325A-325D. The memory devices 326A-326D can use any graphics memory technology. For example, the memory devices 326A-326D may be graphics double data rate (GDDR) memory. The memory devices 326A-326D, in one embodiment, are HBM modules that can be on-die with their respective graphics engine tile 310A-310D. In one embodiment the memory devices 326A-326D are stacked memory devices that can be stacked on top of their respective graphics engine tile 310A-310D. In one embodiment, each graphics engine tile 310A-310D and associated memory 326A-326D reside on separate chiplets, which are bonded to a base die or base substrate, as described on further detail in Figs. 11B-11D.

The graphics processor 320 may be configured with a non-uniform memory access (NUMA) systemin which memory devices 326A-326D are coupled with associated graphics engine tiles 310A-310D. A given memory device may be accessed by graphics engine tiles other than the tile to which it is directly connected. However, access latency to the memory devices 326A-326D may be lowest when accessing a local tile. In one embodiment, a cache coherent NUMA (ccNUMA) system is enabled that uses the tile interconnects 323A-323F to enable communication between cache controllers within the graphics engine tiles 310A-310D to maintain a consistent memory image when more than one cache stores the same memory location.

The graphics processing engine cluster 322 can connect with an on-chip or on-package fabric interconnect 324. In one embodiment the fabric interconnect 324 includes a network processor, network on a chip (NoC), or another switching processor to enable the fabric interconnect 324 to act as a packet switched fabric interconnect that switches data packets between components of the graphics processor 320. The fabric interconnect 324 can enable communication between graphics engine tiles 310A-310D and components such as the video codec engine 306 and one or more copy engines 304. The copy engines 304 can be used to move data out of, into, and between the memory devices 326A-326D and memory that is external to the graphics processor 320 (e.g., system memory). The fabric interconnect 324 can also couple with one or more of the tile interconnects 323A-323F to facilitate or enhance the interconnection between the graphics engine tiles 310A-310D. The fabric interconnect 324 is also configurable to interconnect multiple instances of the graphics processor 320 (e.g., via the host interface 328), enabling tile-to-tile communication between graphics engine tiles 310A-310D of multiple GPUs. In one embodiment, the graphics engine tiles 310A-310D of multiple GPUs can be presented to a host system as a single logical device.

The graphics processor 320 may optionally include a display controller 302 to enable a connection with the display device 318. The graphics processor may also be configured as a graphics or compute accelerator. In the accelerator configuration, the display controller 302 and display device 318 may be omitted.

The graphics processor 320 can connect to a host system via a host interface 328. The host interface 328 can enable communication between the graphics processor 320, system memory, and/or other system components. The host interface 328 can be, for example a PCI express bus or another type of host system interface. For example, the host interface 328 may be an NVLink or NVSwitch interface. The host interface 328 and fabric interconnect 324 can cooperate to enable multiple instances of the graphics processor 320 to act as single logical device. Cooperation between the host interface 328 and fabric interconnect 324 can also enable the individual graphics engine tiles 310A-310D to be presented to the host system as distinct logical graphics devices.

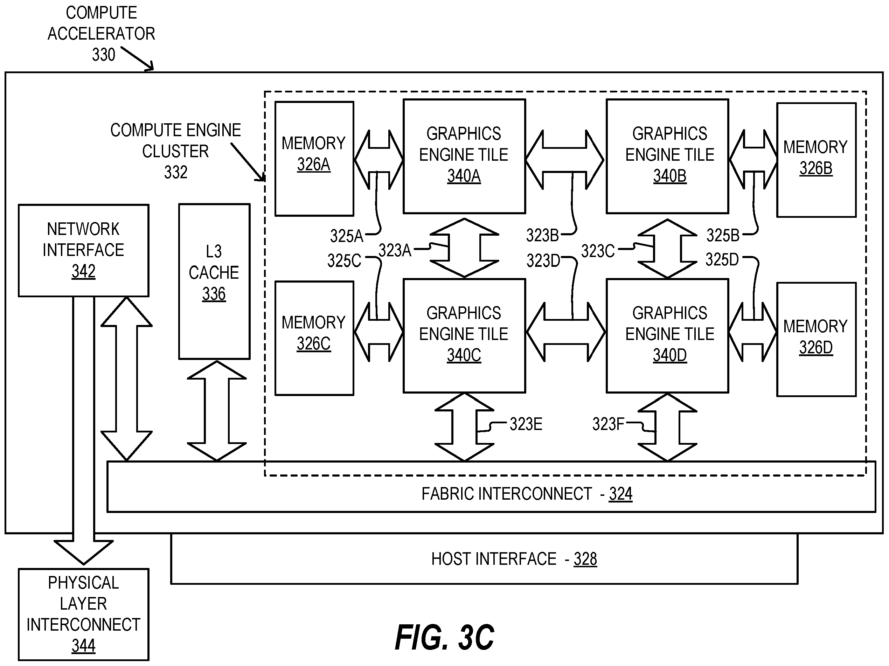

FIG. 3C illustrates a compute accelerator 330, according to embodiments described herein. The compute accelerator 330 can include architectural similarities with the graphics processor 320 of FIG. 3B and is optimized for compute acceleration. A compute engine cluster 332 can include a set of compute engine tiles 340A-340D that include execution logic that is optimized for parallel or vector-based general-purpose compute operations. In some embodiments, the compute engine tiles 340A-340D do not include fixed function graphics processing logic, although in one embodiment one or more of the compute engine tiles 340A-340D can include logic to perform media acceleration. The compute engine tiles 340A-340D can connect to memory 326A-326D via memory interconnects 325A-325D. The memory 326A-326D and memory interconnects 325A-325D may be similar technology as in graphics processor 320 or can be different. The compute engine tiles 340A-340D can also be interconnected via a set of tile interconnects 323A-323F and may be connected with and/or interconnected by a fabric interconnect 324. Cross-tile communications can be facilitated via the fabric interconnect 324. The fabric interconnect 324 (e.g., via the host interface 328) can also facilitate communication between compute engine tiles 340A-340D of multiple instances of the compute accelerator 330. In one embodiment the compute accelerator 330 includes a large L3 cache 336 that can be configured as a device-wide cache. The compute accelerator 330 can also connect to a host processor and memory via a host interface 328 in a similar manner as the graphics processor 320 of FIG. 3B.

The compute accelerator 330 can also include an integrated network interface 342. In one embodiment the network interface 342 includes a network processor and controller logic that enables the compute engine cluster 332 to communicate over a physical layer interconnect 344 without requiring data to traverse memory of a host system. In one embodiment, one of the compute engine tiles 340A-340D is replaced by network processor logic and data to be transmitted or received via the physical layer interconnect 344 may be transmitted directly to or from memory 326A-326D. Multiple instances of the compute accelerator 330 may be joined via the physical layer interconnect 344 into a single logical device. Alternatively, the various compute engine tiles 340A-340D may be presented as distinct network accessible compute accelerator devices.

Graphics Processing Engine

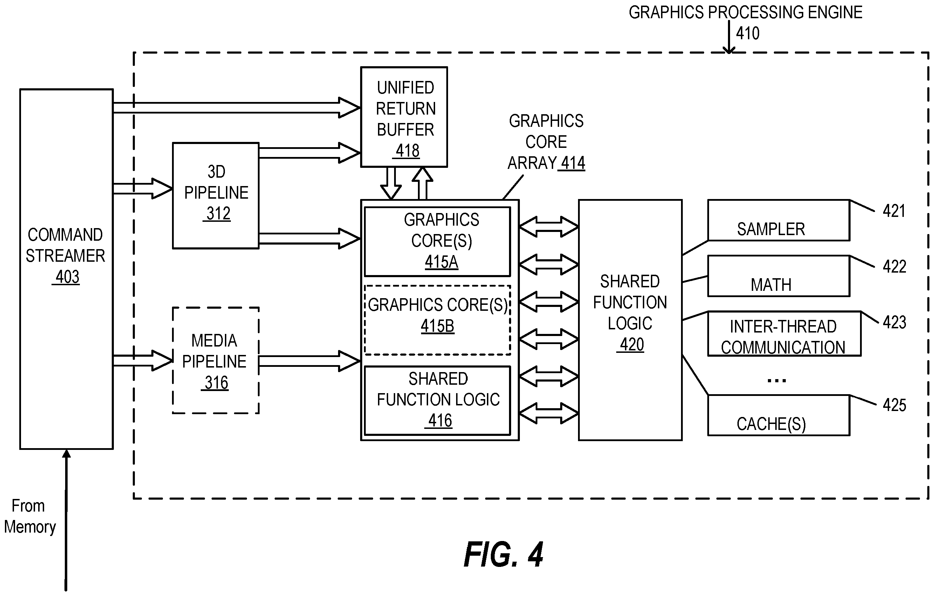

FIG. 4 is a block diagram of a graphics processing engine 410 of a graphics processor in accordance with some embodiments. In one embodiment, the graphics processing engine (GPE) 410 is a version of the GPE 310 shown in FIG. 3A and may also represent a graphics engine tile 310A-310D of FIG. 3B. Elements of FIG. 4 having the same reference numbers (or names) as the elements of any other figure herein can operate or function in any manner similar to that described elsewhere herein, but are not limited to such. For example, the 3D pipeline 312 and media pipeline 316 of FIG. 3A are illustrated. The media pipeline 316 is optional in some embodiments of the GPE 410 and may not be explicitly included within the GPE 410. For example and in at least one embodiment, a separate media and/or image processor is coupled to the GPE 410.

In some embodiments, GPE 410 couples with or includes a command streamer 403, which provides a command stream to the 3D pipeline 312 and/or media pipelines 316. Alternatively or additionally, the command streamer 403 may be directly coupled to a unified return buffer 418. The unified return buffer 418 may be communicatively coupled to a graphics core cluster 414. In some embodiments, command streamer 403 is coupled with memory, which can be system memory, or one or more of internal cache memory and shared cache memory. In some embodiments, command streamer 403 receives commands from the memory and sends the commands to 3D pipeline 312 and/or media pipeline 316. The commands are directives fetched from a ring buffer, which stores commands for the 3D pipeline 312 and media pipeline 316. In one embodiment, the ring buffer can additionally include batch command buffers storing batches of multiple commands. The commands for the 3D pipeline 312 can also include references to data stored in memory, such as but not limited to vertex and geometry data for the 3D pipeline 312 and/or image data and memory objects for the media pipeline 316. The 3D pipeline 312 and media pipeline 316 process the commands and data by performing operations via logic within the respective pipelines or by dispatching one or more execution threads to a graphics core cluster 414. In one embodiment the graphics core cluster 414 include one or more blocks of graphics cores (e.g., graphics core block 415A, graphics core block 415B), each block including one or more graphics cores. Each graphics core includes a set of graphics execution resources that includes general-purpose and graphics specific execution logic to perform graphics and compute operations, as well as fixed function texture processing and/or machine learning and artificial intelligence acceleration logic, such as matrix or AI acceleration logic.

In various embodiments the 3D pipeline 312 can include fixed function and programmable logic to process one or more shader programs, such as vertex shaders, geometry shaders, pixel shaders, fragment shaders, compute shaders, or other shader and/or GPGPU programs, by processing the instructions and dispatching execution threads to the graphics core cluster 414. The graphics core cluster 414 provides a unified block of execution resources for use in processing these shader programs. Multi-purpose execution logic within the graphics core blocks 415A-415B of the graphics core cluster 414 includes support for various 3D API shader languages and can execute multiple simultaneous execution threads associated with multiple shaders.

In some embodiments, the graphics core cluster 414 includes execution logic to perform media functions, such as video and/or image processing. In one embodiment, the graphics cores include general-purpose logic that is programmable to perform parallel general-purpose computational operations, in addition to graphics processing operations. The general-purpose logic can perform processing operations in parallel or in conjunction with general-purpose logic within the processor core(s) 107 of FIG. 1 or core 202A-202N as in FIG. 2A.

Output data generated by threads executing on the graphics core cluster 414 can output data to memory in a unified return buffer (URB) 418. The URB 418 can store data for multiple threads. In some embodiments the URB 418 may be used to send data between different threads executing on the graphics core cluster 414. In some embodiments the URB 418 may additionally be used for synchronization between threads on the graphics core array and fixed function logic within the shared function logic 420.

In some embodiments, graphics core cluster 414 is scalable, such that the cluster includes a variable number of graphics cores, each having a variable number of graphics cores based on the target power and performance level of GPE 410. In one embodiment the execution resources are dynamically scalable, such that execution resources may be enabled or disabled as needed.

The graphics core cluster 414 couples with shared function logic 420 that includes multiple resources that are shared between the graphics cores in the graphics core array. The shared functions within the shared function logic 420 are hardware logic units that provide specialized supplemental functionality to the graphics core cluster 414. In various embodiments, shared function logic 420 may include, but is not limited to sampler 421, math 422, and inter-thread communication (ITC) 423 logic. Additionally, some embodiments implement one or more cache(s) 425 within the shared function logic 420. The shared function logic 420 can implement the same or similar functionality as the additional fixed function logic 238 of FIG. 2B.

A shared function is implemented at least in a case where the demand for a given specialized function is insufficient for inclusion within the graphics core cluster 414. Instead, a single instantiation of that specialized function is implemented as a stand-alone entity in the shared function logic 420 and shared among the execution resources within the graphics core cluster 414. The precise set of functions that are shared between the graphics core cluster 414 and included within the graphics core cluster 414 varies across embodiments. In some embodiments, specific shared functions within the shared function logic 420 that are used extensively by the graphics core cluster 414 may be included within shared function logic 416 within the graphics core cluster 414. In various embodiments, the shared function logic 416 within the graphics core cluster 414 can include some or all logic within the shared function logic 420. In one embodiment, all logic elements within the shared function logic 420 may be duplicated within the shared function logic 416 of the graphics core cluster 414. In one embodiment the shared function logic 420 is excluded in favor of the shared function logic 416 within the graphics core cluster 414.


Graphics Processing Resources


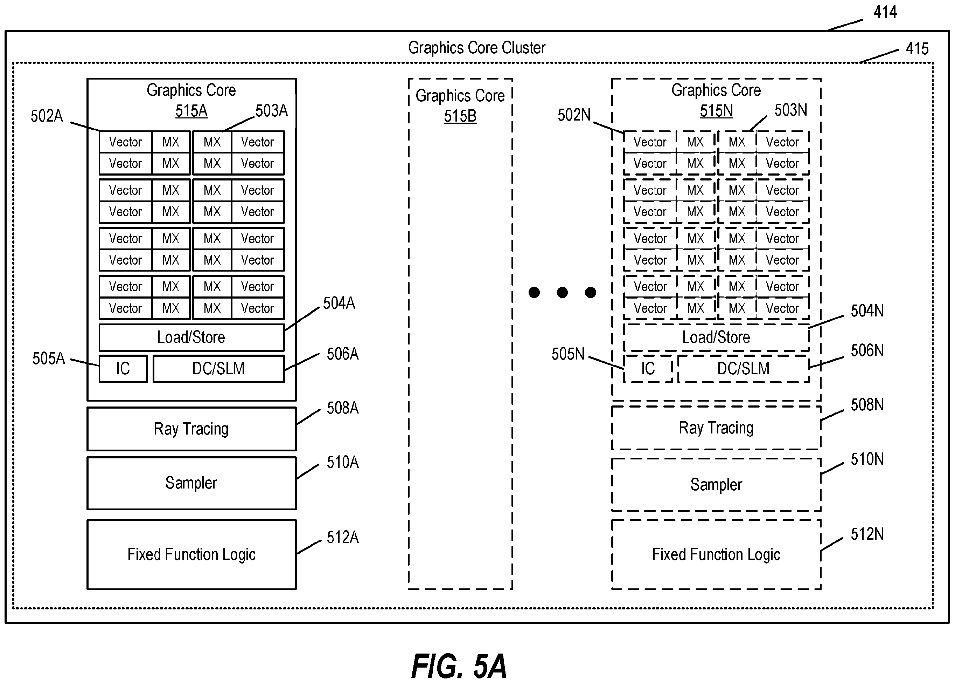

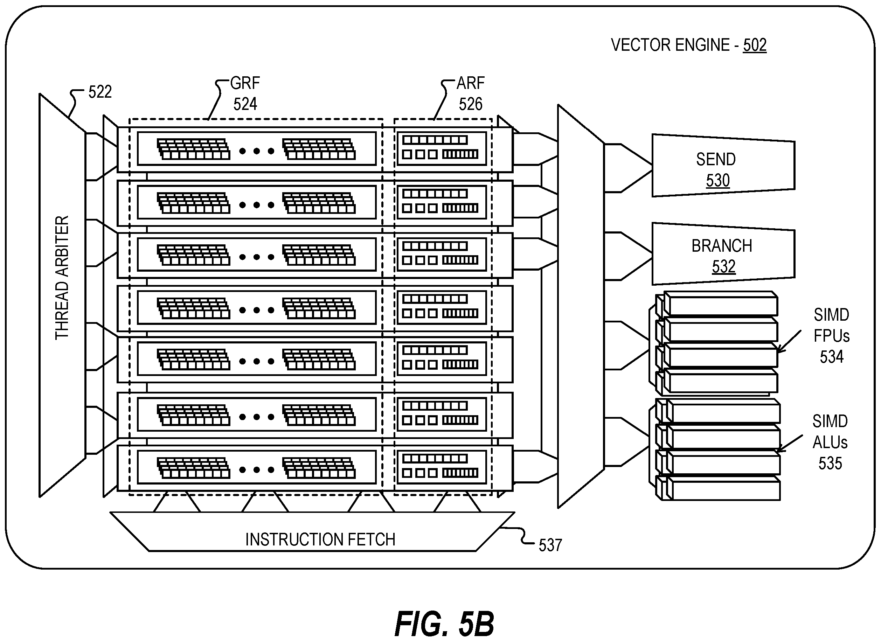

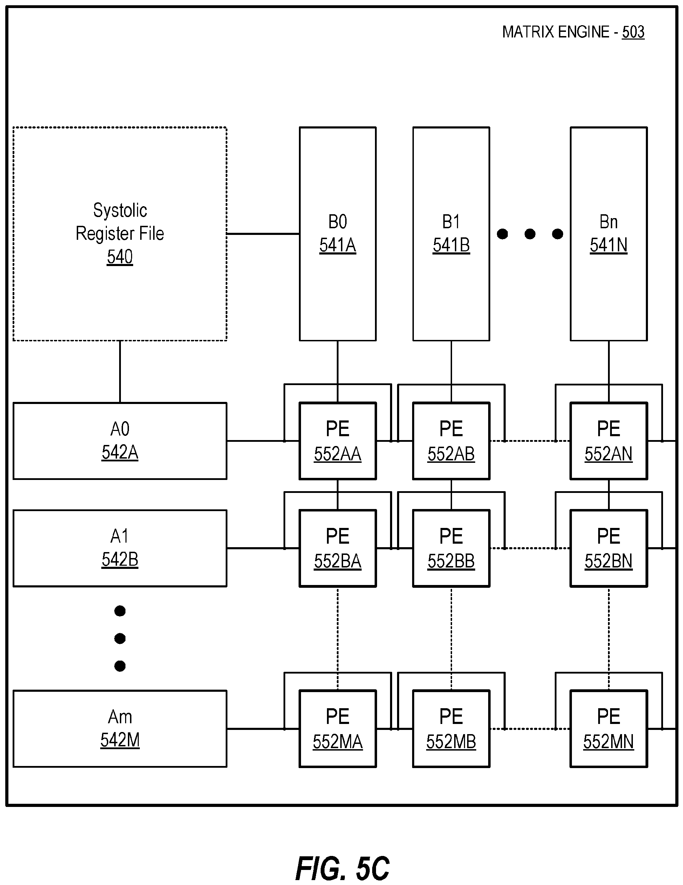

FIG. 5A-5C illustrate execution logic including an array of processing elements employed in a graphics processor, according to embodiments described herein. FIG. 5A illustrates graphics core cluster, according to an embodiment. FIG. 5B illustrates a vector engine of a graphics core, according to an embodiment. FIG. 5C illustrates a matrix engine of a graphics core, according to an embodiment. Elements of FIG. 5A-5C having the same reference numbers as the elements of any other figure herein may operate or function in any manner similar to that described elsewhere herein, but are not limited as such. For example, the elements of FIG. 5A-5C can be considered in the context of the graphics processor core block 219 of FIG. 2B, and/or the graphics core blocks 415A-415B of FIG. 4. In one embodiment, the elements of FIG. 5A-5C have similar functionality to equivalent components of the graphics processor 208 of FIG. 2A, the GPU 239 of FIG. 2C or the GPGPU 270 of FIG. 2D.

As shown in FIG. 5A, in one embodiment the graphics core cluster 414 includes a graphics core block 415, which may be graphics core block 415A or graphics core block 415B of FIG. 4. The graphics core block 415 can include any number of graphics cores (e.g., graphics core 515A, graphics core 515B, through graphics core 515N). Multiple instances of the graphics core block 415 may be included. In one embodiment the elements of the graphics cores 515A-515N have similar or equivalent functionality as the elements of the graphics cores 221A-221F of FIG. 2B. In such embodiment, the graphics cores 515A-515N each include circuitry including but not limited to vector engines 502A-502N, matrix engines 503A-503N, memory load/store units 504A-504N, instruction caches 505A-505N, data caches/shared local memory 506A-506N, ray tracing units 508A-508N, samplers 510A-510N. The circuitry of the graphics cores 515A-515N can additionally include fixed function logic 512A-512N. The number of vector engines 502A-502N and matrix engines 503A-503N within the graphics cores 515A-515N of a design can vary based on the workload, performance, and power targets for the design.

With reference to graphics core 515A, the vector engine 502A and matrix engine 503A are configurable to perform parallel compute operations on data in a variety of integer and floating-point data formats based on instructions associated with shader programs. Each vector engine 502A and matrix engine 503A can act as a programmable general-purpose computational unit that is capable of executing multiple simultaneous hardware threads while processing multiple data elements in parallel for each thread. The vector engine 502A and matrix engine 503A support the processing of variable width vectors at various SIMD widths, including but not limited to SIMD8, SIMD16, and SIMD32. Input data elements can be stored as a packed data type in a register and the vector engine 502A and matrix engine 503A can process the various elements based on the data size of the elements. For example, when operating on a 256-bit wide vector, the 256 bits of the vector are stored in a register and the vector is processed as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible. In one embodiment, the vector engine 502A and matrix engine 503A are also configurable for SIMT operation on warps or thread groups of various sizes (e.g., 8, 16, or 32 threads).

Continuing with graphics core 515A, the memory load/store unit 504A services memory access requests that are issued by the vector engine 502A, matrix engine 503A, and/or other components of the graphics core 515A that have access to memory. The memory access request can be processed by the memory load/store unit 504A to load or store the requested data to or from cache or memory into a register file associated with the vector engine 502A and/or matrix engine 503A. The memory load/store unit 504A can also perform prefetching operations. In one embodiment, the memory load/store unit 504A is configured to provide SIMT scatter/gather prefetching or block prefetching for data stored in memory 610, from memory that is local to other tiles via the tile interconnect 608, or from system memory. Prefetching can be performed to a specific L1 cache (e.g., data cache/shared local memory 506A), the L2 cache 604 or the L3 cache 606. In one embodiment, a prefetch to the L3 cache 606 automatically results in the data being stored in the L2 cache 604.

The instruction cache 505A stores instructions to be executed by the graphics core 515A. In one embodiment, the graphics core 515A also includes instruction fetch and prefetch circuitry that fetches or prefetches instructions into the instruction cache 505A. The graphics core 515A also includes instruction decode logic to decode instructions within the instruction cache 505A. The data cache/shared local memory 506A can be configured as a data cache that is managed by a cache controller that implements a cache replacement policy and/or configured as explicitly managed shared memory. The ray tracing unit 508A includes circuitry to accelerate ray tracing operations. The sampler 510A provides texture sampling for 3D operations and media sampling for media operations. The fixed function logic 512A includes fixed function circuitry that is shared between the various instances of the vector engine 502A and matrix engine 503A. Graphics cores 515B-515N can operate in a similar manner as graphics core 515A.

Functionality of the instruction caches 505A-505N, data caches/shared local memory 506A-506N, ray tracing units 508A-508N, samplers 510A-2710N, and fixed function logic 512A-512N corresponds with equivalent functionality in the graphics processor architectures described herein. For example, the instruction caches 505A-505N can operate in a similar manner as instruction cache 255 of FIG. 2D. The data caches/shared local memory 506A-506N, ray tracing units 508A-508N, and samplers 510A-2710N can operate in a similar manner as the cache/SLM 228A-228F, ray tracing units 227A-227F, and samplers 226A-226F of FIG. 2B. The fixed function logic 512A-512N can include elements of the geometry/fixed function pipeline 231 and/or additional fixed function logic 238 of FIG. 2B. In one embodiment, the ray tracing units 508A-508N include circuitry to perform ray tracing acceleration operations performed by the ray tracing cores 245 of FIG. 2C.

As shown in FIG. 5B, in one embodiment the vector engine 502 includes an instruction fetch unit 537, a general register file array (GRF) 524, an architectural register file array (ARF) 526, a thread arbiter 522, a send unit 530, a branch unit 532, a set of SIMD floating point units (FPUs) 534, and in one embodiment a set of integer SIMD ALUs 535. The GRF 524 and ARF 526 includes the set of general register files and architecture register files associated with each hardware thread that may be active in the vector engine 502. In one embodiment, per thread architectural state is maintained in the ARF 526, while data used during thread execution is stored in the GRF 524. The execution state of each thread, including the instruction pointers for each thread, can be held in thread-specific registers in the ARF 526.

In one embodiment the vector engine 502 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per graphics core, where graphics core resources are divided across logic used to execute multiple simultaneous threads. The number of logical threads that may be executed by the vector engine 502 is not limited to the number of hardware threads, and multiple logical threads can be assigned to each hardware thread.

In one embodiment, the vector engine 502 can co-issue multiple instructions, which may each be different instructions. The thread arbiter 522 can dispatch the instructions to one of the send unit 530, branch unit 532, or SIMD FPU(s) 534 for execution. Each execution thread can access 128 general-purpose registers within the GRF 524, where each register can store 32 bytes, accessible as a variable width vector of 32-bit data elements. In one embodiment, each thread has access to 4 Kbytes within the GRF 524, although embodiments are not so limited, and greater or fewer register resources may be provided in other embodiments. In one embodiment the vector engine 502 is partitioned into seven hardware threads that can independently perform computational operations, although the number of threads per vector engine 502 can also vary according to embodiments. For example, in one embodiment up to 16 hardware threads are supported. In an embodiment in which seven threads may access 4 Kbytes, the GRF 524 can store a total of 28 Kbytes. Where 16 threads may access 4Kbytes, the GRF 524 can store a total of 64Kbytes. Flexible addressing modes can permit registers to be addressed together to build effectively wider registers or to represent strided rectangular block data structures.

In one embodiment, memory operations, sampler operations, and other longer-latency system communications are dispatched via "send" instructions that are executed by the message passing send unit 530. In one embodiment, branch instructions are dispatched to a dedicated branch unit 532 to facilitate SIMD divergence and eventual convergence.

In one embodiment the vector engine 502 includes one or more SIMD floating point units (FPU(s)) 534 to perform floating-point operations. In one embodiment, the FPU(s) 534 also support integer computation. In one embodiment the FPU(s) 534 can execute up to M number of 32-bit floating-point (or integer) operations, or execute up to 2M 16-bit integer or 16-bit floating-point operations. In one embodiment, at least one of the FPU(s) provides extended math capability to support high-throughput transcendental math functions and double precision 64-bit floating-point. In some embodiments, a set of 8-bit integer SIMD ALUs 535 are also present and may be specifically optimized to perform operations associated with machine learning computations. In one embodiment, the SIMD ALUs are replaced by an additional set of SIMD FPUs 534 that are configurable to perform integer and floating-point operations. In one embodiment, the SIMD FPUs 534 and SIMD ALUs 535 are configurable to execute SIMT programs. In one embodiment, combined SIMD+SIMT operation is supported.

In one embodiment, arrays of multiple instances of the vector engine 502 can be instantiated in a graphics core. For scalability, product architects can choose the exact number of vector engines per graphics core grouping. In one embodiment the vector engine 502 can execute instructions across a plurality of execution channels. In a further embodiment, each thread executed on the vector engine 502 is executed on a different channel.

As shown in FIG. 5C, in one embodiment the matrix engine 503 includes an array of processing elements that are configured to perform tensor operations including vector/matrix and matrix/matrix operations, such as but not limited to matrix multiply and/or dot product operations. The matrix engine 503 is configured with M rows and N columns of processing elements (552AA-552MN) that include multiplier and adder circuits organized in a pipelined fashion. In one embodiment, the processing elements 552AA-552MN make up the physical pipeline stages of an N wide and M deep systolic array that can be used to perform vector/matrix or matrix/matrix operations in a data-parallel manner, including matrix multiply, fused multiply-add, dot product or other general matrix-matrix multiplication (GEMM) operations. In one embodiment the matrix engine 503 supports 16-bit floating point operations, as well as 8-bit, 4-bit, 2-bit, and binary integer operations. The matrix engine 503 can also be configured to accelerate specific machine learning operations. In such embodiments, the matrix engine 503 can be configured with support for the bfloat (brain floating point) 16-bit floating point format or a tensor float 32-bit floating point format (TF32) that have different numbers of mantissa and exponent bits relative to Institute of Electrical and Electronics Engineers (IEEE) 754 formats.

In one embodiment, during each cycle, each stage can add the result of operations performed at that stage to the output of the previous stage. In other embodiments, the pattern of data movement between the processing elements 552AA-552MN after a set of computational cycles can vary based on the instruction or macro-operation being performed. For example, in one embodiment partial sum loopback is enabled and the processing elements may instead add the output of a current cycle with output generated in the previous cycle. In one embodiment, the final stage of the systolic array can be configured with a loopback to the initial stage of the systolic array. In such embodiment, the number of physical pipeline stages may be decoupled from the number of logical pipeline stages that are supported by the matrix engine 503. For example, where the processing elements 552AA-552MN are configured as a systolic array of M physical stages, a loopback from stage M to the initial pipeline stage can enable the processing elements 552AA-552MN to operate as a systolic array of, for example, 2M, 3M, 4M, etc., logical pipeline stages.

In one embodiment, the matrix engine 503 includes memory 541A-541N, 542A-542M to store input data in the form of row and column data for input matrices. Memory 542A-542M is configurable to store row elements (A0-Am) of a first input matrix and memory 541A-541N is configurable to store column elements (B0-Bn) of a second input matrix. The row and column elements are provided as input to the processing elements 552AA-552MN for processing. In one embodiment, row and column elements of the input matrices can be stored in a systolic register file 540 within the matrix engine 503 before those elements are provided to the memory 541A-541N, 542A-542M. In one embodiment, the systolic register file 540 is excluded and the memory 541A-541N, 542A-542M is loaded from registers in an associated vector engine (e.g., GRF 524 of vector engine 502 of FIG. 5B) or other memory of the graphics core that includes the matrix engine 503 (e.g., data cache/shared local memory 506A for matrix engine 503A of FIG. 5A). Results generated by the processing elements 552AA-552MN are then output to an output buffer and/or written to a register file (e.g., systolic register file 540, GRF 524, data cache/shared local memory 506A-506N) for further processing by other functional units of the graphics processor or for output to memory.

In some embodiments, the matrix engine 503 is configured with support for input sparsity, where multiplication operations for sparse regions of input data can be bypassed by skipping multiply operations that have a zero-value operand. In one embodiment, the processing elements 552AA-552MN are configured to skip the performance of certain operations that have zero value input. In one embodiment, sparsity within input matrices can be detected and operations having known zero output values can be bypassed before being submitted to the processing elements 552AA-552MN. The loading of zero value operands into the processing elements can be bypassed and the processing elements 552AA-552MN can be configured to perform multiplications on the non-zero value input elements. The matrix engine 503 can also be configured with support for output sparsity, such that operations with results that are pre-determined to be zero are bypassed. For input sparsity and/or output sparsity, in one embodiment, metadata is provided to the processing elements 552AA-552MN to indicate, for a processing cycle, which processing elements and/or data channels are to be active during that cycle.

In one embodiment, the matrix engine 503 includes hardware to enable operations on sparse data having a compressed representation of a sparse matrix that stores non-zero values and metadata that identifies the positions of the non-zero values within the matrix. Exemplary compressed representations include but are not limited to compressed tensor representations such as compressed sparse row (CSR), compressed sparse column (CSC), compressed sparse fiber (CSF) representations. Support for compressed representations enable operations to be performed on input in a compressed tensor format without requiring the compressed representation to be decompressed or decoded. In such embodiment, operations can be performed only on non-zero input values and the resulting non-zero output values can be mapped into an output matrix. In some embodiments, hardware support is also provided for machine-specific lossless data compression formats that are used when transmitting data within hardware or across system busses. Such data may be retained in a compressed format for sparse input data and the matrix engine 503 can use the compression metadata for the compressed data to enable operations to be performed on only non-zero values, or to enable blocks of zero data input to be bypassed for multiply operations.

In various embodiments, input data can be provided by a programmer in a compressed tensor representation, or a codec can compress input data into the compressed tensor representation or another sparse data encoding. In addition to support for compressed tensor representations, streaming compression of sparse input data can be performed before the data is provided to the processing elements 552AA-552MN. In one embodiment, compression is performed on data written to a cache memory associated with the graphics core cluster 414, with the compression being performed with an encoding that is supported by the matrix engine 503. In one embodiment, the matrix engine 503 includes support for input having structured sparsity in which a pre-determined level or pattern of sparsity is imposed on input data. This data may be compressed to a known compression ratio, with the compressed data being processed by the processing elements 552AA-552MN according to metadata associated with the compressed data.

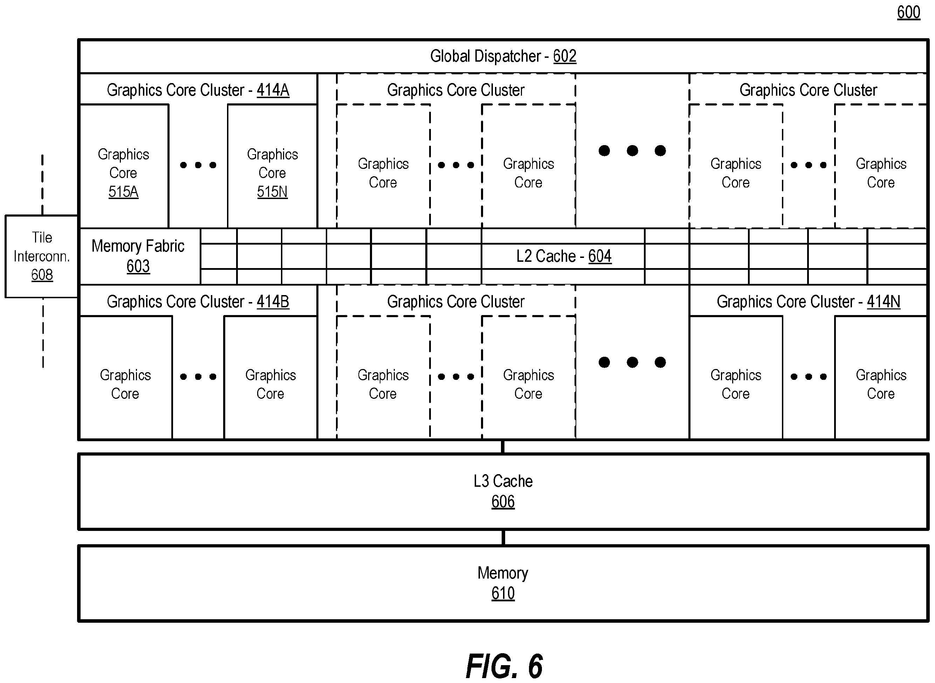

FIG. 6 illustrates a tile 600 of a multi-tile processor, according to an embodiment. In one embodiment, the tile 600 is representative of one of the graphics engine tiles 310A-310D of FIG. 3B or compute engine tiles 340A-340D of FIG. 3C. The tile 600 of the multi-tile graphics processor includes an array of graphics core clusters (e.g., graphics core cluster 414A, graphics core cluster 414B, through graphics core cluster 414N), with each graphics core cluster having an array of graphics cores 515A-515N. The tile 600 also includes a global dispatcher 602 to dispatch threads to processing resources of the tile 600.

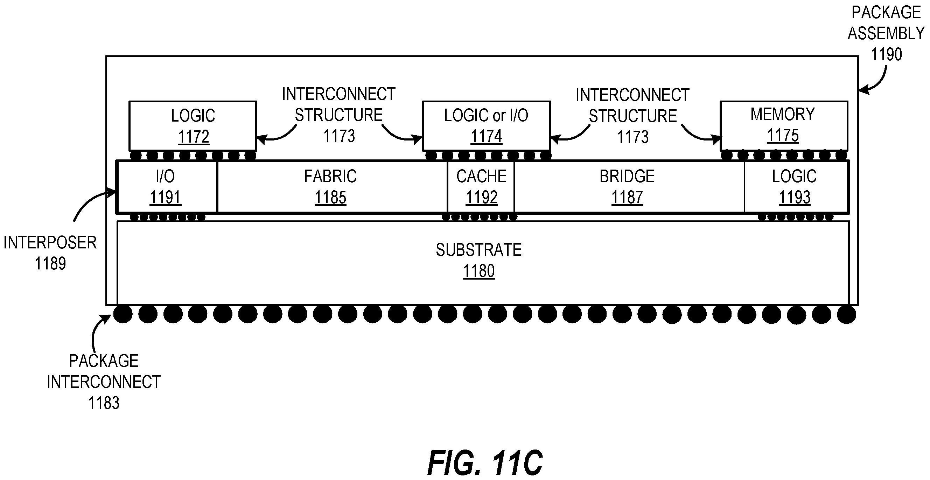

The tile 600 can include or couple with an L3 cache 606 and memory 610. In various embodiments, the L3 cache 606 may be excluded or the tile 600 can include additional levels of cache, such as an L4 cache. In one embodiment, each instance of the tile 600 in the multi-tile graphics processor has an associated memory 610, such as in FIG. 3B and FIG. 3C. In one embodiment, a multi-tile processor can be configured as a multi-chip module in which the L3 cache 606 and/or memory 610 reside on separate chiplets than the graphics core clusters 414A-414N. In this context, a chiplet is an at least partially packaged integrated circuit that includes distinct units of logic that can be assembled with other chiplets into a larger package. For example, the L3 cache 606 can be included in a dedicated cache chiplet or can reside on the same chiplet as the graphics core clusters 414A-414N. In one embodiment, the L3 cache 606 can be included in an active base die or active interposer, as illustrated in FIG. 11C.

A memory fabric 603 enables communication among the graphics core clusters 414A-414N, L3 cache 606, and memory 610. An L2 cache 604 couples with the memory fabric 603 and is configurable to cache transactions performed via the memory fabric 603. A tile interconnect 608 enables communication with other tiles on the graphics processors and may be one of tile interconnects 323A-323F of FIG. 3B and 3C. In embodiments in which the L3 cache 606 is excluded from the tile 600, the L2 cache 604 may be configured as a combined L2/L3 cache. The memory fabric 603 is configurable to route data to the L3 cache 606 or memory controllers associated with the memory 610 based on the presence or absence of the L3 cache 606 in a specific implementation. The L3 cache 606 can be configured as a per-tile cache that is dedicated to processing resources of the tile 600 or may be a partition of a GPU-wide L3 cache.

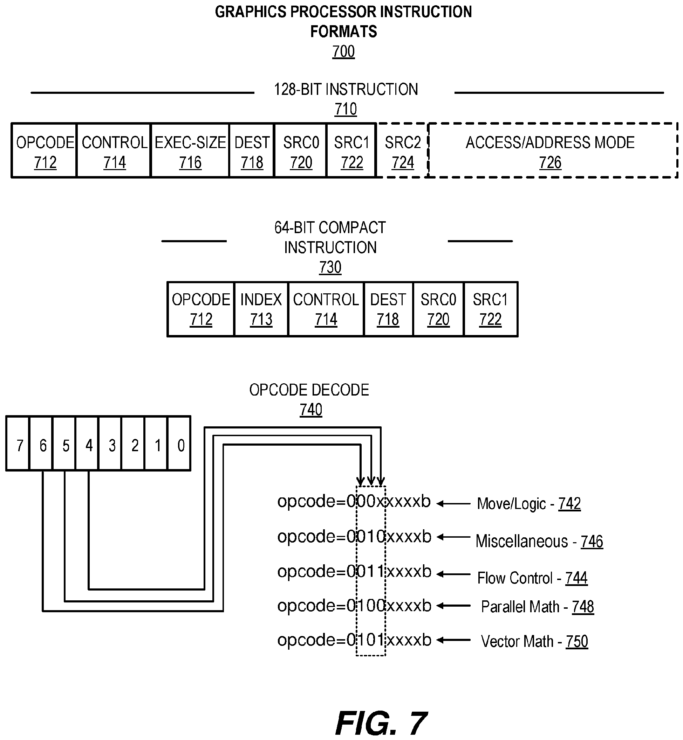

FIG. 7 is a block diagram illustrating graphics processor instruction formats 700 according to some embodiments. In one or more embodiment, the graphics processor cores support an instruction set having instructions in multiple formats. The solid lined boxes illustrate the components that are generally included in a graphics core instruction, while the dashed lines include components that are optional or that are only included in a sub-set of the instructions. In some embodiments, the graphics processor instruction format 700 described and illustrated are macro-instructions, in that they are instructions supplied to the graphics core, as opposed to micro-operations resulting from instruction decode once the instruction is processed. Thus, a single instruction may cause hardware to perform multiple micro-operations.

In some embodiments, the graphics processor natively supports instructions in a 128-bit instruction format 710. A 64-bit compacted instruction format 730 is available for some instructions based on the selected instruction, instruction options, and number of operands. The native 128-bit instruction format 710 provides access to all instruction options, while some options and operations are restricted in the 64-bit format 730. The native instructions available in the 64-bit format 730 vary by embodiment. In some embodiments, the instruction is compacted in part using a set of index values in an index field 713. The graphics core hardware references a set of compaction tables based on the index values and uses the compaction table outputs to reconstruct a native instruction in the 128-bit instruction format 710. Other sizes and formats of instruction can be used.

For each format, instruction opcode 712 defines the operation that the graphics core is to perform. The graphics cores execute each instruction in parallel across the multiple data elements of each operand. For example, in response to an add instruction the graphics core performs a simultaneous add operation across each color channel representing a texture element or picture element. By default, the graphics core performs each instruction across all data channels of the operands. In some embodiments, instruction control field 714 enables control over certain execution options, such as channels selection (e.g., predication) and data channel order (e.g., swizzle). For instructions in the 128-bit instruction format 710 an exec-size field 716 limits the number of data channels that will be executed in parallel. In some embodiments, exec-size field 716 is not available for use in the 64-bit compact instruction format 730.

Some graphics core instructions have up to three operands including two source operands, src0 720, src1 722, and one destination 718. In some embodiments, the graphics cores support dual destination instructions, where one of the destinations is implied. Data manipulation instructions can have a third source operand (e.g., SRC2 724), where the instruction opcode 712 determines the number of source operands. An instruction's last source operand can be an immediate (e.g., hard-coded) value passed with the instruction.

In some embodiments, the 128-bit instruction format 710 includes an access/address mode field 726 specifying, for example, whether direct register addressing mode or indirect register addressing mode is used. When direct register addressing mode is used, the register address of one or more operands is directly provided by bits in the instruction.

In some embodiments, the 128-bit instruction format 710 includes an access/address mode field 726, which specifies an address mode and/or an access mode for the instruction. In one embodiment the access mode is used to define a data access alignment for the instruction. Some embodiments support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In one embodiment, the address mode portion of the access/address mode field 726 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

In some embodiments instructions are grouped based on opcode 712 bit-fields to simplify Opcode decode 740. For an 8-bit opcode, bits 4, 5, and 6 allow the graphics core to determine the type of opcode. The precise opcode grouping shown is merely an example. In some embodiments, a move and logic opcode group 742 includes data movement and logic instructions (e.g., move (mov), compare (cmp)). In some embodiments, move and logic group 742 shares the five most significant bits (MSB), where move (mov) instructions are in the form of 0000xxxxb and logic instructions are in the form of 0001xxxxb. A flow control instruction group 744 (e.g., call, jump (jmp)) includes instructions in the form of 0010xxxxb (e.g., 0x20). A miscellaneous instruction group 746 includes a mix of instructions, including synchronization instructions (e.g., wait, send) in the form of 0011xxxxb (e.g., 0x30). A parallel math instruction group 748 includes component-wise arithmetic instructions (e.g., add, multiply (mul)) in the form of 0100xxxxb (e.g., 0x40). The parallel math instruction group 748 performs the arithmetic operations in parallel across data channels. The vector math group 750 includes arithmetic instructions (e.g., dp4) in the form of 0101xxxxb (e.g., 0x50). The vector math group performs arithmetic such as dot product calculations on vector operands. The illustrated opcode decode 740, in one embodiment, can be used to determine which portion of a graphics core will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic.

Graphics Pipeline

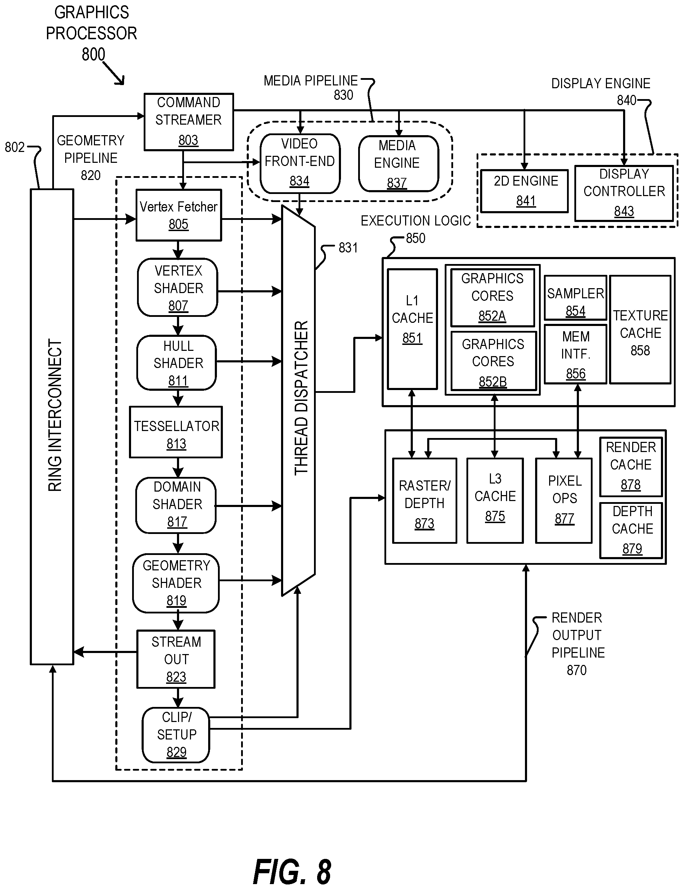

FIG. 8 is a block diagram of another embodiment of a graphics processor 800. Elements of FIG. 8 having the same reference numbers (or names) as the elements of any other figure herein can operate or function in any manner similar to that described elsewhere herein, but are not limited to such.

In some embodiments, graphics processor 800 includes a geometry pipeline 820, a media pipeline 830, a display engine 840, thread execution logic 850, and a render output pipeline 870. In some embodiments, graphics processor 800 is a graphics processor within a multi-core processing system that includes one or more general-purpose processing cores. The graphics processor is controlled by register writes to one or more control registers (not shown) or via commands issued to graphics processor 800 via a ring interconnect 802. In some embodiments, ring interconnect 802 couples graphics processor 800 to other processing components, such as other graphics processors or general-purpose processors. Commands from ring interconnect 802 are interpreted by a command streamer 803, which supplies instructions to individual components of the geometry pipeline 820 or the media pipeline 830.

In some embodiments, command streamer 803 directs the operation of a vertex fetcher 805 that reads vertex data from memory and executes vertex-processing commands provided by command streamer 803. In some embodiments, vertex fetcher 805 provides vertex data to a vertex shader 807, which performs coordinate space transformation and lighting operations to each vertex. In some embodiments, vertex fetcher 805 and vertex shader 807 execute vertex-processing instructions by dispatching execution threads to graphics cores 852A-852B via a thread dispatcher 831.

In some embodiments, graphics cores 852A-852B are an array of vector processors having an instruction set for performing graphics and media operations. In some embodiments, graphics cores 852A-852B have an attached L1 cache 851 that is specific for each array or shared between the arrays. The cache can be configured as a data cache, an instruction cache, or a single cache that is partitioned to contain data and instructions in different partitions.

In some embodiments, geometry pipeline 820 includes tessellation components to perform hardware-accelerated tessellation of 3D objects. In some embodiments, a programmable hull shader 811 configures the tessellation operations. A programmable domain shader 817 provides back-end evaluation of tessellation output. A tessellator 813 operates at the direction of hull shader 811 and contains special purpose logic to generate a set of detailed geometric objects based on a coarse geometric model that is provided as input to geometry pipeline 820. In some embodiments, if tessellation is not used, tessellation components (e.g., hull shader 811, tessellator 813, and domain shader 817) can be bypassed. The tessellation components can operate based on data received from the vertex shader 807.

In some embodiments, complete geometric objects can be processed by a geometry shader 819 via one or more threads dispatched to graphics cores 852A-852B or can proceed directly to the clipper 829. In some embodiments, the geometry shader operates on entire geometric objects, rather than vertices or patches of vertices as in previous stages of the graphics pipeline. If the tessellation is disabled the geometry shader 819 receives input from the vertex shader 807. In some embodiments, geometry shader 819 is programmable by a geometry shader program to perform geometry tessellation if the tessellation units are disabled.

Before rasterization, a clipper 829 processes vertex data. The clipper 829 may be a fixed function clipper or a programmable clipper having clipping and geometry shader functions. In some embodiments, a rasterizer and depth test component 873 in the render output pipeline 870 dispatches pixel shaders to convert the geometric objects into per pixel representations. In some embodiments, pixel shader logic is included in thread execution logic 850. In some embodiments, an application can bypass the rasterizer and depth test component 873 and access un-rasterized vertex data via a stream out unit 823.

The graphics processor 800 has an interconnect bus, interconnect fabric, or some other interconnect mechanism that allows data and message passing amongst the major components of the processor. In some embodiments, graphics cores 852A-852B and associated logic units (e.g., L1 cache 851, sampler 854, texture cache 858, etc.) interconnect via a data port 856 to perform memory access and communicate with render output pipeline components of the processor. In some embodiments, sampler 854, caches 851, 858 and graphics cores 852A-852B each have separate memory access paths. In one embodiment the texture cache 858 can also be configured as a sampler cache.

In some embodiments, render output pipeline 870 contains a rasterizer and depth test component 873 that converts vertex-based objects into an associated pixel-based representation. In some embodiments, the rasterizer logic includes a windower/masker unit to perform fixed function triangle and line rasterization. An associated render cache 878 and depth cache 879 are also available in some embodiments. A pixel operations component 877 performs pixel-based operations on the data, though in some instances, pixel operations associated with 2D operations (e.g., bit block image transfers with blending) are performed by the 2D engine 841, or substituted at display time by the display controller 843 using overlay display planes. In some embodiments, a shared L3 cache 875 is available to all graphics components, allowing the sharing of data without the use of main system memory.

In some embodiments, media pipeline 830 includes a media engine 837 and a video front-end 834. In some embodiments, video front-end 834 receives pipeline commands from the command streamer 803. In some embodiments, media pipeline 830 includes a separate command streamer. In some embodiments, video front-end 834 processes media commands before sending the command to the media engine 837. In some embodiments, media engine 837 includes thread spawning functionality to spawn threads for dispatch to thread execution logic 850 via thread dispatcher 831.

In some embodiments, graphics processor 800 includes a display engine 840. In some embodiments, display engine 840 is external to processor 800 and couples with the graphics processor via the ring interconnect 802, or some other interconnect bus or fabric. In some embodiments, display engine 840 includes a 2D engine 841 and a display controller 843. In some embodiments, display engine 840 contains special purpose logic capable of operating independently of the 3D pipeline. In some embodiments, display controller 843 couples with a display device (not shown), which may be a system integrated display device, as in a laptop computer, or an external display device attached via a display device connector.

In some embodiments, the geometry pipeline 820 and media pipeline 830 are configurable to perform operations based on multiple graphics and media programming interfaces and are not specific to any one application programming interface (API). In some embodiments, driver software for the graphics processor translates API calls that are specific to a particular graphics or media library into commands that can be processed by the graphics processor. In some embodiments, support is provided for the Open Graphics Library (OpenGL), Open Computing Language (OpenCL), and/or Vulkan graphics and compute API, all from the Khronos Group. In some embodiments, support may also be provided for the Direct3D library from the Microsoft Corporation. In some embodiments, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

Graphics Pipeline Programming

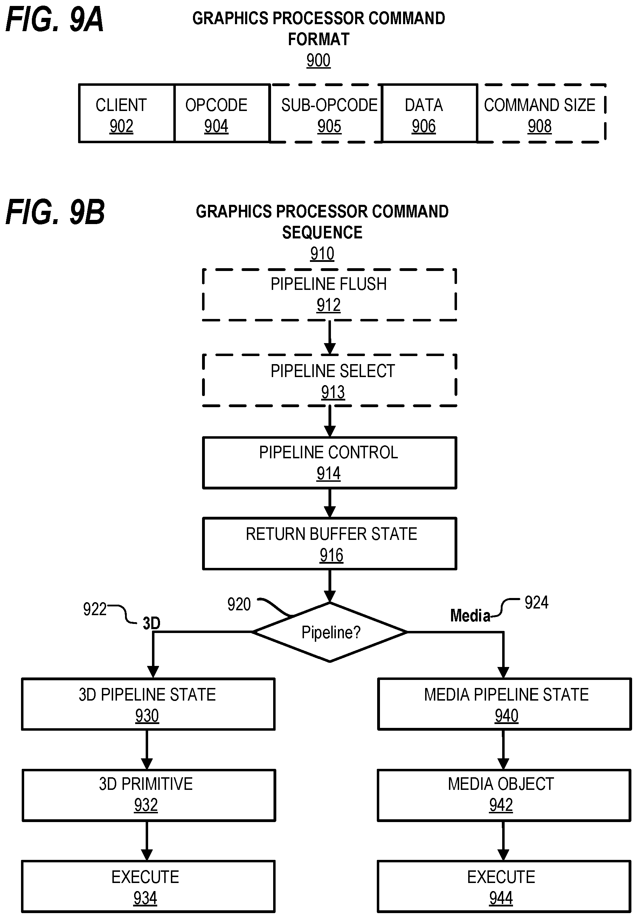

FIG. 9A is a block diagram illustrating a graphics processor command format 900 that may be used to program graphics processing pipelines according to some embodiments. FIG. 9B is a block diagram illustrating a graphics processor command sequence 910 according to an embodiment. The solid lined boxes in FIG. 9A illustrate the components that are generally included in a graphics command while the dashed lines include components that are optional or that are only included in a sub-set of the graphics commands. The exemplary graphics processor command format 900 of FIG. 9A includes data fields to identify a client 902, a command operation code (opcode) 904, and a data field 906 for the command. A sub-opcode 905 and a command size 908 are also included in some commands.

In some embodiments, client 902 specifies the client unit of the graphics device that processes the command data. In some embodiments, a graphics processor command parser examines the client field of each command to condition the further processing of the command and route the command data to the appropriate client unit. In some embodiments, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 904 and, if present, sub-opcode 905 to determine the operation to perform. The client unit performs the command using information in data field 906. For some commands an explicit command size 908 is expected to specify the size of the command. In some embodiments, the command parser automatically determines the size of at least some of the commands based on the command opcode. In some embodiments commands are aligned via multiples of a double word. Other command formats can be used.

The flow diagram in FIG. 9B illustrates an exemplary graphics processor command sequence 910. In some embodiments, software or firmware of a data processing system that features an embodiment of a graphics processor uses a version of the command sequence shown to set up, execute, and terminate a set of graphics operations. A sample command sequence is shown and described for purposes of example only as embodiments are not limited to these specific commands or to this command sequence. Moreover, the commands may be issued as batch of commands in a command sequence, such that the graphics processor will process the sequence of commands in at least partially concurrence.

In some embodiments, the graphics processor command sequence 910 may begin with a pipeline flush command 912 to cause any active graphics pipeline to complete the currently pending commands for the pipeline. In some embodiments, the 3D pipeline 922 and the media pipeline 924 do not operate concurrently. The pipeline flush is performed to cause the active graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some embodiments, pipeline flush command 912 can be used for pipeline synchronization or before placing the graphics processor into a low power state.

In some embodiments, a pipeline select command 913 is used when a command sequence requires the graphics processor to explicitly switch between pipelines. In some embodiments, a pipeline select command 913 is required only once within an execution context before issuing pipeline commands unless the context is to issue commands for both pipelines. In some embodiments, a pipeline flush command 912 is required immediately before a pipeline switch via the pipeline select command 913.

In some embodiments, a pipeline control command 914 configures a graphics pipeline for operation and is used to program the 3D pipeline 922 and the media pipeline 924. In some embodiments, pipeline control command 914 configures the pipeline state for the active pipeline. In one embodiment, the pipeline control command 914 is used for pipeline synchronization and to clear data from one or more cache memories within the active pipeline before processing a batch of commands.

In some embodiments, commands related to the return buffer state 916 are used to configure a set of return buffers for the respective pipelines to write data. Some pipeline operations require the allocation, selection, or configuration of one or more return buffers into which the operations write intermediate data during processing. In some embodiments, the graphics processor also uses one or more return buffers to store output data and to perform cross thread communication. In some embodiments, the return buffer state 916 includes selecting the size and number of return buffers to use for a set of pipeline operations.

The remaining commands in the command sequence differ based on the active pipeline for operations. Based on a pipeline determination 920, the command sequence is tailored to the 3D pipeline 922 beginning with the 3D pipeline state 930 or the media pipeline 924 beginning at the media pipeline state 940.

The commands to configure the 3D pipeline state 930 include 3D state setting commands for vertex buffer state, vertex element state, constant color state, depth buffer state, and other state variables that are to be configured before 3D primitive commands are processed. The values of these commands are determined at least in part based on the particular 3D API in use. In some embodiments, 3D pipeline state 930 commands are also able to selectively disable or bypass certain pipeline elements if those elements will not be used.

In some embodiments, 3D primitive 932 command is used to submit 3D primitives to be processed by the 3D pipeline. Commands and associated parameters that are passed to the graphics processor via the 3D primitive 932 command are forwarded to the vertex fetch function in the graphics pipeline. The vertex fetch function uses the 3D primitive 932 command data to generate vertex data structures. The vertex data structures are stored in one or more return buffers. In some embodiments, 3D primitive 932 command is used to perform vertex operations on 3D primitives via vertex shaders. To process vertex shaders, 3D pipeline 922 dispatches shader programs to the graphics cores.

In some embodiments, 3D pipeline 922 is triggered via an execute 934 command or event. In some embodiments, a register write triggers command execution. In some embodiments execution is triggered via a 'go' or 'kick' command in the command sequence. In one embodiment, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back-end operations may also be included for those operations.

In some embodiments, the graphics processor command sequence 910 follows the media pipeline 924 path when performing media operations. In general, the specific use and manner of programming for the media pipeline 924 depends on the media or compute operations to be performed. Specific media decode operations may be offloaded to the media pipeline during media decode. In some embodiments, the media pipeline can also be bypassed and media decode can be performed in whole or in part using resources provided by one or more general-purpose processing cores. In one embodiment, the media pipeline also includes elements for general-purpose graphics processor unit (GPGPU) operations, where the graphics processor is used to perform SIMD vector operations using computational shader programs that are not explicitly related to the rendering of graphics primitives.

In some embodiments, media pipeline 924 is configured in a similar manner as the 3D pipeline 922. A set of commands to configure the media pipeline state 940 are dispatched or placed into a command queue before the media object commands 942. In some embodiments, commands for the media pipeline state 940 include data to configure the media pipeline elements that will be used to process the media objects. This includes data to configure the video decode and video encode logic within the media pipeline, such as encode or decode format. In some embodiments, commands for the media pipeline state 940 also support the use of one or more pointers to "indirect" state elements that contain a batch of state settings.

In some embodiments, media object commands 942 supply pointers to media objects for processing by the media pipeline. The media objects include memory buffers containing video data to be processed. In some embodiments, all media pipeline states must be valid before issuing a media object command 942. Once the pipeline state is configured and media object commands 942 are queued, the media pipeline 924 is triggered via an execute command 944 or an equivalent execute event (e.g., register write). Output from media pipeline 924 may then be post processed by operations provided by the 3D pipeline 922 or the media pipeline 924. In some embodiments, GPGPU operations are configured and executed in a similar manner as media operations.

Graphics Software Architecture

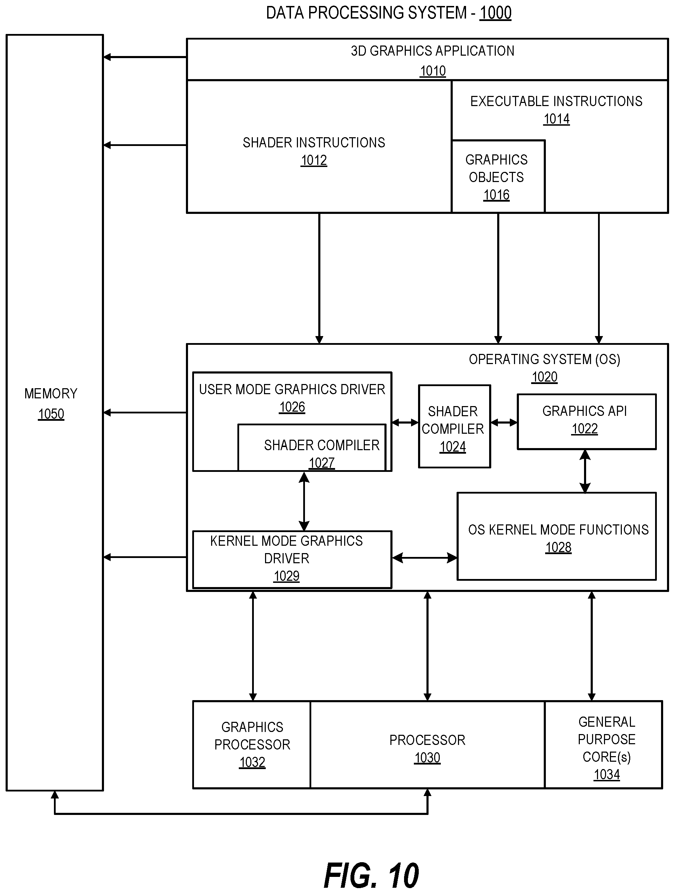

FIG. 10 illustrates an exemplary graphics software architecture for a data processing system 1000 according to some embodiments. In some embodiments, software architecture includes a 3D graphics application 1010, an operating system 1020, and at least one processor 1030. In some embodiments, processor 1030 includes a graphics processor 1032 and one or more general-purpose processor core(s) 1034. The graphics application 1010 and operating system 1020 each execute in the system memory 1050 of the data processing system.

In some embodiments, 3D graphics application 1010 contains one or more shader programs including shader instructions 1012. The shader language instructions may be in a high-level shader language, such as the High-Level Shader Language (HLSL) of Direct3D, the OpenGL Shader Language (GLSL), and so forth. The application also includes executable instructions 1014 in a machine language suitable for execution by the general-purpose processor core 1034. The application also includes graphics objects 1016 defined by vertex data.

In some embodiments, operating system 1020 is a Microsoft® Windows® operating system from the Microsoft Corporation, a proprietary UNIX-like operating system, or an open source UNIX-like operating system using a variant of the Linux kernel. The operating system 1020 can support a graphics API 1022 such as the Direct3D API, the OpenGL API, or the Vulkan API. When the Direct3D API is in use, the operating system 1020 uses a front-end shader compiler 1024 to compile any shader instructions 1012 in HLSL into a lower-level shader language. The compilation may be a just-in-time (JIT) compilation or the application can perform shader pre-compilation. In some embodiments, high-level shaders are compiled into low-level shaders during the compilation of the 3D graphics application 1010. In some embodiments, the shader instructions 1012 are provided in an intermediate form, such as a version of the Standard Portable Intermediate Representation (SPIR) used by the Vulkan API.

In some embodiments, user mode graphics driver 1026 contains a back-end shader compiler 1027 to convert the shader instructions 1012 into a hardware specific representation. When the OpenGL API is in use, shader instructions 1012 in the GLSL high-level language are passed to a user mode graphics driver 1026 for compilation. In some embodiments, user mode graphics driver 1026 uses operating system kernel mode functions 1028 to communicate with a kernel mode graphics driver 1029. In some embodiments, kernel mode graphics driver 1029 communicates with graphics processor 1032 to dispatch commands and instructions.

IP Core Implementations

One or more aspects of at least one embodiment may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the embodiments described herein.

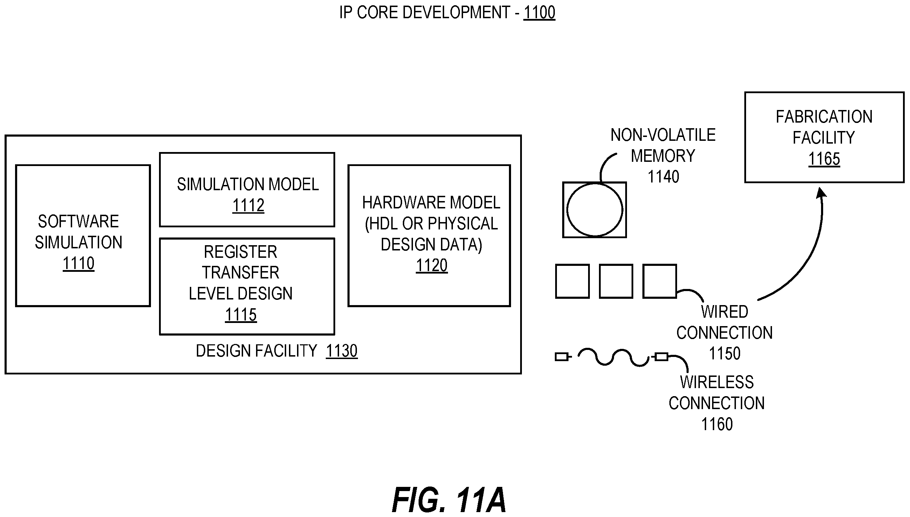

FIG. 11A is a block diagram illustrating an IP core development system 1100 that may be used to manufacture an integrated circuit to perform operations according to an embodiment. The IP core development system 1100 may be used to generate modular, re-usable designs that can be incorporated into a larger design or used to construct an entire integrated circuit (e.g., an SOC integrated circuit). A design facility 1130 can generate a software simulation 1110 of an IP core design in a high-level programming language (e.g., C/C++). The software simulation 1110 can be used to design, test, and verify the behavior of the IP core using a simulation model 1112. The simulation model 1112 may include functional, behavioral, and/or timing simulations. A register transfer level (RTL) design 1115 can then be created or synthesized from the simulation model 1112. The RTL design 1115 is an abstraction of the behavior of the integrated circuit that models the flow of digital signals between hardware registers, including the associated logic performed using the modeled digital signals. In addition to an RTL design 1115, lower-level designs at the logic level or transistor level may also be created, designed, or synthesized. Thus, the particular details of the initial design and simulation may vary.

The RTL design 1115 or equivalent may be further synthesized by the design facility into a hardware model 1120, which may be in a hardware description language (HDL), or some other representation of physical design data. The HDL may be further simulated or tested to verify the IP core design. The IP core design can be stored for delivery to a 3rd party fabrication facility 1165 using non-volatile memory 1140 (e.g., hard disk, flash memory, or any non-volatile storage medium). Alternatively, the IP core design may be transmitted (e.g., via the Internet) over a wired connection 1150 or wireless connection 1160. The fabrication facility 1165 may then fabricate an integrated circuit that is based at least in part on the IP core design. The fabricated integrated circuit can be configured to perform operations in accordance with at least one embodiment described herein.

FIG. 11B illustrates a cross-section side view of an integrated circuit package assembly 1170, according to some embodiments described herein. The integrated circuit package assembly 1170 illustrates an implementation of one or more processor or accelerator devices as described herein. The package assembly 1170 includes multiple units of hardware logic 1172, 1174 connected to a substrate 1180. The logic 1172, 1174 may be implemented at least partly in configurable logic or fixed-functionality logic hardware, and can include one or more portions of any of the processor core(s), graphics processor(s), or other accelerator devices described herein. Each unit of logic 1172, 1174 can be implemented within a semiconductor die and coupled with the substrate 1180 via an interconnect structure 1173. The interconnect structure 1173 may be configured to route electrical signals between the logic 1172, 1174 and the substrate 1180, and can include interconnects such as, but not limited to bumps or pillars. In some embodiments, the interconnect structure 1173 may be configured to route electrical signals such as, for example, input/output (I/O) signals and/or power or ground signals associated with the operation of the logic 1172, 1174. In some embodiments, the substrate 1180 is an epoxy-based laminate substrate. The substrate 1180 may include other suitable types of substrates in other embodiments. The package assembly 1170 can be connected to other electrical devices via a package interconnect 1183. The package interconnect 1183 may be coupled to a surface of the substrate 1180 to route electrical signals to other electrical devices, such as a motherboard, other chipset, or multi-chip module.

In some embodiments, the units of logic 1172, 1174 are electrically coupled with a bridge 1182 that is configured to route electrical signals between the logic 1172, 1174. The bridge 1182 may be a dense interconnect structure that provides a route for electrical signals. The bridge 1182 may include a bridge substrate composed of glass or a suitable semiconductor material. Electrical routing features can be formed on the bridge substrate to provide a chip-to-chip connection between the logic 1172, 1174.

Although two units of logic 1172, 1174 and a bridge 1182 are illustrated, embodiments described herein may include more or fewer logic units on one or more dies. The one or more dies may be connected by zero or more bridges, as the bridge 1182 may be excluded when the logic is included on a single die. Alternatively, multiple dies or units of logic can be connected by one or more bridges. Additionally, multiple logic units, dies, and bridges can be connected together in other possible configurations, including three-dimensional configurations.

FIG. 11C illustrates a package assembly 1190 that includes multiple units of hardware logic chiplets connected to a substrate 1180. A graphics processing unit, parallel processor, and/or compute accelerator as described herein can be composed from diverse silicon chiplets that are separately manufactured. A diverse set of chiplets with different IP core logic can be assembled into a single device. Additionally, the chiplets can be integrated into a base die or base chiplet using active interposer technology. The concepts described herein enable the interconnection and communication between the different forms of IP within the GPU. IP cores can be manufactured using different process technologies and composed during manufacturing, which avoids the complexity of converging multiple IPs, especially on a large SoC with several flavors IPs, to the same manufacturing process. Enabling the use of multiple process technologies improves the time to market and provides a cost-effective way to create multiple product SKUs. Additionally, the disaggregated IPs are more amenable to being power gated independently, components that are not in use on a given workload can be powered off, reducing overall power consumption.

In various embodiments a package assembly 1190 can include components and chiplets that are interconnected by a fabric 1185 and/or one or more bridges 1187. The chiplets within the package assembly 1190 may have a 2.5D arrangement using Chip-on-Wafer-on-Substrate stacking in which multiple dies are stacked side-by-side on a silicon interposer 1189 that couples the chiplets with the substrate 1180. The substrate 1180 includes electrical connections to the package interconnect 1183. In one embodiment the silicon interposer 1189 is a passive interposer that includes through-silicon vias (TSVs) to electrically couple chiplets within the package assembly 1190 to the substrate 1180. In one embodiment, silicon interposer 1189 is an active interposer that includes embedded logic in addition to TSVs. In such embodiment, the chiplets within the package assembly 1190 are arranged using 3D face to face die stacking on top of the active interposer 1189. The active interposer 1189 can include hardware logic for I/O 1191, cache memory 1192, and other hardware logic 1193, in addition to interconnect fabric 1185 and a silicon bridge 1187. The fabric 1185 enables communication between the various logic chiplets 1172, 1174 and the logic 1191, 1193 within the active interposer 1189. The fabric 1185 may be an NoC interconnect or another form of packet switched fabric that switches data packets between components of the package assembly. For complex assemblies, the fabric 1185 may be a dedicated chiplet enables communication between the various hardware logic of the package assembly 1190.

Bridge structures 1187 within the active interposer 1189 may be used to facilitate a point-to-point interconnect between, for example, logic or I/O chiplets 1174 and memory chiplets 1175. In some implementations, bridge structures 1187 may also be embedded within the substrate 1180. The hardware logic chiplets can include special purpose hardware logic chiplets 1172, logic or I/O chiplets 1174, and/or memory chiplets 1175. The hardware logic chiplets 1172 and logic or I/O chiplets 1174 may be implemented at least partly in configurable logic or fixed-functionality logic hardware and can include one or more portions of any of the processor core(s), graphics processor(s), parallel processors, or other accelerator devices described herein. The memory chiplets 1175 can be DRAM (e.g., GDDR, HBM) memory or cache (SRAM) memory. Cache memory 1192 within the active interposer 1189 (or substrate 1180) can act as a global cache for the package assembly 1190, part of a distributed global cache, or as a dedicated cache for the fabric 1185.

Each chiplet can be fabricated as separate semiconductor die and coupled with a base die that is embedded within or coupled with the substrate 1180. The coupling with the substrate 1180 can be performed via an interconnect structure 1173. The interconnect structure 1173 may be configured to route electrical signals between the various chiplets and logic within the substrate 1180. The interconnect structure 1173 can include interconnects such as, but not limited to bumps or pillars. In some embodiments, the interconnect structure 1173 may be configured to route electrical signals such as, for example, input/output (I/O) signals and/or power or ground signals associated with the operation of the logic, I/O, and memory chiplets. In one embodiment, an additional interconnect structure couples the active interposer 1189 with the substrate 1180.

In some embodiments, the substrate 1180 is an epoxy-based laminate substrate. The substrate 1180 may include other suitable types of substrates in other embodiments. The package assembly 1190 can be connected to other electrical devices via a package interconnect 1183. The package interconnect 1183 may be coupled to a surface of the substrate 1180 to route electrical signals to other electrical devices, such as a motherboard, other chipset, or multi-chip module.

In some embodiments, a logic or I/O chiplet 1174 and a memory chiplet 1175 can be electrically coupled via a bridge 1187 that is configured to route electrical signals between the logic or I/O chiplet 1174 and a memory chiplet 1175. The bridge 1187 may be a dense interconnect structure that provides a route for electrical signals. The bridge 1187 may include a bridge substrate composed of glass or a suitable semiconductor material. Electrical routing features can be formed on the bridge substrate to provide a chip-to-chip connection between the logic or I/O chiplet 1174 and a memory chiplet 1175. The bridge 1187 may also be referred to as a silicon bridge or an interconnect bridge. For example, the bridge 1187, in some embodiments, is an Embedded Multi-die Interconnect Bridge (EMIB). In some embodiments, the bridge 1187 may simply be a direct connection from one chiplet to another chiplet.

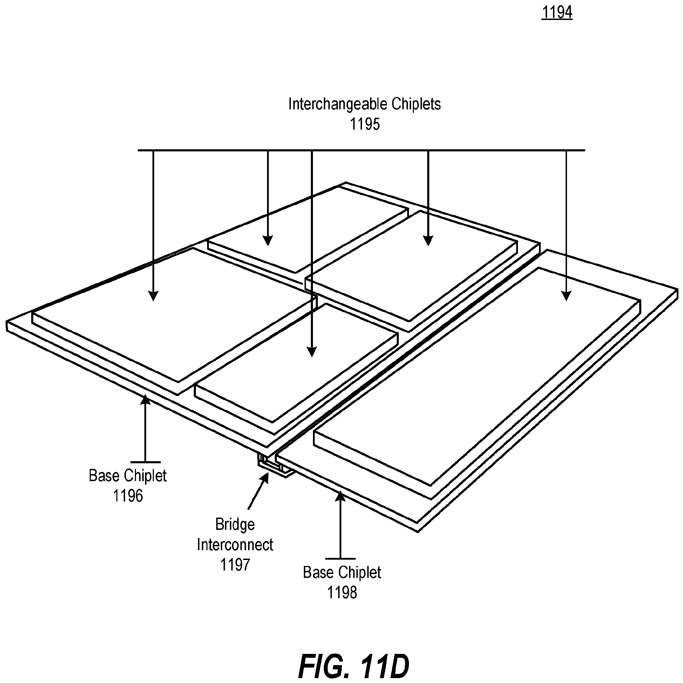

FIG. 11D illustrates a package assembly 1194 including interchangeable chiplets 1195, according to an embodiment. The interchangeable chiplets 1195 can be assembled into standardized slots on one or more base chiplets 1196, 1198. The base chiplets 1196, 1198 can be coupled via a bridge interconnect 1197, which can be similar to the other bridge interconnects described herein and may be, for example, an EMIB. Memory chiplets can also be connected to logic or I/O chiplets via a bridge interconnect. I/O and logic chiplets can communicate via an interconnect fabric. The base chiplets can each support one or more slots in a standardized format for one of logic or I/O or memory/cache.

In one embodiment, SRAM and power delivery circuits can be fabricated into one or more of the base chiplets 1196, 1198, which can be fabricated using a different process technology relative to the interchangeable chiplets 1195 that are stacked on top of the base chiplets. For example, the base chiplets 1196, 1198 can be fabricated using a larger process technology, while the interchangeable chiplets can be manufactured using a smaller process technology. One or more of the interchangeable chiplets 1195 may be memory (e.g., DRAM) chiplets. Different memory densities can be selected for the package assembly 1194 based on the power, and/or performance targeted for the product that uses the package assembly 1194. Additionally, logic chiplets with a different number of type of functional units can be selected at time of assembly based on the power, and/or performance targeted for the product. Additionally, chiplets containing IP logic cores of differing types can be inserted into the interchangeable chiplet slots, enabling hybrid processor designs that can mix and match different technology IP blocks.

Exemplary System on a Chip Integrated Circuit

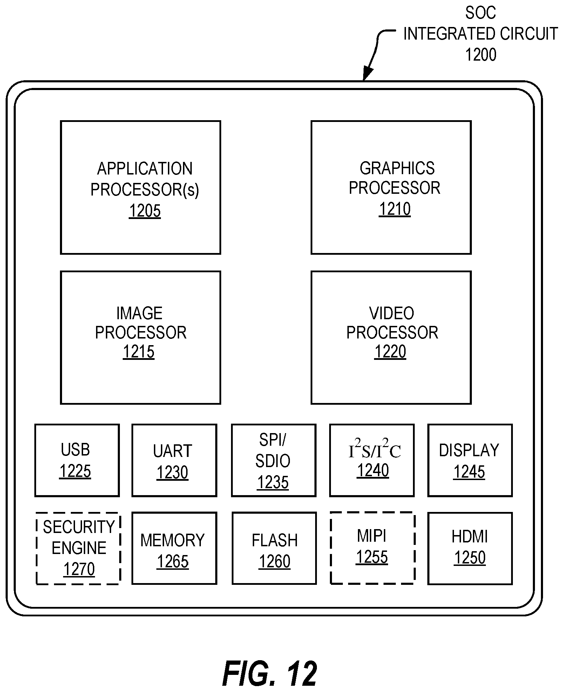

Figs. 12-13B illustrate exemplary integrated circuits and associated graphics processors that may be fabricated using one or more IP cores, according to various embodiments described herein. In addition to what is illustrated, other logic and circuits may be included, including additional graphics processors/cores, peripheral interface controllers, or general-purpose processor cores.

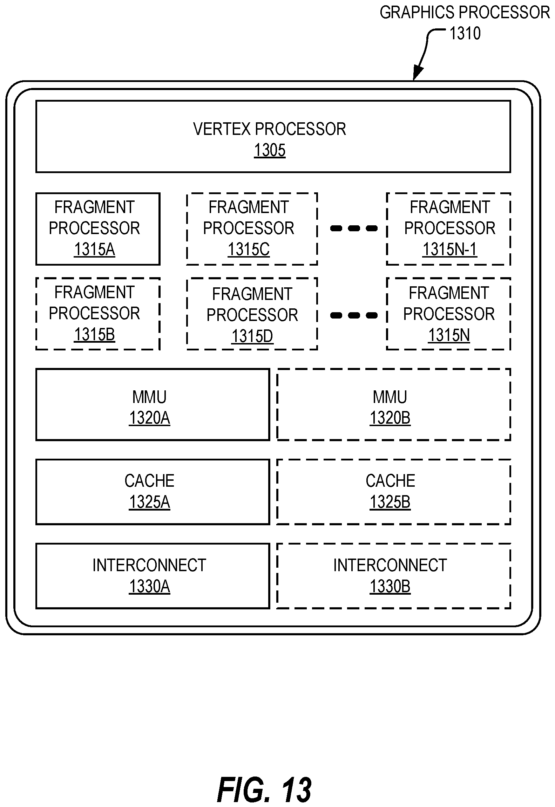

FIG. 12 is a block diagram illustrating an exemplary system on a chip integrated circuit 1200 that may be fabricated using one or more IP cores, according to an embodiment. Exemplary integrated circuit 1200 includes one or more application processor(s) 1205 (e.g., CPUs), at least one graphics processor 1210, and may additionally include an image processor 1215 and/or a video processor 1220, any of which may be a modular IP core from the same or multiple different design facilities. Integrated circuit 1200 includes peripheral or bus logic including a USB controller 1225, UART controller 1230, an SPI/SDIO controller 1235, and an I2S/I2C controller 1240. Additionally, the integrated circuit can include a display device 1245 coupled to one or more of a high-definition multimedia interface (HDMI) controller 1250 and a mobile industry processor interface (MIPI) display interface 1255. Storage may be provided by a flash memory subsystem 1260 including flash memory and a flash memory controller. Memory interface may be provided via a memory controller 1265 for access to SDRAM or SRAM memory devices. Some integrated circuits additionally include an embedded security engine 1270. As shown in Figure 13, graphics processor 1310 includes a vertex processor 1305 and one or more fragment processor(s) 1315A-1315N (e.g., 1315A, 1315B, 1315C, 1315D, through 1315N-1, and 1315N). Graphics processor 1310 can execute different shader programs via separate logic, such that the vertex processor 1305 is optimized to execute operations for vertex shader programs, while the one or more fragment processor(s) 1315A-1315N execute fragment (e.g., pixel) shading operations for fragment or pixel shader programs. The vertex processor 1305 performs the vertex processing stage of the 3D graphics pipeline and generates primitives and vertex data. The fragment processor(s) 1315A-1315N use the primitive and vertex data generated by the vertex processor 1305 to produce a framebuffer that is displayed on a display device. In one embodiment, the fragment processor(s) 1315A-1315N are optimized to execute fragment shader programs as provided for in the OpenGL API, which may be used to perform similar operations as a pixel shader program as provided for in the Direct 3D API.

Graphics processor 1310 additionally includes one or more memory management units (MMUs) 1320A-1320B, cache(s) 1325A-1325B, and circuit interconnect(s) 1330A-1330B. The one or more MMU(s) 1320A-1320B provide for virtual to physical address mapping for the graphics processor 1310, including for the vertex processor 1305 and/or fragment processor(s) 1315A-1315N, which may reference vertex or image/texture data stored in memory, in addition to vertex or image/texture data stored in the one or more cache(s) 1325A-1325B. In one embodiment the one or more MMU(s) 1320A-1320B may be synchronized with other MMUs within the system, including one or more MMUs associated with the one or more application processor(s) 1205, image processor 1215, and/or video processor 1220 of Figure 12, such that each processor 1205-1220 can participate in a shared or unified virtual memory system. The one or more circuit interconnect(s) 1330A-1330B enable graphics processor 1310 to interface with other IP cores within the SoC, either via an internal bus of the SoC or via a direct connection, according to embodiments.

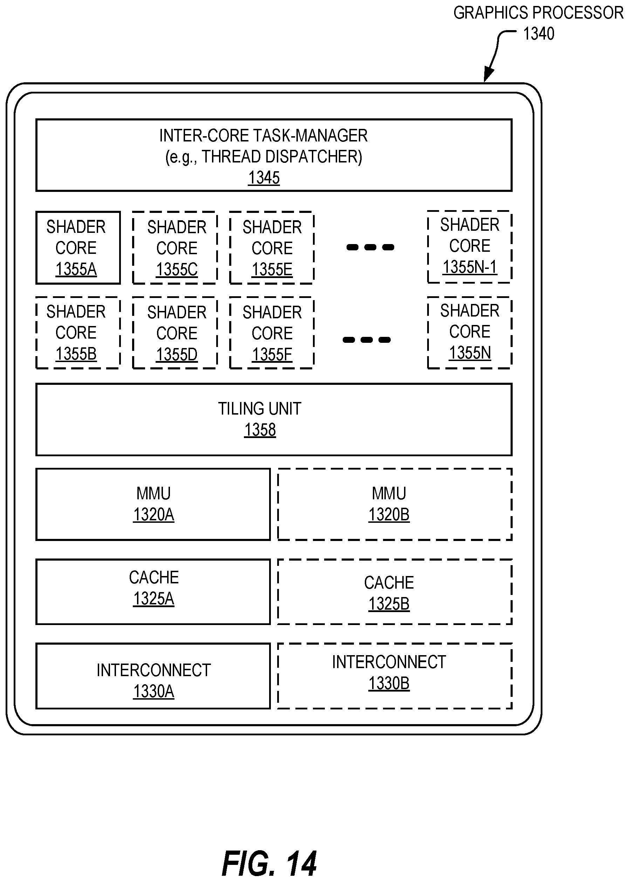

As shown Figure 14, graphics processor 1340 includes the one or more MMU(s) 1320A-1320B, cache(s) 1325A-1325B, and circuit interconnect(s) 1330A-1330B of the graphics processor 1310 of Figure 13A. Graphics processor 1340 includes one or more shader core(s) 1355A-1355N (e.g., 1455A, 1355B, 1355C, 1355D, 1355E, 1355F, through 1355N-1, and 1355N), which provides for a unified shader core architecture in which a single core or type or core can execute all types of programmable shader code, including shader program code to implement vertex shaders, fragment shaders, and/or compute shaders. The exact number of shader cores present can vary among embodiments and implementations. Additionally, graphics processor 1340 includes an inter-core task manager 1345, which acts as a thread dispatcher to dispatch execution threads to one or more shader cores 1355A-1355N and a tiling unit 1358 to accelerate tiling operations for tile-based rendering, in which rendering operations for a scene are subdivided in image space, for example to exploit local spatial coherence within a scene or to optimize use of internal caches.

RAY TRACING ARCHITECTURE

In one implementation, the graphics processor includes circuitry and/or program code for performing real-time ray tracing. A dedicated set of ray tracing cores may be included in the graphics processor to perform the various ray tracing operations described herein, including ray traversal and/or ray intersection operations. In addition to the ray tracing cores, multiple sets of graphics processing cores for performing programmable shading operations and multiple sets of tensor cores for performing matrix operations on tensor data may also be included.

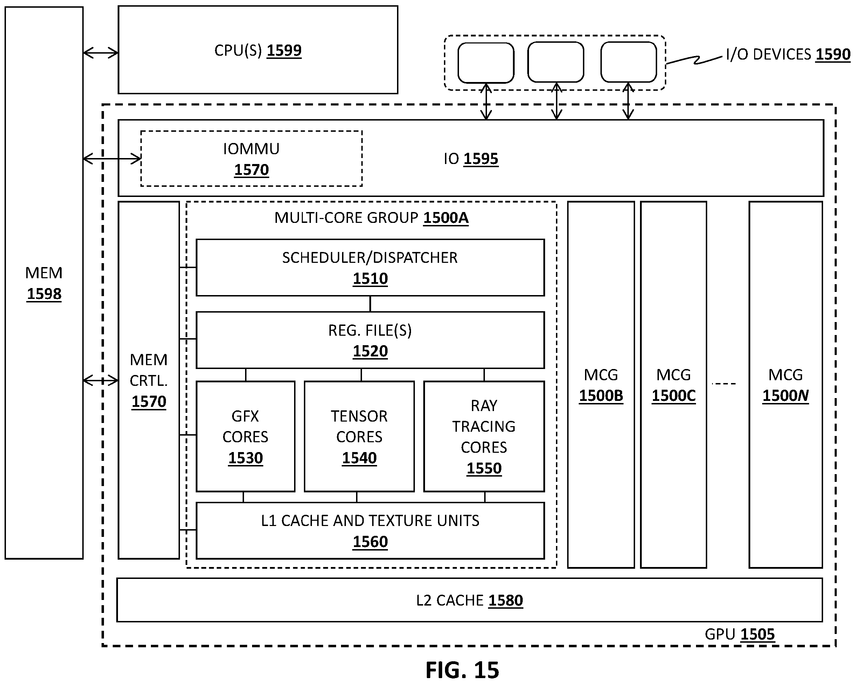

**Figure 15** illustrates an exemplary portion of one such graphics processing unit (GPU) 1505 which includes dedicated sets of graphics processing resources arranged into multi-core groups 1500A-N. The graphics processing unit (GPU) 1505 may be a variant of the graphics processor 300, the GPGPU 1340 and/or any other graphics processor described herein. Therefore, the disclosure of any features for graphics processors also discloses a corresponding combination with the GPU 1505, but is not limited to such. Moreover, the elements of Figure 15 having the same or similar names as the elements of any other figure herein describe the same elements as in the other figures, can operate or function in a manner similar to that, can comprise the same components, and can be linked to other entities, as those described elsewhere herein, but are not limited to such. While the details of only a single multi-core group 1500A are provided, it will be appreciated that the other multi-core groups 1500B-N may be equipped with the same or similar sets of graphics processing resources.

As illustrated, a multi-core group 1500A may include a set of graphics cores 1530, a set of tensor cores 1540, and a set of ray tracing cores 1550. A scheduler/dispatcher 1510 schedules and dispatches the graphics threads for execution on the various cores 1530, 1540, 1550. A set of register files 1520 store operand values used by the cores 1530, 1540, 1550 when executing the graphics threads. These may include, for example, integer registers for storing integer values, floating point registers for storing floating point values, vector registers for storing packed data elements (integer and/or floating point data elements) and tile registers for storing tensor/matrix values. The tile registers may be implemented as combined sets of vector registers.

One or more Level 1 (L1) caches and texture units 1560 store graphics data such as texture data, vertex data, pixel data, ray data, bounding volume data, etc, locally within each multi-core group 1500A. A Level 2 (L2) cache 1580 shared by all or a subset of the multi-core groups 1500A-N stores graphics data and/or instructions for multiple concurrent graphics threads. As illustrated, the L2 cache 1580 may be shared across a plurality of multi-core groups 1500A-N. One or more memory controllers 1570 couple the GPU 1505 to a memory 1598 which may be a system memory (e.g., DRAM) and/or a local graphics memory (e.g., GDDR6 memory).

Input/output (IO) circuitry 1595 couples the GPU 1505 to one or more IO devices 1595 such as digital signal processors (DSPs), network controllers, or user input devices. An on-chip interconnect may be used to couple the I/O devices 1590 to the GPU 1505 and memory 1598. One or more IO memory management units (IOMMUs) 1570 of the IO circuitry 1595 couple the IO devices 1590 directly to the system memory 1598. The IOMMU 1570 may manage multiple sets of page tables to map virtual addresses to physical addresses in system memory 1598. Additionally, the IO devices 1590, CPU(s) 1599, and GPU(s) 1505 may share the same virtual address space.

The IOMMU 1570 may also support virtualization. In this case, it may manage a first set of page tables to map guest/graphics virtual addresses to guest/graphics physical addresses and a second set of page tables to map the guest/graphics physical addresses to system/host physical addresses (e.g., within system memory 1598). The base addresses of each of the first and second sets of page tables may be stored in control registers and swapped out on a context switch (e.g., so that the new context is provided with access to the relevant set of page tables). While not illustrated in Figure 15, each of the cores 1530, 1540, 1550 and/or multi-core groups 1500A-N may include translation lookaside buffers (TLBs) to cache guest virtual to guest physical translations, guest physical to host physical translations, and guest virtual to host physical translations.

The CPUs 1599, GPUs 1505, and IO devices 1590 can be integrated on a single semiconductor chip and/or chip package. The illustrated memory 1598 may be integrated on the same chip or may be coupled to the memory controllers 1570 via an off-chip interface. In one implementation, the memory 1598 comprises GDDR6 memory which shares the same virtual address space as other physical system-level memories, although the underlying principles of the invention are not limited to this specific implementation.

The tensor cores 1540 may include a plurality of execution circuits specifically designed to perform matrix operations, which are the fundamental compute operation used to perform deep learning operations. For example, simultaneous matrix multiplication operations may be used for neural network training and inferencing. The tensor cores 1540 may perform matrix processing using a variety of operand precisions including single precision floating-point (e.g., 32 bits), half-precision floating point (e.g., 16 bits), integer words (16 bits), bytes (8 bits), and half-bytes (4 bits). A neural network implementation may also extract features of each rendered scene, potentially combining details from multiple frames, to construct a high-quality final image.

In deep learning implementations, parallel matrix multiplication work may be scheduled for execution on the tensor cores 1540. The training of neural networks, in particular, requires a significant number matrix dot product operations. In order to process an inner-product formulation of an N x N x N matrix multiply, the tensor cores 1540 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 1540 to ensure that the most efficient precision is used for different workloads (e.g., such as inferencing workloads which can tolerate quantization to bytes and half-bytes).

The ray tracing cores 1550 may be used to accelerate ray tracing operations for both real-time ray tracing and non-real-time ray tracing implementations. In particular, the ray tracing cores 1550 may include ray traversal/intersection circuitry for performing ray traversal using bounding volume hierarchies (BVHs) and identifying intersections between rays and primitives enclosed within the BVH volumes. The ray tracing cores 1550 may also include circuitry for performing depth testing and culling (e.g., using a Z buffer or similar arrangement). In one implementation, the ray tracing cores 1550 perform traversal and intersection operations in concert with the image denoising techniques described herein, at least a portion of which may be executed on the tensor cores 1540. For example, the tensor cores 1540 may implement a deep learning neural network to perform denoising of frames generated by the ray tracing cores 1550. However, the CPU(s) 1599, graphics cores 1530, and/or ray tracing cores 1550 may also implement all or a portion of the denoising and/or deep learning algorithms.

In addition, as described above, a distributed approach to denoising may be employed in which the GPU 1505 is in a computing device coupled to other computing devices over a network or high speed interconnect. The interconnected computing devices may additionally share neural network learning/training data to improve the speed with which the overall system learns to perform denoising for different types of image frames and/or different graphics applications.

The ray tracing cores 1550 may process all BVH traversal and ray-primitive intersections, saving the graphics cores 1530 from being overloaded with thousands of instructions per ray. Each ray tracing core 1550 may include a first set of specialized circuitry for performing bounding box tests (e.g., for traversal operations) and a second set of specialized circuitry for performing the ray-triangle intersection tests (e.g., intersecting rays which have been traversed). Thus, the multi-core group 1500A can simply launch a ray probe, and the ray tracing cores 1550 independently perform ray traversal and intersection and return hit data (e.g., a hit, no hit, multiple hits, etc) to the thread context. The other cores 1530, 1540 may be freed to perform other graphics or compute work while the ray tracing cores 1550 perform the traversal and intersection operations.

Each ray tracing core 1550 may include a traversal unit to perform BVH testing operations and an intersection unit which performs ray-primitive intersection tests. The intersection unit may then generate a "hit", "no hit", or "multiple hit" response, which it provides to the appropriate thread. During the traversal and intersection operations, the execution resources of the other cores (e.g., graphics cores 1530 and tensor cores 1540) may be freed to perform other forms of graphics work.

A hybrid rasterization/ray tracing approach may also be used in which work is distributed between the graphics cores 1530 and ray tracing cores 1550.

The ray tracing cores 1550 (and/or other cores 1530, 1540) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 1550, graphics cores 1530 and tensor cores 1540 is Vulkan 1.1.85. Note, however, that the underlying principles of the invention are not limited to any particular ray tracing ISA.

In general, the various cores 1550, 1540, 1530 may support a ray tracing instruction set that includes instructions/functions for ray generation, closest hit, any hit, ray-primitive intersection, per-primitive and hierarchical bounding box construction, miss, visit, and exceptions. More specifically, ray tracing instructions can be included to perform the following functions:

Ray Generation - Ray generation instructions may be executed for each pixel, sample, or other user-defined work assignment.

Closest Hit - A closest hit instruction may be executed to locate the closest intersection point of a ray with primitives within a scene.

Any Hit - An any hit instruction identifies multiple intersections between a ray and primitives within a scene, potentially to identify a new closest intersection point.

Intersection - An intersection instruction performs a ray-primitive intersection test and outputs a result.

Per-primitive Bounding box Construction - This instruction builds a bounding box around a given primitive or group of primitives (e.g., when building a new BVH or other acceleration data structure).

Miss - Indicates that a ray misses all geometry within a scene, or specified region of a scene.

Visit - Indicates the children volumes a ray will traverse.

Exceptions - Includes various types of exception handlers (e.g., invoked for various error conditions).

GRAPHICS PROCESSOR WITH HARDWARE

ACCELERATED HYBRID RAY TRACING

A hybrid rendering pipeline which performs rasterization on graphics cores 1530 and ray tracing operations on the ray tracing cores 1550, graphics cores 1530, and/or CPU 1599 cores, is presented next. For example, rasterization and depth testing may be performed on the graphics cores 1530 in place of the primary ray casting stage. The ray tracing cores 1550 may then generate secondary rays for ray reflections, refractions, and shadows. In addition, certain regions of a scene in which the ray tracing cores 1550 will perform ray tracing operations (e.g., based on material property thresholds such as high reflectivity levels) will be selected while other regions of the scene will be rendered with rasterization on the graphics cores 1530. This hybrid implementation may be used for real-time ray tracing applications - where latency is a critical issue.

The ray traversal architecture described below may, for example, perform programmable shading and control of ray traversal using existing single instruction multiple data (SIMD) and/or single instruction multiple thread (SIMT) graphics processors while accelerating critical functions, such as BVH traversal and/or intersections, using dedicated hardware. SIMD occupancy for incoherent paths may be improved by regrouping spawned shaders at specific points during traversal and before shading. This is achieved using dedicated hardware that sorts shaders dynamically, on-chip. Recursion is managed by splitting a function into continuations that execute upon returning and regrouping continuations before execution for improved SIMD occupancy.

Programmable control of ray traversal/intersection is achieved by decomposing traversal functionality into an inner traversal that can be implemented as fixed function hardware and an outer traversal that executes on GPU processors and enables programmable control through user defined traversal shaders. The cost of transferring the traversal context between hardware and software is reduced by conservatively truncating the inner traversal state during the transition between inner and outer traversal.

Programmable control of ray tracing can be expressed through the different shader types listed in Table A below. There can be multiple shaders for each type. For example each material can have a different hit shader.

**TABLE A**

| Shader Type | Functionality |
|---|---|
| Primary | Launching primary rays |
| Hit | Bidirectional reflectance distribution function (BRDF) sampling, launching secondary rays |
| Any Hit | Computing transmittance for alpha textured geometry |
| Miss | Computing radiance from a light source |
| Intersection | Intersecting custom shapes |
| Traversal | Instance selection and transformation |
| Callable | A general-purpose function |

Recursive ray tracing may be initiated by an API function that commands the graphics processor to launch a set of primary shaders or intersection circuitry which can spawn ray-scene intersections for primary rays. This in turn spawns other shaders such as traversal, hit shaders, or miss shaders. A shader that spawns a child shader can also receive a return value from that child shader. Callable shaders are general-purpose functions that can be directly spawned by another shader and can also return values to the calling shader.

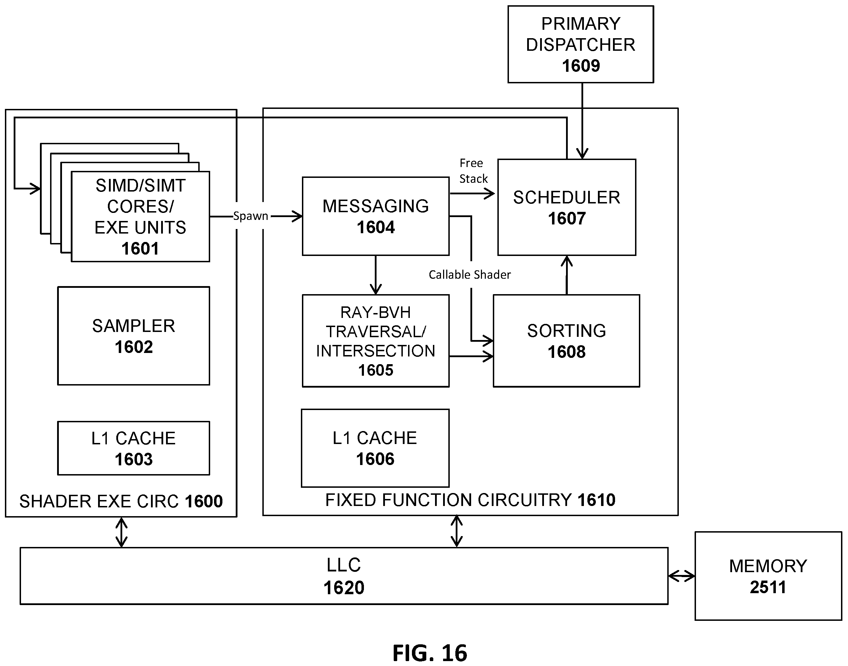

**Figure 16** illustrates a graphics processing architecture which includes shader execution circuitry 1600 and fixed function circuitry 1610. The general purpose execution hardware subsystem includes a plurality of single instruction multiple data (SIMD) and/or single instructions multiple threads (SIMT) cores 1601 (i.e., each core may comprise groups of execution circuitry), one or more samplers 1602, and a Level 1 (L1) cache 1603 or other form of local memory. The fixed function hardware subsystem 1610 includes message unit 1604, a scheduler 1607, ray-BVH traversal/intersection circuitry 1605, sorting circuitry 1608, and a local L1 cache 1606.

In operation, primary dispatcher 1609 dispatches a set of primary rays to the scheduler 1607, which schedules work to shaders executed on the SIMD/SIMT graphics processor core blocks 1601. The SIMD graphics processor core blocks 1601 may be ray tracing cores 1550 and/or graphics cores 1530 described above. Execution of the primary shaders spawns additional work to be performed (e.g., to be executed by one or more child shaders and/or fixed function hardware). The message unit 1604 distributes work spawned by the SIMD graphics processor core blocks 1601 to the scheduler 1607, accessing the free stack pool as needed, the sorting circuitry 1608, or the ray-BVH intersection circuitry 1605. If the additional work is sent to the scheduler 1607, it is scheduled for processing on the SIMD/SIMT graphics processor core blocks 1601. Prior to scheduling, the sorting circuitry 1608 may sort the rays into groups or bins as described herein (e.g., grouping rays with similar characteristics). The ray-BVH intersection circuitry 1605 performs intersection testing of rays using BVH volumes. For example, the ray-BVH intersection circuitry 1605 may compare ray coordinates with each level of the BVH to identify volumes which are intersected by the ray.

Shaders can be referenced using a shader record, a user-allocated structure that includes a pointer to the entry function, vendor-specific metadata, and global arguments to the shader executed by the SIMD graphics processor core blocks 1601. Each executing instance of a shader is associated with a call stack which may be used to store arguments passed between a parent shader and child shader. Call stacks may also store references to the continuation functions that are executed when a call returns.

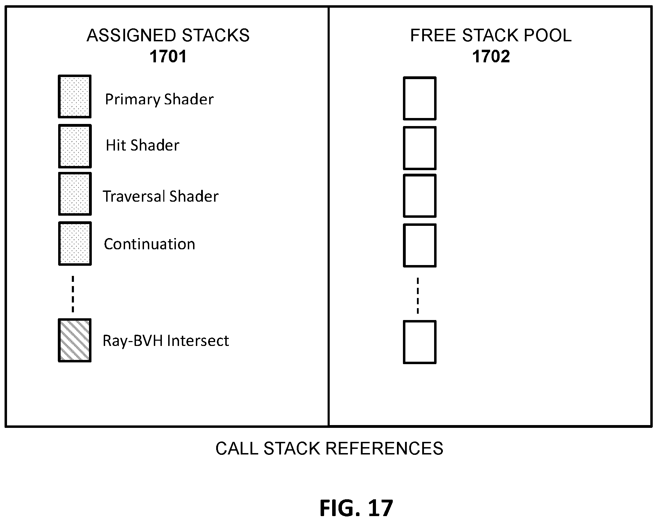

**Figure 17** illustrates an example set of assigned stacks 1701 which includes a primary shader stack, a hit shader stack, a traversal shader stack, a continuation function stack, and a ray-BVH intersection stack (which, as described, may be executed by fixed function hardware 1610). New shader invocations may implement new stacks from a free stack pool 1702. The call stacks, e.g. stacks comprised by the set of assigned stacks, may be cached in a local L1 cache 1603, 1606 to reduce the latency of accesses.

There may be a finite number of call stacks, each with a fixed maximum size "Sstack" allocated in a contiguous region of memory. Therefore the base address of a stack can be directly computed from a stack index (SID) as base address = SID * Sstack. Stack IDs may be allocated and deallocated by the scheduler 1607 when scheduling work to the SIMD graphics processor core blocks 1601.

The primary dispatcher 1609 may comprise a graphics processor command processor which dispatches primary shaders in response to a dispatch command from the host (e.g., a CPU). The scheduler 1607 may receive these dispatch requests and launches a primary shader on a SIMD processor thread if it can allocate a stack ID for each SIMD lane. Stack IDs may be allocated from the free stack pool 1702 that is initialized at the beginning of the dispatch command.

An executing shader can spawn a child shader by sending a spawn message to the messaging unit 1604. This command includes the stack IDs associated with the shader and also includes a pointer to the child shader record for each active SIMD lane. A parent shader can only issue this message once for an active lane. After sending spawn messages for all relevant lanes, the parent shader may terminate.

A shader executed on the SIMD graphics processor core blocks 1601 can also spawn fixed-function tasks such as ray-BVH intersections using a spawn message with a shader record pointer reserved for the fixed-function hardware. As mentioned, the messaging unit 1604 sends spawned ray-BVH intersection work to the fixed-function ray-BVH intersection circuitry 1605 and callable shaders directly to the sorting circuitry 1608. The sorting circuitry may group the shaders by shader record pointer to derive a SIMD batch with similar characteristics. Accordingly, stack IDs from different parent shaders can be grouped by the sorting circuitry 1608 in the same batch. The sorting circuitry 1608 sends grouped batches to the scheduler 1607 which accesses the shader record from graphics memory 2511 or the last level cache (LLC) 1620 and launches the shader on a processor thread.

Continuations may be treated as callable shaders and may also be referenced through shader records. When a child shader is spawned and returns values to the parent shader, a pointer to the continuation shader record may be pushed on the call stack 1701. When a child shader returns, the continuation shader record may then be popped from the call stack 1701 and a continuation shader may be spawned. Optionally, spawned continuations may go through the sorting unit similar to callable shaders and get launched on a processor thread.

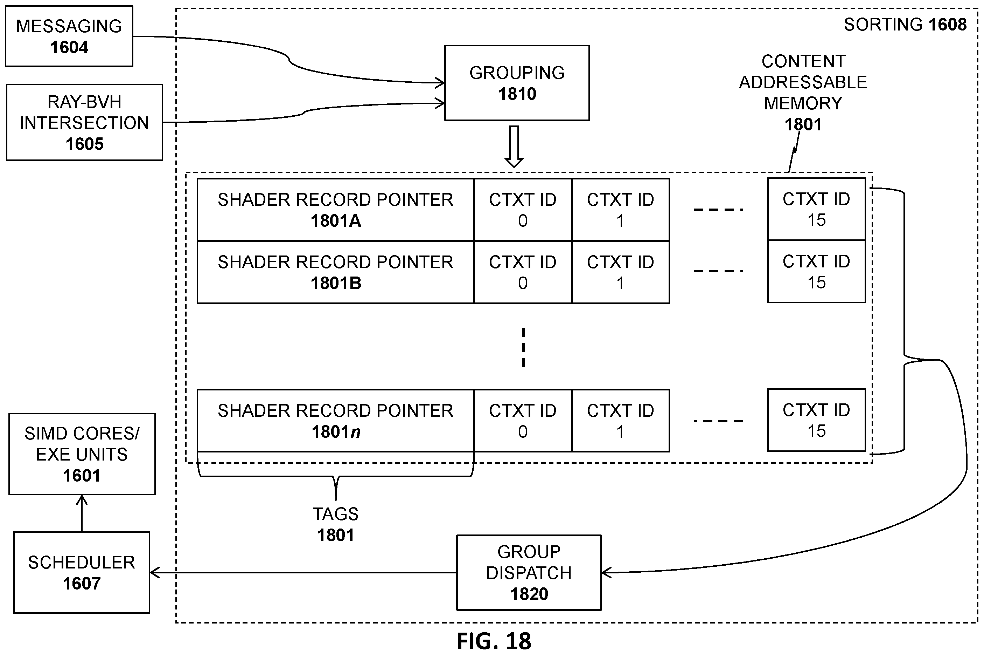

As illustrated in **Figure 18**, the sorting circuitry 1608 groups spawned tasks by shader record pointers 1801A, 1801B, 1801n to create SIMD batches for shading. The stack IDs or context IDs in a sorted batch can be grouped from different dispatches and different input SIMD lanes. A grouping circuitry 1810 may perform the sorting using a content addressable memory (CAM) structure 1801 comprising a plurality of entries with each entry identified with a tag 1801. As mentioned, the tag 1801 may be a corresponding shader record pointer 1801A, 1801B, 1801n. The CAM structure 1801 may store a limited number of tags (e.g. 32, 64, 128, etc) each associated with an incomplete SIMD batch corresponding to a shader record pointer.

For an incoming spawn command, each SIMD lane has a corresponding stack ID (shown as 16 context IDs 0-15 in each CAM entry) and a shader record pointer 1801A-B,...n (acting as a tag value). The grouping circuitry 1810 may compare the shader record pointer for each lane against the tags 1801 in the CAM structure 1801 to find a matching batch. If a matching batch is found, the stack ID/context ID may be added to the batch. Otherwise a new entry with a new shader record pointer tag may be created, possibly evicting an older entry with an incomplete batch.

An executing shader can deallocate the call stack when it is empty by sending a deallocate message to the message unit. The deallocate message is relayed to the scheduler which returns stack IDs/context IDs for active SIMD lanes to the free pool.

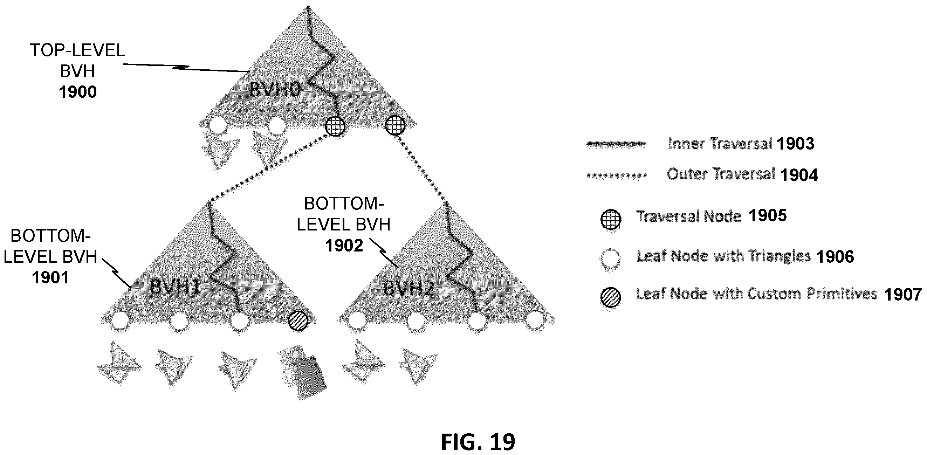

A hybrid approach for ray traversal operations, using a combination of fixed-function ray traversal and software ray traversal, is presented. Consequently, it provides the flexibility of software traversal while maintaining the efficiency of fixed-function traversal. **Figure 19** shows an acceleration structure which may be used for hybrid traversal, which is a two-level tree with a single top level BVH 1900 and several bottom level BVHs 1901 and 1902. Graphical elements are shown to the right to indicate inner traversal paths 1903, outer traversal paths 1904, traversal nodes 1905, leaf nodes with triangles 1906, and leaf nodes with custom primitives 1907.

The leaf nodes with triangles 1906 in the top level BVH 1900 can reference triangles, intersection shader records for custom primitives or traversal shader records. The leaf nodes with triangles 1906 of the bottom level BVHs 1901-1902 can only reference triangles and intersection shader records for custom primitives. The type of reference is encoded within the leaf node 1906. Inner traversal 1903 refers to traversal within each BVH 1900-1902. Inner traversal operations comprise computation of ray-BVH intersections and traversal across the BVH structures 1900-1902 is known as outer traversal. Inner traversal operations can be implemented efficiently in fixed function hardware while outer traversal operations can be performed with acceptable performance with programmable shaders. Consequently, inner traversal operations may be performed using fixed-function circuitry 1610 and outer traversal operations may be performed using the shader execution circuitry 1600 including SIMD/SIMT graphics processor core blocks 1601 for executing programmable shaders.

Note that the SIMD/SIMT graphics processor core blocks 1601 are sometimes simply referred to herein as "cores," "SIMD cores," "graphics cores," or "SIMD processors" for simplicity. Similarly, the ray-BVH traversal/intersection circuitry 1605 is sometimes simply referred to as a "traversal unit," "traversal/intersection unit" or "traversal/intersection circuitry." When an alternate term is used, the particular name used to designate the respective circuitry/logic does not alter the underlying functions which the circuitry/logic performs, as described herein.

Moreover, while illustrated as a single component in **Figure 16** for purposes of explanation, the traversal/intersection unit 1605 may comprise a distinct traversal unit and a separate intersection unit, each of which may be implemented in circuitry and/or logic as described herein.

When a ray intersects a traversal node during an inner traversal, a traversal shader may be spawned. The sorting circuitry 1608 may group these shaders by shader record pointers 1801A-B, *n* to create a SIMD batch which is launched by the scheduler 1607 for SIMD execution on the graphics SIMD graphics processor core blocks 1601. Traversal shaders can modify traversal in several ways, enabling a wide range of applications. For example, the traversal shader can select a BVH at a coarser level of detail (LOD) or transform the ray to enable rigid body transformations. The traversal shader may then spawn inner traversal for the selected BVH.

Inner traversal computes ray-BVH intersections by traversing the BVH and computing ray-box and ray-triangle intersections. Inner traversal is spawned in the same manner as shaders by sending a message to the messaging circuitry 1604 which relays the corresponding spawn message to the ray-BVH intersection circuitry 1605 which computes ray-BVH intersections.

The stack for inner traversal may be stored locally in the fixed-function circuitry 1610 (e.g., within the L1 cache 1606). When a ray intersects a leaf node corresponding to a traversal shader or an intersection shader, inner traversal may be terminated and the inner stack truncated. The truncated stack along with a pointer to the ray and BVH may be written to memory at a location specified by the calling shader and then the corresponding traversal shader or intersection shader may be spawned. If the ray intersects any triangles during inner traversal, the corresponding hit information may be provided as input arguments to these shaders as shown in the below code. These spawned shaders may be grouped by the sorting circuitry 1608 to create SIMD batches for execution.

```
struct Hitinfo {
    float barycentrics[2];
    float tmax;
    bool innerTravComplete;
    uint primlD;
    uint geomID;
    ShaderRecord* leafShaderRecord;
}
```

Truncating the inner traversal stack reduces the cost of spilling it to memory. The approach described in *Restart Trail for Stackless BVH Traversal*, High Performance Graphics (2010), pp. 107-111, to truncate the stack to a small number of entries at the top of the stack, a 42-bit restart trail and a 6-bit depth value may be applied. The restart trail indicates branches that have already been taken inside the BVH and the depth value indicates the depth of traversal corresponding to the last stack entry. This is sufficient information to resume inner traversal at a later time.

Inner traversal is complete when the inner stack is empty and there no more BVH nodes to test. In this case an outer stack handler is spawned that pops the top of the outer stack and resumes traversal if the outer stack is not empty.

Outer traversal may execute the main traversal state machine and may be implemented in program code executed by the shader execution circuitry 1600. It may spawn an inner traversal query under the following conditions: (1) when a new ray is spawned by a hit shader or a primary shader; (2) when a traversal shader selects a BVH for traversal; and (3) when an outer stack handler resumes inner traversal for a BVH.

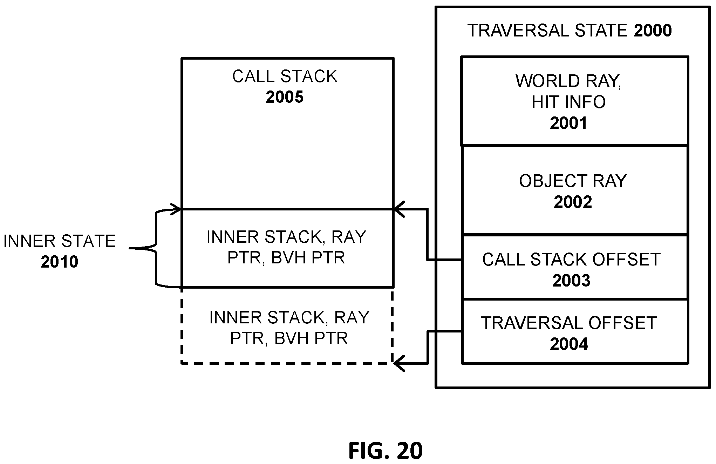

As illustrated in **Figure 20**, before inner traversal is spawned, space is allocated on the call stack 1765 for the fixed-function circuitry 1610 to store the truncated inner stack 2010. Offsets 4163-2004 to the top of the call stack and the inner stack are maintained in the traversal state 2000 which is also stored in memory 2511. The traversal state 2000 also includes the ray in world space 2001 and object space 2002 as well as hit information for the closest intersecting primitive.

The traversal shader, intersection shader and outer stack handler are all spawned by the ray-BVH intersection circuitry 4005. The traversal shader allocates on the call stack 2005 before initiating a new inner traversal for the second level BVH. The outer stack handler is a shader that is responsible for updating the hit information and resuming any pending inner traversal tasks. The outer stack handler is also responsible for spawning hit or miss shaders when traversal is complete. Traversal is complete when there are no pending inner traversal queries to spawn. When traversal is complete and an intersection is found, a hit shader is spawned; otherwise a miss shader is spawned.

While the hybrid traversal scheme described above uses a two-level BVH hierarchy, an arbitrary number of BVH levels with a corresponding change in the outer traversal implementation may also be implemented.

In addition, while fixed function circuitry 4010 is described above for performing ray-BVH intersections, other system components may also be implemented in fixed function circuitry. For example, the outer stack handler described above may be an internal (not user visible) shader that could potentially be implemented in the fixed function BVH traversal/intersection circuitry 4005. This implementation may be used to reduce the number of dispatched shader stages and round trips between the fixed function intersection hardware 4005 and the processor.

The examples described herein enable programmable shading and ray traversal control using user-defined functions that can execute with greater SIMD efficiency on existing and future GPU processors. Programmable control of ray traversal enables several important features such as procedural instancing, stochastic level-of-detail selection, custom primitive intersection and lazy BVH updates.

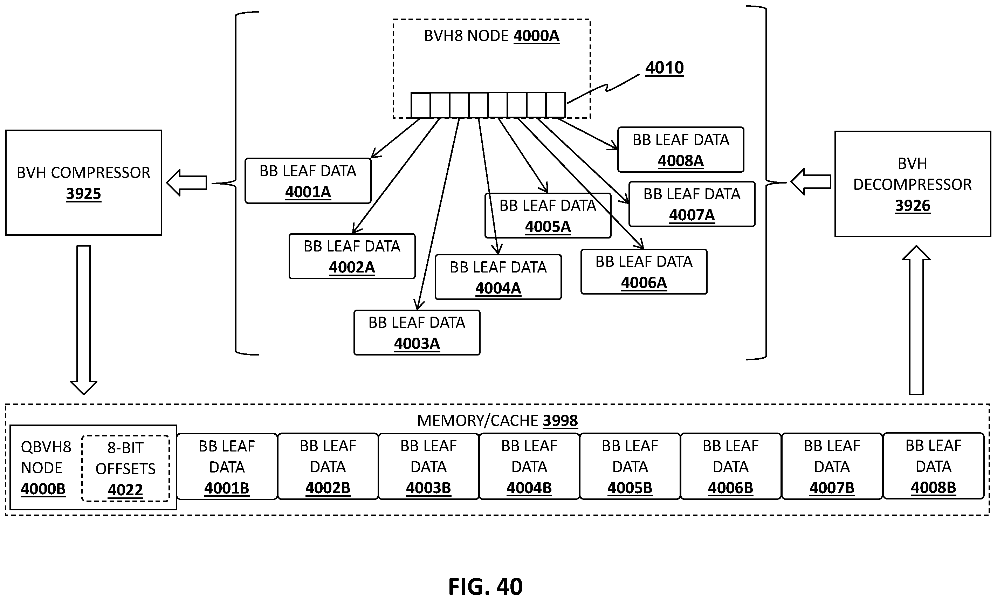

A programmable, multiple instruction multiple data (MIMD) ray tracing architecture which supports speculative execution of hit and intersection shaders is also provided. In particular, the architecture focuses on reducing the scheduling and communication overhead between the programmable SIMD/SIMT cores 4001 (e.g., graphics cores 1530) described above with respect to **Figure 40** and fixed-function MIMD traversal/intersection units 4005 in a hybrid ray tracing architecture. Multiple speculative execution schemes of hit and intersection shaders are described below that can be dispatched in a single batch from the traversal hardware, avoiding several traversal and shading round trips. A dedicated circuitry to implement these techniques may be used.

The embodiments of the invention are particularly beneficial in use-cases where the execution of multiple hit or intersection shaders is desired from a ray traversal query that would impose significant overhead when implemented without dedicated hardware support. These include, but are not limited to nearest k-hit query (launch a hit shader for the k closest intersections) and multiple programmable intersection shaders.

The techniques described here may be implemented as extensions to the architecture illustrated in **Figure 40** (and described with respect to **Figures 40-44**). In particular, the present embodiments of the invention build on this architecture with enhancements to improve the performance of the above-mentioned use-cases.

A performance limitation of hybrid ray tracing traversal architectures is the overhead of launching traversal queries from the graphics cores and the overhead of invoking programmable shaders from the ray tracing hardware. When multiple hit or intersection shaders are invoked during the traversal of the same ray, this overhead generates "execution roundtrips" between the programmable cores 4001 and traversal/intersection unit 4005. This also places additional pressure to the sorting unit 4008 which needs to extract SIMD/SIMT coherence from the individual shader invocations.

Several aspects of ray tracing require programmable control which can be expressed through the different shader types listed in TABLE A above (i.e., Primary, Hit, Any Hit, Miss, Intersection, Traversal, and Callable). There can be multiple shaders for each type. For example each material can have a different hit shader. Some of these shader types are defined in the current Microsoft® Ray Tracing API.

As a brief review, recursive ray tracing is initiated by an API function that commands the GPU to launch a set of primary shaders which can spawn ray-scene intersections (implemented in hardware and/or software) for primary rays. This in turn can spawn other shaders such as traversal, hit or miss shaders. A shader that spawns a child shader can also receive a return value from that shader. Callable shaders are general-purpose functions that can be directly spawned by another shader and can also return values to the calling shader.

Ray traversal computes ray-scene intersections by traversing and intersecting nodes in a bounding volume hierarchy (BVH). Recent research has shown that the efficiency of computing ray-scene intersections can be improved by over an order of magnitude using techniques that are better suited to fixed-function hardware such as reduced-precision arithmetic, BVH compression, per-ray state machines, dedicated intersection pipelines and custom caches.

The architecture shown in **Figure 16** comprises such a system where an array of SIMD/SIMT cores 1601 interact with a fixed function ray tracing/intersection unit 1605 to perform programmable ray tracing. Programmable shaders are mapped to SIMD/SIMT threads on the graphics cores 1601, where SIMD/SIMT utilization, execution, and data coherence are critical for optimal performance. Ray queries often break up coherence for various reasons such as:

- Traversal divergence: The duration of the BVH traversal varies highly

- among rays favoring asynchronous ray processing.

- Execution divergence: Rays spawned from different lanes of the same SIMD/SIMT thread may result in different shader invocations.

- Data access divergence: Rays hitting different surfaces sample different BVH nodes and primitives and shaders access different textures, for example. A variety of other scenarios may cause data access divergence.

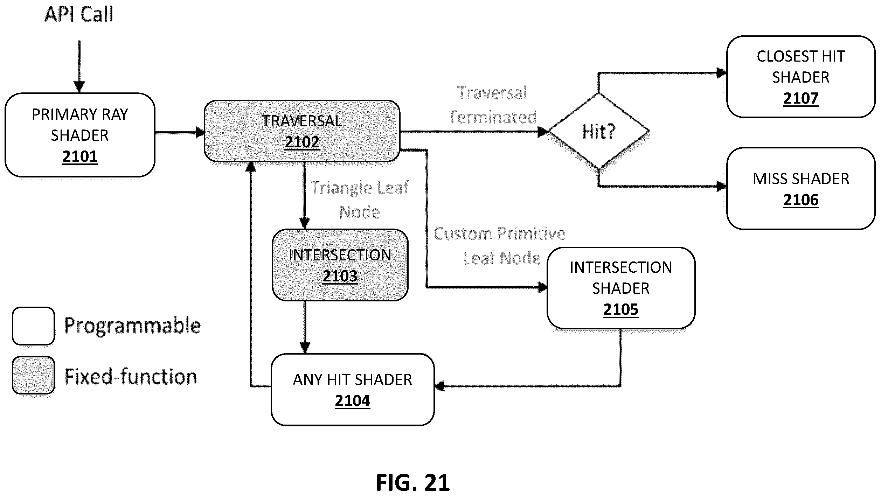

**Figure 21** illustrates an operational flow of a programmable ray tracing pipeline. The shaded elements including traversal 2102 and intersection 2103 may be implemented in fixed function circuitry while the remaining elements may be implemented with programmable graphics processor core blocks.

A primary ray shader 2101 sends work to the traversal circuitry at 2102 which traverses the current ray(s) through the BVH (or other acceleration structure). When a leaf node is reached, the traversal circuitry calls the intersection circuitry at 2103 which, upon identifying a ray-triangle intersection, invokes an any hit shader at 2104 (which may provide results back to the traversal circuitry as indicated).

Alternatively, the traversal may be terminated prior to reaching a leaf node and a closest hit shader invoked at 2107 (if a hit was recorded) or a miss shader at 2106 (in the event of a miss).

As indicated at 2105, an intersection shader may be invoked if the traversal circuitry reaches a custom primitive leaf node. A custom primitive may be any non-triangle primitive such as a polygon or a polyhedra (e.g., tetrahedrons, voxels, hexahedrons, wedges, pyramids, or other "unstructured" volume). The intersection shader 2105 identifies any intersections between the ray and custom primitive to the any hit shader 2104 which implements any hit processing.

When hardware traversal 2102 reaches a programmable stage, the traversal/intersection unit 1605 may generate a shader dispatch message to a relevant shader 2105-2107, which corresponds to a single SIMD lane of the graphics processor core blocks used to execute the shader. Since dispatches occur in an arbitrary order of rays, and they are divergent in the programs called, the sorting unit 1608 may accumulate multiple dispatch calls to extract coherent SIMD batches. The updated traversal state and the optional shader arguments may be written into memory 2511 by the traversal/intersection unit 1605.

In the k-nearest intersection problem, a closest hit shader 2107 is executed for the first k intersections. In the conventional way this would mean ending ray traversal upon finding the closest intersection, invoking a hit-shader, and spawning a new ray from the hit shader to find the next closest intersection (with the ray origin offset, so the same intersection will not occur again). It is easy to see that this implementation would require k ray spawns for a single ray. Another implementation operates with any-hit shaders 2104, invoked for all intersections and maintaining a global list of nearest intersections, using an insertion sort operation. The main problem with this approach is that there is no upper bound of any-hit shader invocations.

As mentioned, an intersection shader 2105 may be invoked on non-triangle (custom) primitives. Depending on the result of the intersection test and the traversal state (pending node and primitive intersections), the traversal of the same ray may continue after the execution of the intersection shader 2105. Therefore finding the closest hit may require several roundtrips to the graphics processor core blocks.

A focus can also be put on the reduction of SIMD-MIMD context switches for intersection shaders 2105 and hit shaders 2104, 2107 through changes to the traversal hardware and the shader scheduling model. First, the ray traversal circuitry 1605 defers shader invocations by accumulating multiple potential invocations and dispatching them in a larger batch. In addition, certain invocations that turn out to be unnecessary may be culled at this stage. Furthermore, the shader scheduler 1607 may aggregate multiple shader invocations from the same traversal context into a single SIMD batch, which results in a single ray spawn message. In one exemplary implementation, the traversal hardware 1605 suspends the traversal thread and waits for the results of multiple shader invocations. This mode of operation is referred to herein as "speculative" shader execution because it allows the dispatch of multiple shaders, some of which may not be called when using sequential invocations.

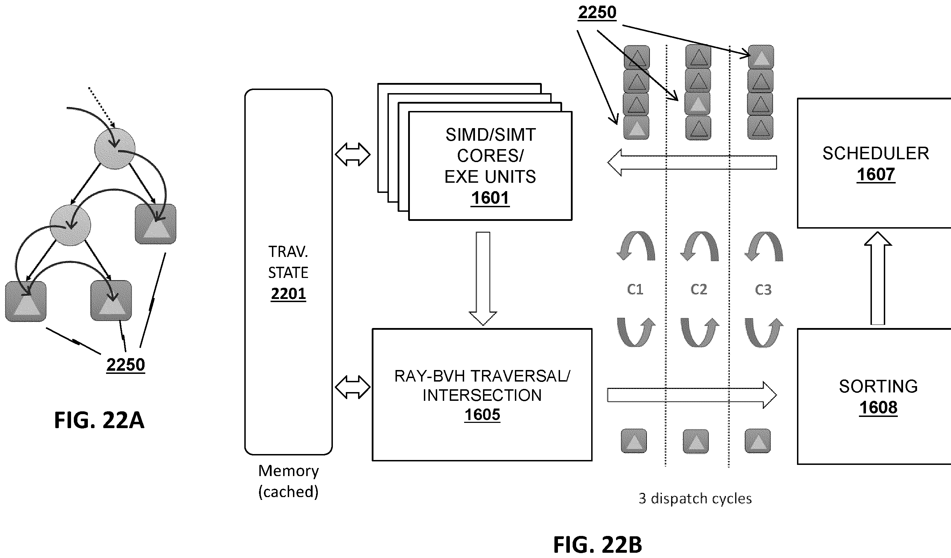

**Figure 22A** illustrates an example in which the traversal operation encounters multiple custom primitives 2250 in a subtree and **Figure 22B** illustrates how this can be resolved with three intersection dispatch cycles C1-C3. In particular, the scheduler 1607 may require three cycles to submit the work to the SIMD processor 1601 and the traversal circuitry 1605 requires three cycles to provide the results to the sorting unit 1608. The traversal state 2201 required by the traversal circuitry 1605 may be stored in a memory such as a local cache (e.g., an L1 cache and/or L2 cache).

A. <u>Deferred Ray Tracing Shader Invocations</u>

The manner in which the hardware traversal state 2201 is managed to allow the accumulation of multiple potential intersection or hit invocations in a list can also be modified. At a given time during traversal each entry in the list may be used to generate a shader invocation. For example, the k-nearest intersection points can be accumulated on the traversal hardware 1605 and/or in the traversal state 2201 in memory, and hit shaders can be invoked for each element if the traversal is complete. For hit shaders, multiple potential intersections may be accumulated for a subtree in the BVH.

For the nearest-k use case the benefit of this approach is that instead of k-1 roundtrips to the SIMD core/graphics core 1601 and k-1 new ray spawn messages, all hit shaders are invoked from the same traversal thread during a single traversal operation on the traversal circuitry 1605. A challenge for potential implementations is that it is not trivial to guarantee the execution order of hit shaders (the standard "roundtrip" approach guarantees that the hit shader of the closest intersection is executed first, etc.). This may be addressed by either the synchronization of the hit shaders or the relaxation of the ordering.

For the intersection shader use case the traversal circuitry 1605 does not know in advance whether a given shader would return a positive intersection test. However, it is possible to speculatively execute multiple intersection shaders and if at least one returns a positive hit result, it is merged into the global nearest hit. Specific implementations need to find an optimal number of deferred intersection tests to reduce the number of dispatch calls but avoid calling too many redundant intersection shaders.

B. Aggregate Shader Invocations from the Traversal Circuitry

When dispatching multiple shaders from the same ray spawn on the traversal circuitry 1605, branches in the flow of the ray traversal algorithm may be created. This may be problematic for intersection shaders because the rest of the BVH traversal depend on the result of all dispatched intersection tests. This means that a synchronization operation is necessary to wait for the result of the shader invocations, which can be challenging on asynchronous hardware.

Two points of merging the results of the shader calls may be: the SIMD processor 1601, and the traversal circuitry 1605. With respect to the SIMD processor 1601, multiple shaders can synchronize and aggregate their results using standard programming models. One relatively simple way to do this is to use global atomics and aggregate results in a shared data structure in memory, where intersection results of multiple shaders could be stored. Then the last shader can resolve the data structure and call back the traversal circuitry 1605 to continue the traversal.

A more efficient approach may also be implemented which limits the execution of multiple shader invocations to lanes of the same SIMD thread on the SIMD processor 1601. The intersection tests are then locally reduced using SIMD/SIMT reduction operations (rather than relying on global atomics). This implementation may rely on new circuitry within the sorting unit 1608 to let a small batch of shader invocations stay in the same SIMD batch.

The execution of the traversal thread may further be suspended on the traversal circuitry 1605. Using the conventional execution model, when a shader is dispatched during traversal, the traversal thread is terminated and the ray traversal state is saved to memory to allow the execution of other ray spawn commands while the graphics processor core blocks 1601 process the shaders. If the traversal thread is merely suspended, the traversal state does not need to be stored and can wait for each shader result separately. This implementation may include circuitry to avoid deadlocks and provide sufficient hardware utilization.

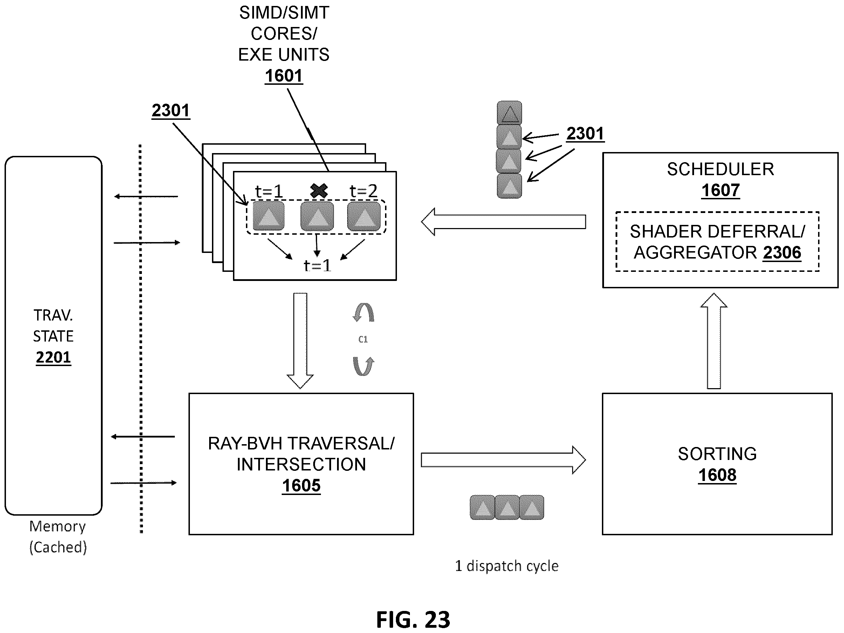

**Figures 23-24** illustrate examples of a deferred model which invokes a single shader invocation on the SIMD cores 1601 with three shaders 2301. When preserved, all intersection tests are evaluated within the same SIMD/SIMT group. Consequently, the nearest intersection can also be computed on the programmable cores 1601.

As mentioned, all or a portion of the shader aggregation and/or deferral may be performed by the traversal/intersection circuitry 1605 and/or the core/graphics core scheduler 1607. **Figure 23** illustrates how shader deferral/aggregator circuitry 2306 within the scheduler 1607 can defer scheduling of shaders associated with a particular SIMD/SIMT thread/lane until a specified triggering event has occurred. Upon detecting the triggering event, the scheduler 1607 dispatches the multiple aggregated shaders in a single SIMD/SIMT batch to the graphics processor core blocks 1601.

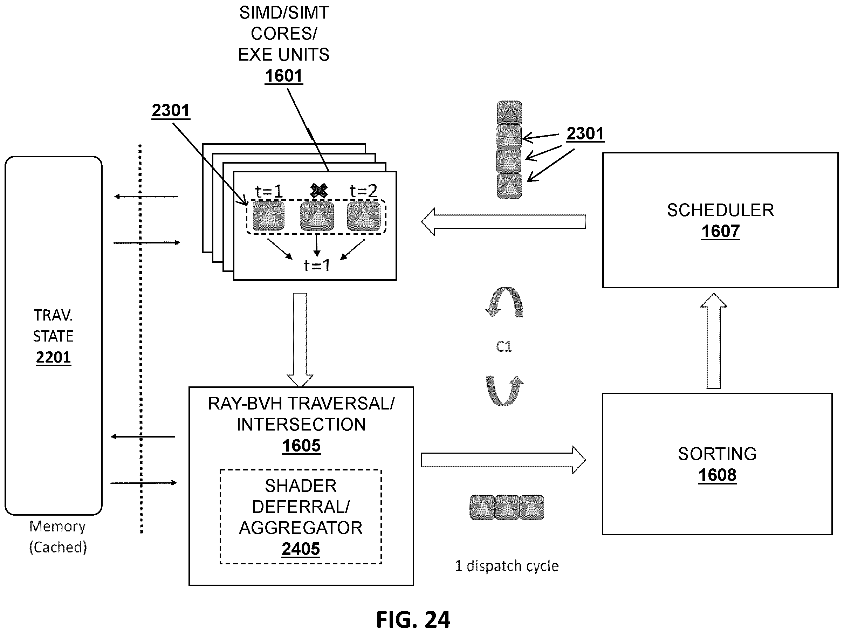

**Figure 24** illustrates how shader deferral/aggregator circuitry 2405 within the traversal/intersection circuitry 1605 can defer scheduling of shaders associated with a particular SIMD thread/lane until a specified triggering event has occurred. Upon detecting the triggering event, the traversal/intersection circuitry 1605 submits the aggregated shaders to the sorting unit 1608 in a single SIMD/SIMT batch.

Note, however, that the shader deferral and aggregation techniques may be implemented within various other components such as the sorting unit 1608 or may be distributed across multiple components. For example, the traversal/intersection circuitry 1605 may perform a first set of shader aggregation operations and the scheduler 1607 may perform a second set of shader aggregation operations to ensure that shaders for a SIMD thread are scheduled efficiently on the graphics processor core blocks 1601.

The "triggering event" to cause the aggregated shaders to be dispatched to the graphics processor core blocks may be a processing event such as a particular number of accumulated shaders or a minimum latency associated with a particular thread. Alternatively, or in addition, the triggering event may be a temporal event such as a certain duration from the deferral of the first shader or a particular number of processor cycles. Other variables such as the current workload on the graphics processor core blocks 1601 and the traversal/intersection unit 1605 may also be evaluated by the scheduler 1607 to determine when to dispatch the SIMD/SIMT batch of shaders.

Different embodiments of the invention may be implemented using different combinations of the above approaches, based on the particular system architecture being used and the requirements of the application.

RAY TRACING INSTRUCTIONS

The ray tracing instructions described below are included in an instruction set architecture (ISA) supported the CPU 1599 and/or GPU 1505. If executed by the CPU, the single instruction multiple data (SIMD) instructions may utilize vector/packed source and destination registers to perform the described operations and may be decoded and executed by a CPU core. If executed by a GPU 1505, the instructions may be executed by graphics cores 1530. For example, any of the graphics processor core blocks 1601 described above may execute the instructions. Alternatively, or in addition, the instructions may be executed by execution circuitry on the ray tracing cores 1550 and/or tensor cores tensor cores 1540.

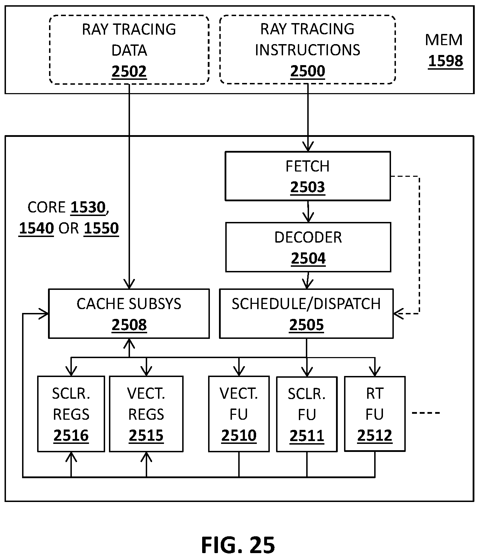

**Figure 25** illustrates an architecture for executing the ray tracing instructions described below. The illustrated architecture may be integrated within one or more of the cores 1530, 1540, 1550 described above (see, e.g., **Figure 15** and associated text) of may be included in a different processor architecture.

In operation, an instruction fetch unit 2503 fetches ray tracing instructions 2500 from memory 1598 and a decoder 2595 decodes the instructions. In one implementation the decoder 2595 decodes instructions to generate executable operations (e.g., microoperations or uops in a microcoded core). Alternatively, some or all of the ray tracing instructions 2500 may be executed without decoding and, as such a decoder 2504 is not required.

In either implementation, a scheduler/dispatcher 2505 schedules and dispatches the instructions (or operations) across a set of functional units (FUs) 2510-2512. The illustrated implementation includes a vector FU 2510 for executing single instruction multiple data (SIMD) instructions which operate concurrently on multiple packed data elements stored in vector registers 2515 and a scalar FU 2511 for operating on scalar values stored in one or more scalar registers 2516. An optional ray tracing FU 2512 may operate on packed data values stored in the vector registers 2515 and/or scalar values stored in the scalar registers 2516. In an implementation without a dedicated FU 2512, the vector FU 2510 and possibly the scalar FU 2511 may perform the ray tracing instructions described below.

The various FUs 2510-2512 access ray tracing data 2502 (e.g., traversal/intersection data) needed to execute the ray tracing instructions 2500 from the vector registers 2515, scalar register 2516 and/or the local cache subsystem 2508 (e.g., a L1 cache). The FUs 2510-2512 may also perform accesses to memory 1598 via load and store operations, and the cache subsystem 2508 may operate independently to cache the data locally.

While the ray tracing instructions may be used to increase performance for ray traversal/intersection and BVH builds, they may also be applicable to other areas such as high performance computing (HPC) and general purpose GPU (GPGPU) implementations.

In the below descriptions, the term double word is sometimes abbreviated dw and unsigned byte is abbreviated ub. In addition, the source and destination registers referred to below (e.g., src0, src1, dest, etc) may refer to vector registers 2515 or in some cases a combination of vector registers 2515 and scalar registers 2516. Typically, if a source or destination value used by an instruction includes packed data elements (e.g., where a source or destination stores N data elements), vector registers 2515 are used. Other values may use scalar registers 2516 or vector registers 2515.

**Dequantize**

One example of the Dequantize instruction "dequantizes" previously quantized values. Byway of example, in a ray tracing implementation, certain BVH subtrees may be quantized to reduce storage and bandwidth requirements. The dequantize instruction may take the form dequantize dest src0 src1 src2 where source register src0 stores N unsigned bytes, source register src1 stores 1 unsigned byte, source register src2 stores 1 floating point value, and destination register dest stores N floating point values. All of these registers may be vector registers 2515. Alternatively, src0 and dest may be vector registers 2515 and src 1 and src2 may be scalar registers 2516.

The following code sequence defines one particular implementation of the dequantize instruction:

```
for (int i = 0; i < SIMD_WIDTH) {

    if (execMask[i]) {

        dst[i] = src2[i] + ldexp(convert_to_float(src0[i]),src1);

    }

}
```

In this example, ldexp multiplies a double precision floating point value by a specified integral power of two (i.e., ldexp(x, exp) = x * 2^{exp}). In the above code, if the execution mask value associated with the current SIMD data element (execMask[i])) is set to 1, then the SIMD data element at location i in src0 is converted to a floating point value and multiplied by the integral power of the value in src1 ($2^{src1\ value}$) and this value is added to the corresponding SIMD data element in src2.

**Selective Min or Max**

A selective min or max instruction may perform either a min or a max operation per lane (i.e., returning the minimum or maximum of a set of values), as indicated by a bit in a bitmask. The bitmask may utilize the vector registers 2515, scalar registers 2516, or a separate set of mask registers (not shown). The following code sequence defines one particular implementation of the min/max instruction: sel_min_max dest src0 src1 src2, where src0 stores N doublewords, src1 stores N doublewords, src2 stores one doubleword, and the destination register stores N doublewords.

The following code sequence defines one particular implementation of the selective min/max instruction:

```
for (int i = 0; i < SIMD_WIDTH) {

        if (execMask[i]) {

        dst[i] = (1 << i) & src2 ? min(src0[i],src1[i]) : max(src0[i],src1[i]);

        }

}
```

In this example, the value of (1 < < i) & src2 (a 1 left-shifted by i ANDed with src2) is used to select either the minimum of the $i^{th}$ data element in src0 and src1 or the maximum of the $i^{th}$ data element in src0 and src1. The operation is performed for the $i^{th}$ data element only if the execution mask value associated with the current SIMD data element (execMask[i])) is set to 1.

### Shuffle Index Instruction

A shuffle index instruction can copy any set of input lanes to the output lanes. For a SIMD width of 32, this instruction can be executed at a lower throughput. This instruction takes the form: shuffle_index dest src0 src1 <optional flag>, where src0 stores N doublewords, src1 stores N unsigned bytes (i.e., the index value), and dest stores N doublewords.

The following code sequence defines one particular implementation of the shuffle index instruction:

```
for (int i = 0; i < SIMD_WIDTH) {
  uint8_t srcLane = src1.index[i];

  if (execMask[i]) {
    bool invalidLane = srcLane < 0 || srcLane >= SIMD_WIDTH ||
    !execMask[srcLaneMod];

    if (FLAG) {
      invalidLane |= flag[srcLaneMod];
    }

    if (invalidLane) {
      dst[i] = src0[i];
    }
    else {
      dst[i] = src0[srcLane];
    }
  }
}
```

In the above code, the index in src1 identifies the current lane. If the $i^{th}$ value in the execution mask is set to 1, then a check is performed to ensure that the source lane is within the range of 0 to the SIMD width. If so, then flag is set (srcLaneMod) and data element i of the destination is set equal to data element i of src0. If the lane is within range (i.e., is valid), then the index value from src1 (srcLane0) is used as an index into src0 (dst[i] = src0[srcLane]).

**Immediate Shuffle Up/Dn/XOR Instruction**

An immediate shuffle instruction may shuffle input data elements/lanes based on an immediate of the instruction. The immediate may specify shifting the input lanes by 1, 2, 4, 8, or 16 positions, based on the value of the immediate. Optionally, an additional scalar source register can be specified as a fill value. When the source lane index is invalid, the fill value (if provided) is stored to the data element location in the destination. If no fill value is provided, the data element location is set to all 0.

A flag register may be used as a source mask. If the flag bit for a source lane is set to 1, the source lane may be marked as invalid and the instruction may proceed.

The following are examples of different implementations of the immediate shuffle instruction:

```
shuffle_<up/dn/xor>_<1/2/4/8/16> dest src0 <optional src1> <optional flag>
shuffle_<up/dn/xor>_<1/2/4/8/16> dest src0 <optional src1> <optional flag>
```

In this implementation, src0 stores N doublewords, src1 stores one doubleword for the fill value (if present), and dest stores N doublewords comprising the result.

The following code sequence defines one particular implementation of the immediate shuffle instruction:

```
for (int i = 0; i < SIMD_WIDTH) {
  int8_t srcLane;
  switch(SHUFFLE_TYPE) {
  case UP:
    srcLane = i - SHIFT;
  case DN:
    srcLane = i + SHIFT;
  case XOR:
    srcLane = i ^ SHIFT;
  }

  if (execMask[i]) {

    bool invalidLane = srcLane < 0 || srcLane >= SIMD_WIDTH ||
    !execMask[srcLane];

    if (FLAG) {
      invalidLane |= flag[srcLane];
    }

    if (invalidLane) {
      if (SRC1)
        dst[i] = src1;
      else
        dst[i] = 0;
    }
    else {
      dst[i] = src0[srcLane];
    }
  }
}
```

Here the input data elements/lanes are shifted by 1, 2, 4, 8, or 16 positions, based on the value of the immediate. The register src1 is an additional scalar source register which is used as a fill value which is stored to the data element location in the destination when the source lane index is invalid. If no fill value is provided and the source lane index is invalid, the data element location in the destination is set to 0s. The flag register (FLAG) is used as a source mask. If the flag bit for a source lane is set to 1, the source lane is marked as invalid and the instruction proceeds as described above.

**Indirect Shuffle Up/Dn/XOR Instruction**

The indirect shuffle instruction has a source operand (src1) that controls the mapping from source lanes to destination lanes. The indirect shuffle instruction may take the form:
shuffle_<up/dn/xor> dest src0 src1 <optional flag>
where src0 stores N doublewords, src1 stores 1 doubleword, and dest stores N doublewords.
The following code sequence defines one particular implementation of the immediate shuffle instruction:

```
for (int i = 0; i < SIMD_WIDTH) {

  int8_t srcLane;

  switch(SHUFFLE_TYPE) {

  case UP:

    srcLane = i - src1;

  case DN:

    srcLane = i + src1;

  case XOR:

    srcLane = i ^ src1;

  }


  if (execMask[i]) {

    bool invalidLane = srcLane < 0 || srcLane >= SIMD_WIDTH ||

  !execMask[srcLane];


    if (FLAG) {

      invalidLane |= flag[srcLane];

    }


    if (invalidLane) {

      dst[i] = 0;

    }

    else {

      dst[i] = src0[srcLane];

    }

  }

}
```

Thus, the indirect shuffle instruction operates in a similar manner to the immediate shuffle instruction described above, but the mapping of source lanes to destination lanes is controlled by the source register src1 rather than the immediate.

**Cross Lane Min/Max Instruction**

A cross lane minimum/maximum instruction may be supported for float and integer data types. The cross lane minimum instruction may take the form lane_min dest src0 and the cross lane maximum instruction may take the form lane_max dest src0, where src0 stores N doublewords and dest stores 1 doubleword.

By way of example, the following code sequence defines one particular implementation of the cross lane minimum:

```
dst = src[0];

for (int i = 1; i < SIMD_WIDTH) {
 if (execMask[i]) {
  dst = min(dst, src[i]);
 }
}
```

In this example, the doubleword value in data element position i of the source register is compared with the data element in the destination register and the minimum of the two values is copied to the destination register. The cross lane maximum instruction operates in substantially the same manner, the only difference being that the maximum of the data element in position i and the destination value is selected.

**Cross Lane Min/Max Index Instruction**

A cross lane minimum index instruction may take the form lane_min_index dest src0 and the cross lane maximum index instruction may take the form lane max_index dest src0, where src0 stores N doublewords and dest stores 1 doubleword.

By way of example, the following code sequence defines one particular implementation of the cross lane minimum index instruction:

```
dst_index = 0;
tmp = src[0]

for (int i = 1; i < SIMD_WIDTH) {

 if (src[i] < tmp && execMask[i])
 {
  tmp = src[i];
  dst_index = i;
 }
}
```

In this example, the destination index is incremented from 0 to SIMD width, spanning the destination register. If the execution mask bit is set, then the data element at position i in the source register is copied to a temporary storage location (tmp) and the destination index is set to data element position i.

**Cross Lane Sorting Network Instruction**

A cross-lane sorting network instruction may sort all N input elements using an N-wide (stable) sorting network, either in ascending order (sortnet_min) or in descending order (sortnet_max). The min/max versions of the instruction may take the forms sortnet_min dest src0 and sortnet_max dest src0, respectivey. In one implementation, src0 and dest store N doublewords. The min/max sorting is performed on the N doublewords of src0, and the ascending ordered elements (for min) or descending ordered elements (for max) are stored in dest in their respective sorted orders. One example of a code sequence defining the instruction is: dst = apply_N_wide_sorting_network_min/max(src0).

**Cross Lane Sorting Network Index Instruction**

A cross-lane sorting network index instruction may sort all N input elements using an N-wide (stable) sorting network but returns the permute index, either in ascending order (sortnet_min) or in descending order (sortnet_max). The min/max versions of the instruction may take the forms sortnet_min_index dest src0 and sortnet_max_index dest src0 where src0 and dest each store N doublewords. One example of a code sequence defining the instruction is dst = apply_N_wide_sorting_network_min/max_index(src0).

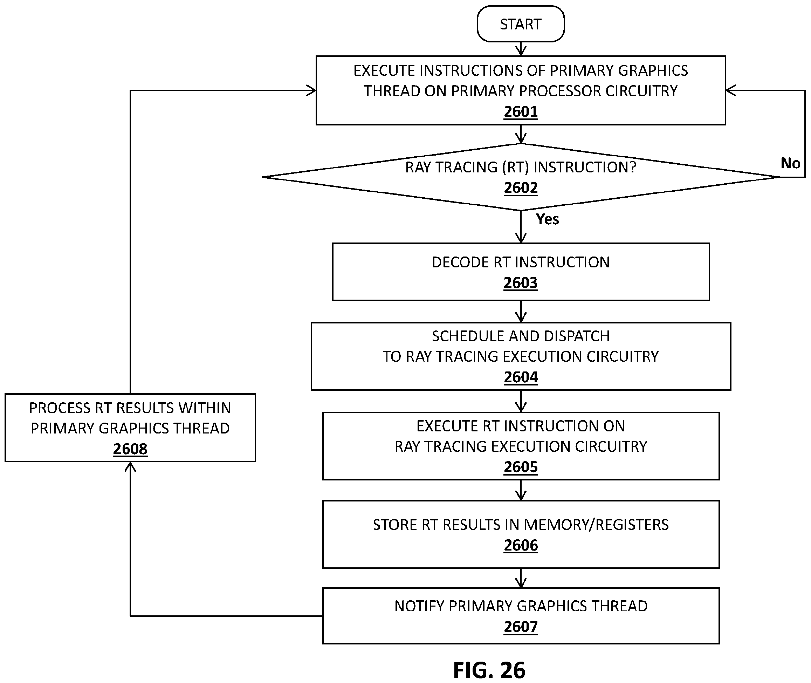

A method for executing any of the above instructions is illustrated in **Figure 26.** The method may be implemented on the specific processor architectures described above, but is not limited to any particular processor or system architecture.

At 2601 instructions of a primary graphics thread are executed on processor cores. This may include, for example, any of the cores described above (e.g., graphics cores 1530). When ray tracing work is reached within the primary graphics thread, determined at 2602, the ray tracing instructions are offloaded to the ray tracing execution circuitry which may be in the form of a functional unit (FU) such as described above with respect to **Figure 25** or which may be in a dedicated ray tracing core 1550 as described with respect to **Figure 15**.

At 2603, the ray tracing instructions are decoded are fetched from memory and, at 2605, the instructions are decoded into executable operations (e.g., in an embodiment which requires a decoder). At 2604 the ray tracing instructions are scheduled and dispatched for execution by ray tracing circuitry. At 2605 the ray tracing instructions are executed by the ray tracing circuitry. For example, the instructions may be dispatched and executed on the FUs described above (e.g., vector FU 2510, ray tracing FU2512, etc) and/or the graphics cores 1530 or ray tracing cores 1550.

When execution is complete for a ray tracing instruction, the results are stored at 2606 (e.g., stored back to the memory 1598) and at 2607 the primary graphics thread is notified. At 2608, the ray tracing results are processed within the context of the primary thread (e.g., read from memory and integrated into graphics rendering results).

In embodiments, the term "engine" or "module" or "logic" may refer to, be part of, or include an application specific integrated circuit (ASIC), an electronic circuit, a processor (shared, dedicated, or group), and/or memory (shared, dedicated, or group) that execute one or more software or firmware programs, a combinational logic circuit, and/or other suitable components that provide the described functionality. In embodiments, an engine, module, or logic may be implemented in firmware, hardware, software, or any combination of firmware, hardware, and software.

APPARATUS AND METHOD FOR ASYNCHRONOUS RAY TRACING

Embodiments of the invention include a combination of fixed function acceleration circuitry and general purpose processing circuitry to perform ray tracing. For example, certain operations related to ray traversal of a bounding volume hierarchy (BVH) and intersection testing may be performed by the fixed function acceleration circuitry, while a plurality of execution circuits execute various forms of ray tracing shaders (e.g., any hit shaders, intersection shaders, miss shaders, etc). One embodiment includes dual high-bandwidth storage banks comprising a plurality of entries for storing rays and corresponding dual stacks for storing BVH nodes. In this embodiment, the traversal circuitry alternates between the dual ray banks and stacks to process a ray on each clock cycle. In addition, one embodiment includes priority selection circuitry/logic which distinguishes between internal nodes, non-internal nodes, and primitives and uses this information to intelligently prioritize processing of the BVH nodes and the primitives bounded by the BVH nodes.

One particular embodiment reduces the high speed memory required for traversal using a short stack to store a limited number of BVH nodes during traversal operations. This embodiment includes stack management circuitry/logic to efficiently push and pop entries to and from the short stack to ensure that the required BVH nodes are available. In addition, traversal operations are tracked by performing updates to a tracking data structure. When the traversal circuitry/logic is paused, it can consult the tracking data structure to begin traversal operations at the same location within the BVH where it left off. and the tracking data maintained in a data structure tracking is performed so that the traversal circuitry/logic can restart.

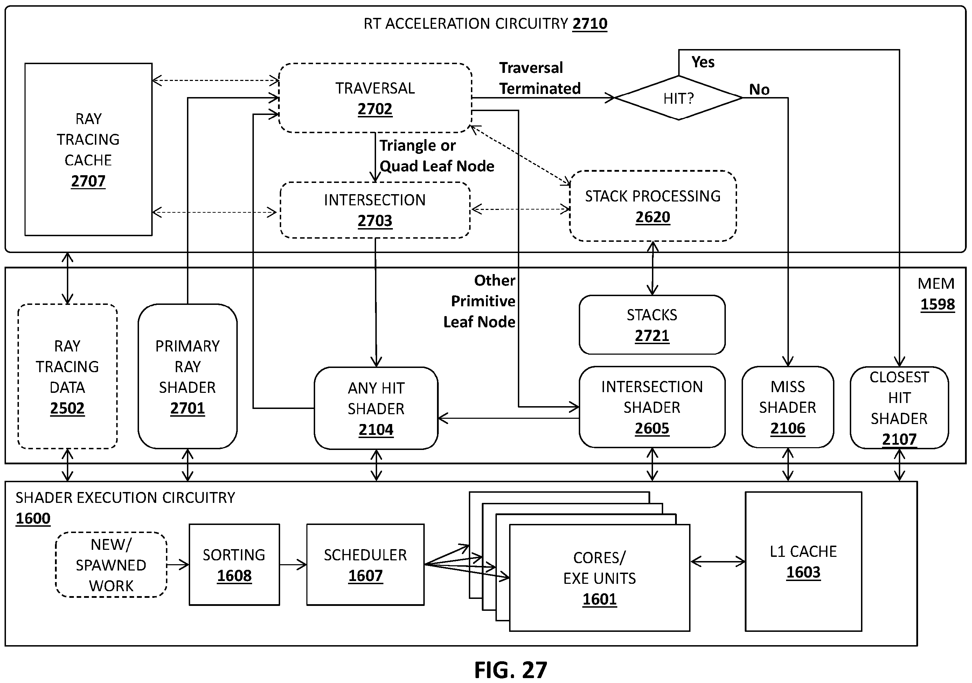

**Figure 27** illustrates one embodiment comprising shader execution circuitry 1600 for executing shader program code and processing associated ray tracing data 2502 (e.g., BVH node data and ray data), ray tracing acceleration circuitry 2710 for performing traversal and intersection operations, and a memory 1598 for storing program code and associated data processed by the RT acceleration circuitry 2710 and shader execution circuitry 1600.

In one embodiment, the shader execution circuitry 1600 includes a plurality of graphics processor core blocks 1601 which execute shader program code to perform various forms of data-parallel operations. For example, in one embodiment, the graphics processor core blocks 1601 can execute a single instruction across multiple lanes, where each instance of the instruction operates on data stored in a different lane. In a SIMT implementation, for example, each instance of the instruction is associated with a different thread. During execution, an L1 cache stores certain ray tracing data for efficient access (e.g., recently or frequently accessed data).

A set of primary rays may be dispatched to the scheduler 1607, which schedules work to shaders executed by the graphics processor core blocks 1601. The graphics processor core blocks 1601 may be ray tracing cores 1526, graphics cores 1530, CPU cores 1599 or other types of circuitry capable of executing shader program code. One or more primary ray shaders 2701 process the primary rays and spawn additional work to be performed by ray tracing acceleration circuitry 2710 and/or the graphics processor core blocks 1601 (e.g., to be executed by one or more child shaders). New work spawned by the primary ray shader 2701 or other shaders executed by the graphics processor core blocks 1601 may be distributed to sorting circuitry 1608 which sorts the rays into groups or bins as described herein (e.g., grouping rays with similar characteristics). The scheduler 1607 then schedules the new work on the graphics processor core blocks 1601.

Other shaders which may be executed include any hit shaders 2114 and closest hit shaders 2107 which process hit results as described above (e.g., identifying any hit or the closest hit for a given ray, respectively). A miss shader 2106 processes ray misses (e.g., where a ray does not intersect the node/primitive). As mentioned, the various shaders can be referenced using a shader record which may include one or more pointers, vendor-specific metadata, and global arguments. In one embodiment, shader records are identified by shader record identifiers (SRI). In one embodiment, each executing instance of a shader is associated with a call stack 4303 which stores arguments passed between a parent shader and child shader. Call stacks 2721 may also store references to continuation functions that are executed when a call returns.

Ray traversal circuitry 2702 traverses each ray through nodes of a BVH, working down the hierarchy of the BVH (e.g., through parent nodes, child nodes, and leaf nodes) to identify nodes/primitives traversed by the ray. Ray-BVH intersection circuitry 2703 performs intersection testing of rays, determining hit points on primitives, and generates results in response to the hits. The traversal circuitry 2702 and intersection circuitry 2703 may retrieve work from the one or more call stacks 2721. Within the ray tracing acceleration circuitry 2710, call stacks 2721 and associated ray tracing data 2502 may be stored within a local ray tracing cache (RTC) 2707 or other local storage device for efficient access by the traversal circuitry 2702 and intersection circuitry 2703. One particular embodiment described below includes high-bandwidth ray banks (see, e.g., Figure 52A).

The ray tracing acceleration circuitry 2710 may be a variant of the various traversal/intersection circuits described herein including ray-BVH traversal/intersection circuit 1605, traversal circuit 2102 and intersection circuit 2103, and ray tracing cores 1550. The ray tracing acceleration circuitry 2710 may be used in place of the ray-BVH traversal/intersection circuit 1605, traversal circuit 2102 and intersection circuit 2103, and ray tracing cores 1550 or any other circuitry/logic for processing BVH stacks and/or performing traversal/intersection. Therefore, the disclosure of any features in combination with the ray-BVH traversal/intersection circuit 1605, traversal circuit 2102 and intersection circuit 2103, and ray tracing cores 1550 described herein also discloses a corresponding combination with the ray tracing acceleration circuitry 2710, but is not limited to such.

APPARATUS AND METHOD FOR DISPLACED MESH COMPRESSION

One embodiment of the invention performs path tracing to render photorealistic images, using ray tracing for visibility queries. In this implementation, rays are cast from a virtual camera and traced through a simulated scene. Random sampling is then performed to incrementally compute a final image. The random sampling in path tracing causes noise to appear in the rendered image which may be removed by allowing more samples to be generated. The samples in this implementation may be color values resulting from a single ray.

In one embodiment, the ray tracing operations used for visibility queries rely on bounding volume hierarchies (BVHs) (or other 3D hierarchical arrangement) generated over the scene primitives (e.g., triangles, quads, etc) in a preprocessing phase. Using a BVH, the renderer can quickly determine the closest intersection point between a ray and a primitive.

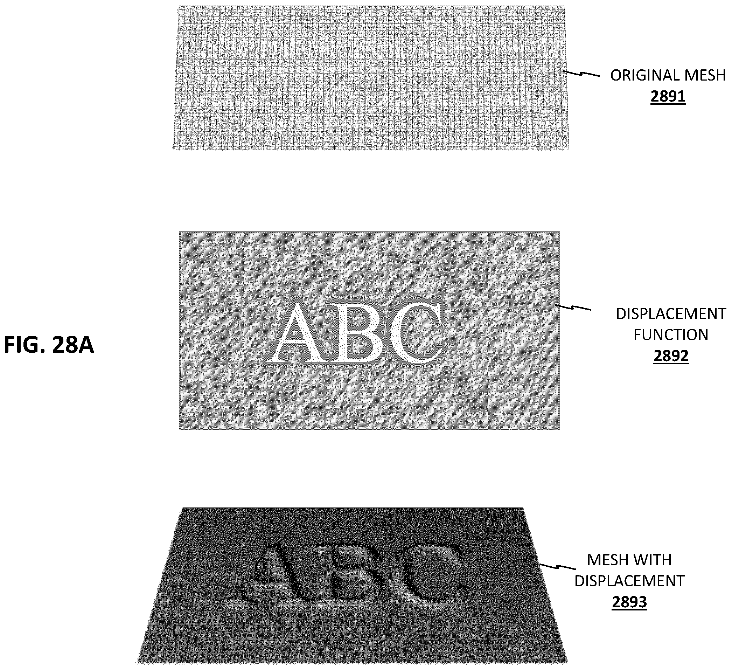

When accelerating these ray queries in hardware (e.g., such as with the traversal/intersection circuitry described herein) memory bandwidth problems may arise due to the amount of fetched triangle data. Fortunately, much of the complexity in modeled scenes is produced by displacement mapping, in which a smooth base surface representation, such as a subdivision surface, is finely tessellated using subdivision rules to generate a tessellated mesh 2891 as shown in **Figure 28A.** A displacement function 2892 is applied to each vertex of the finely tessellated mesh which typically either displaces just along the geometric normal of the base surface or into an arbitrary direction to generate a displacement mesh 2893. The amount of displacement that is added to the surface is limited in range; thus very large displacements from the base surface are infrequent.

One embodiment of the invention effectively compresses displacement-mapped meshes using a lossy watertight compression. In particular, this implementation quantizes the displacement relative to a coarse base mesh, which may match the base subdivision mesh. In one embodiment, the original quads of the base subdivision mesh may be subdivided using bilinear interpolation into a grid of the same accuracy as the displacement mapping.

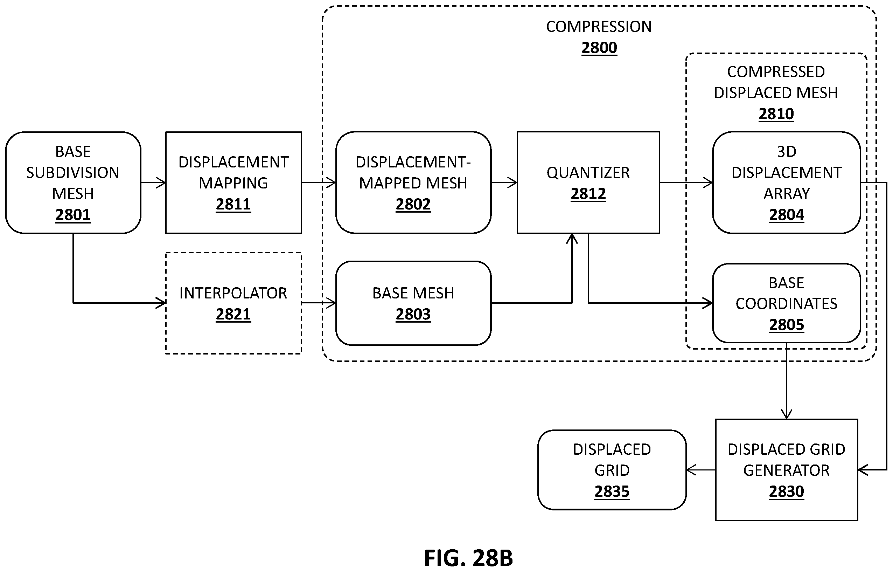

**Figure 28B** illustrates compression circuitry/logic 2800 that compresses a displacement mapped mesh 2802 in accordance with the embodiments described herein to generate a compressed displaced mesh 2810. In the illustrated embodiment, displacement mapping circuitry/logic 2811 generates the displacement-mapped mesh 2802 from a base subdivision surface. **Figure 70A** illustrates an example in which a primitive surface 2900 is finely tessellated to generate the base subdivision surface 2901. A displacement function is applied to the vertices of the base subdivision surface 2901 to create a displacement mapping 2902.

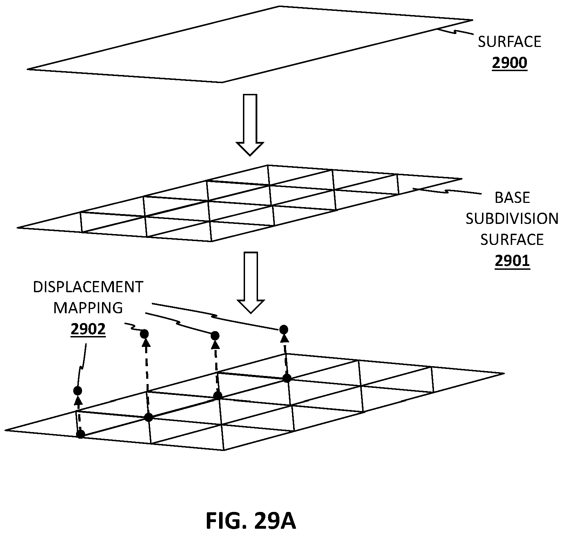

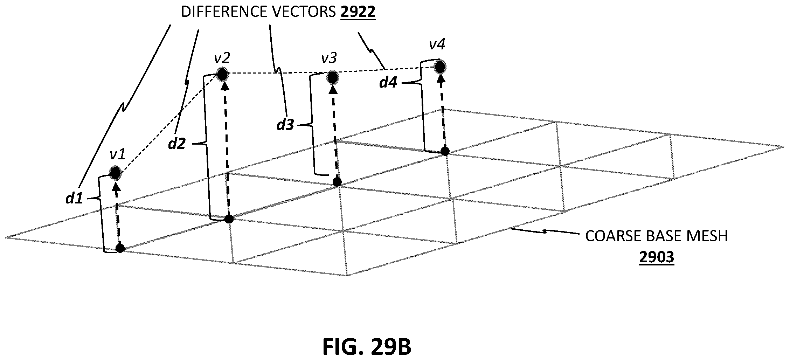

Returning to **Figure 28B**, in one embodiment, a quantizer 2812 quantizes the displacement-mapped mesh 2802 relative to a coarse base mesh 2803 to generate a compressed displaced mesh 2810 comprising a 3D displacement array 2804 and base coordinates 2805 associated with the coarse base mesh 2803. By way of example, and not limitation, **Figure 29B** illustrates a set of difference vectors d1-d4 2922, each associated with a different displaced vertex v1-v4.

In one embodiment, the coarse base mesh 2903 is the base subdivision mesh 6301. Alternatively, an interpolator 2821 subdivides the original quads of the base subdivision mesh using bilinear interpolation into a grid of the same accuracy as the displacement mapping.

The quantizer 2812 determines the difference vectors d1-d4 2922 from each coarse base vertex to a corresponding displaced vertex v1-v4 and combines the difference vectors 2922 in the 3D displacement array 2804. In this manner, the displaced grid is defined using just the coordinates of the quad (base coordinates 2805), and the array of 3D displacement vectors 2804. Note that these 3D displacement vectors 2804 do not necessarily match to the displacement vectors used to calculate the original displacement 2902, as a modelling tool would normally not subdivide the quad using bilinear interpolation and apply more complex subdivision rules to create smooth surfaces to displace.

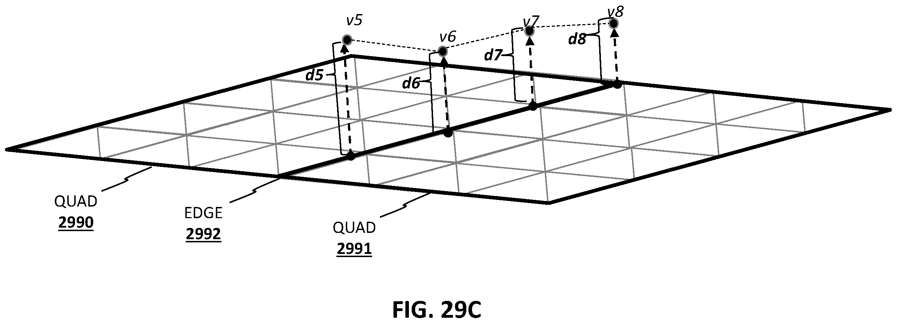

As illustrated in **Figure 29C**, grids of two neighboring quads 2990-2991 will seamlessly stitch together, as along the border 2992, both quads 2990-2991 will evaluate to the exact same vertex locations v5-v8. As the displacements stored along the edge 2992 for neighboring quads 2990-2991 are also identical, the displaced surface will not have any cracks. This property is significant, as this, in particular means that the accuracy of the stored displacements can be reduced arbitrarily for an entire mesh, resulting in a connected displaced mesh of lower quality.

In one embodiment, half-precision floating point numbers are used to encode the displacements (e.g., 16-bit floating point values). Alternatively, or in addition, a shared exponent representation is used that stores just one exponent for all three vertex components and three mantissas. Further, as the extent of the displacement is normally quite well bounded, the displacements of one mesh can be encoded using fixed point coordinates scaled by some constant to obtain sufficient range to encode all displacements. While one embodiment of the invention uses bilinear patches as base primitives, using just flat triangles, another embodiment uses triangle pairs to handle each quad.

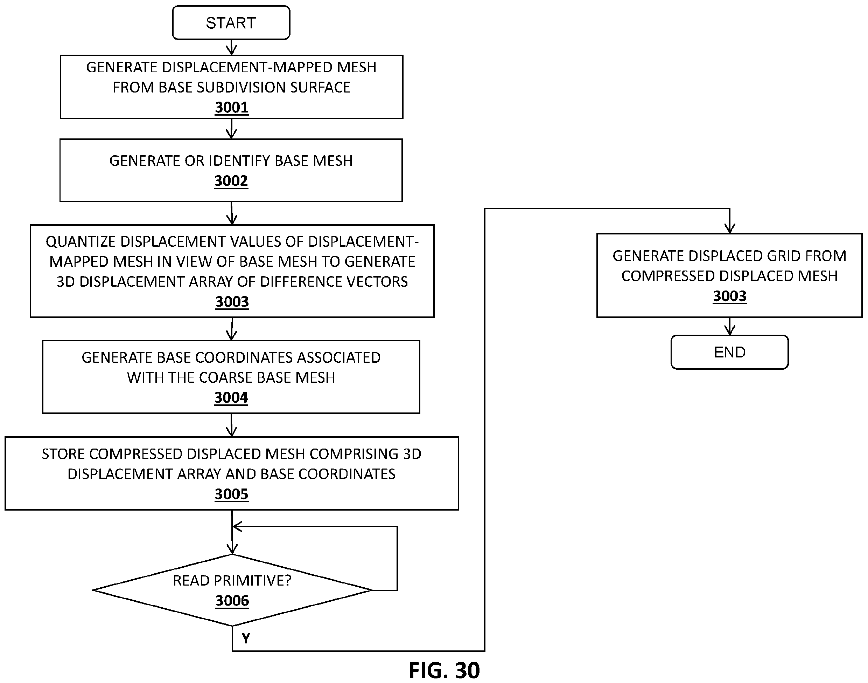

A method in accordance with one embodiment of the invention is illustrated in **Figure 30.** The method may be implemented on the architectures described herein, but is not limited to any particular processor or system architecture.

At 3001 a displacement-mapped mesh is generated from a base subdivision surface. For example, a primitive surface may be finely tessellated to generate the base subdivision surface. At 3002, a base mesh is generated or identified (e.g., such as the base subdivision mesh in one embodiment).

At 3003, a displacement function is applied to the vertices of the base subdivision surface to create a 3D displacement array of difference vectors. At 3004, the base coordinates associated with the base mesh are generated. As mentioned, the base coordinates may be used in combination with the difference vectors to reconstruct the displaced grid. At 3005 the compressed displaced mesh is stored including the 3D displacement array and the base coordinates.

The next time the primitive is read from storage or memory, determined at 6506, the displaced grid is generated from the compressed displaced mesh at 3003. For example, the 3D displacement array may be applied to the base coordinates to reconstruct the displaced mesh.

## ENHANCED LOSSY DISPLACED MESH COMPRESSION AND

## HARDWARE BVH TRAVERSAL/INTERSECTION FOR LOSSY GRID PRIMITIVES

Complex dynamic scenes are challenging for real-time ray tracing implementations. Procedural surfaces, skinning animations, etc., require updates of triangulation and accelerating structures in each frame, even before the first ray is launched.

Instead of just using a bilinear patch as base primitive, one embodiment of the invention extends the approach to support bicubic quad or triangle patches, which need to be evaluated in a watertight manner at the patch borders. In one implementation, a bitfield is added to the lossy grid primitive indicating whether an implicit triangle is valid or not. One embodiment also includes a modified hardware block that extends the existing tessellator to directly produce lossy displaced meshes (e.g., as described above with respect to **Figures 28A-30**), which are then stored out to memory.

In one implementation, a hardware extension to the BVH traversal unit takes a lossy grid primitive as input and dynamically extracts bounding boxes for subsets of implicitly-referenced triangles/quads. The extracted bounding boxes are in a format that is compatible with the BVH traversal unit's ray-box testing circuitry (e.g., the ray/box traversal unit 4130 described below). The result of the ray vs. dynamically generated bounding box intersection tests are passed to the ray-quad/triangle intersection unit 4140 which extracts the relevant triangles contained in the bounding box and intersects those.

One implementation also includes an extension to the lossy grid primitive using indirectly referenced vertex data (similar to other embodiments), thereby reducing memory consumption by sharing vertex data across neighboring grid primitives. In one embodiment, a modified version of the hardware BVH triangle intersector block is made aware of the input being triangles from a lossy displaced mesh, allowing it to reuse edge computation for neighboring triangles. An extension is also added to the lossy displaced mesh compression to handle motion blurred geometry.

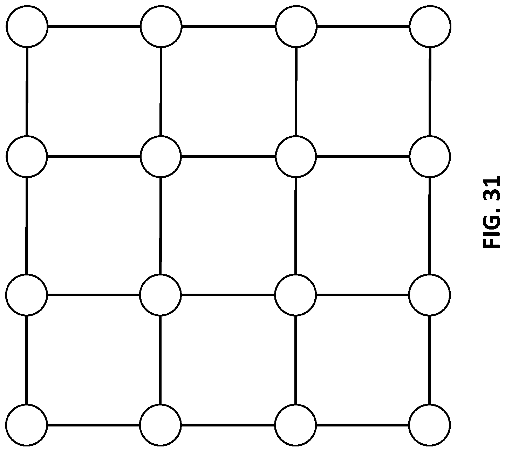

As described above, assuming the input is a grid mesh of arbitrary dimensions, this input grid mesh is first subdivided into smaller subgrids with a fixed resolution, such as 4×4 vertices as illustrated in **Figure 31.**

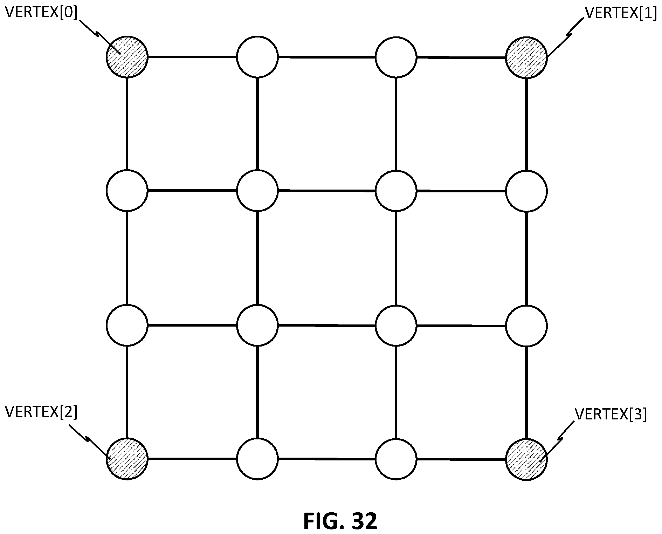

As shown in **Figure 32**, in one embodiment a lossy 4×4 grid primitive structure (GridPrim) is now computed based on the 4×4 input vertices. One implementation operates in accordance with the following code sequence:

```
struct GridPrim
{
    PrimLeafDesc leafDesc;    // 4B
    uint32_t    primIndex;  // 4B
    float3      vertex[4];  // 48B
    struct {
        exp    : 7;  // shared exponent
        disp_x : 5;
        disp_y : 5;
        disp_z : 5;
    }    disp_mag [16];        // 44B
}; // 64 bytes total
```

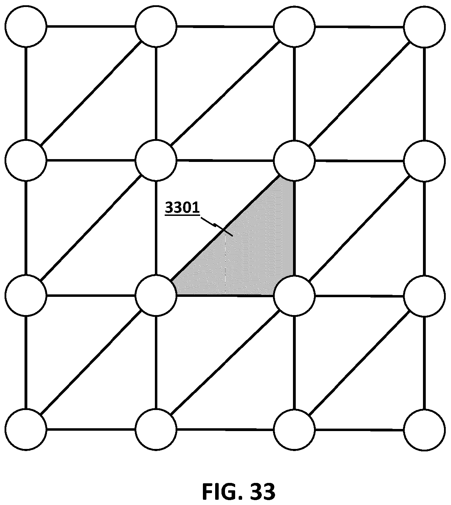

In one implementation, these operations consume 100 bytes: 18 bits from PrimLeafDesc can be reserved to disable individual triangles, e.g., a bit mask of (in top-down, left-right order) 000000000100000000b would disable the highlighted triangle 3301 shown in **Figure 33**.

Implicit triangles may be either 3×3 quads (4×4 vertices) or more triangles. Many of these stitch together forming a mesh. The mask tells us whether we want to intersect the triangle. If a hole is reached, deactivate the individual triangles per the 4x4 grid. This enables greater precision and significantly reduced memory usage: ~5.5 bytes/triangle, which is a very compact representation. In comparison, if a linear array is stored in full precision, each triangle takes 48 and 64 bytes.

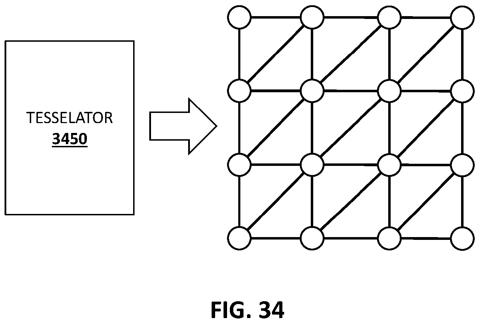

As illustrated in **Figure 34**, a hardware tesselator 3450 tessellates patches to triangles in 4x4 units and stores them out to memory so BVHs can be built over them and they can be ray-traced. In this embodiment, the hardware tessellator 3450 is modified to directly support lossy displaced grid primitives. Instead of generating individual triangles and passing them to the rasterization unit, the hardware tessellation unit 3450 can directly generate lossy grid primitives and store them out to memory.

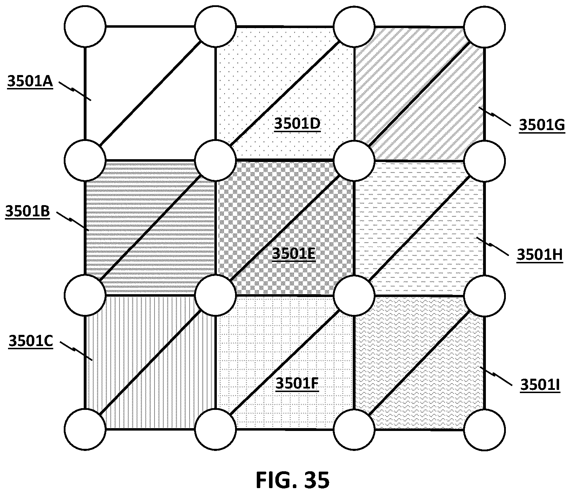

An extension to the hardware BVH traversal unit 3450 that takes a lossy grid primitive as input and on the fly extracts bounding boxes for subsets of implicitly referenced triangles/quads. In the example shown in **Figure 35**, nine bounding boxes 3501A-I, one for each quad, are extracted from the lossy grid and passed as a special nine-wide BVH node to the hardware BVH traversal unit 3450 to perform ray-box intersection.

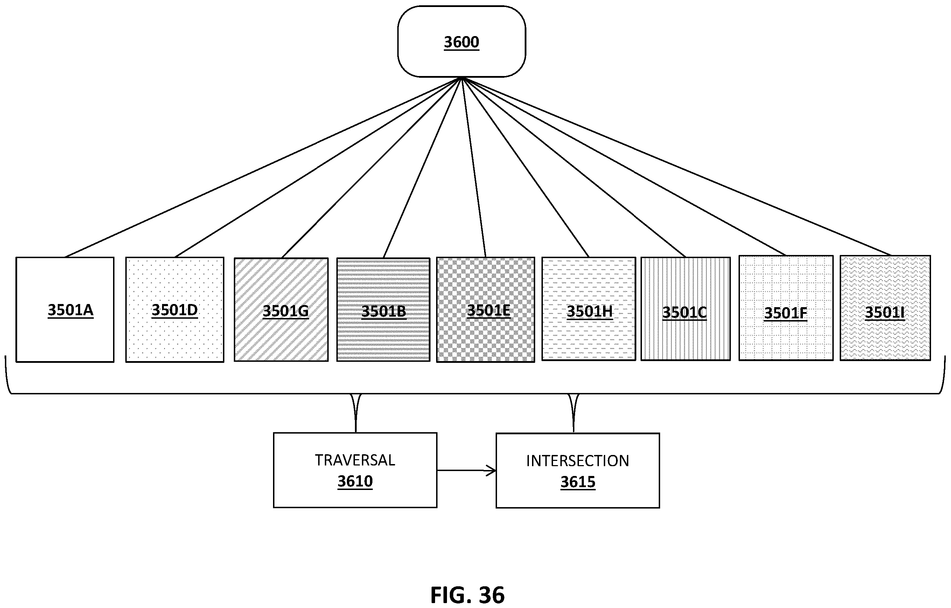

Testing all 18 triangles, one after the other, is very expensive. Referring to **Figure 36,** one embodiment extracts one bounding box 3501A-I for each quad (although this is just an example; any number of triangles could be extracted). When a subset of triangles are read and bounding boxes computed, an N-wide BVH node 3600 is generated - one child node 3501A-I for each quad. This structure is then passed to the hardware traversal unit 3610 which traverses rays through the newly constructed BVH. Thus, in this embodiment, the grid primitive is used an implicit BVH node from which the bounding boxes can be determined. When a bounding box is generated, it is known to contain two triangles. When the hardware traversal unit 3610 determines that a ray traverses one of the bounding boxes 3501A-I, the same structure is passed to the ray-triangle intersector 3615 to determine which bounding box has been hit. That is, if the bounding box has been hit, intersection tests are performed for the triangles contained in the bounding box.

In one embodiment of the invention, these techniques are used as a pre-culling step to the ray-triangle traversal 3610 and intersection units 3610. The intersection test is significantly cheaper when the triangles can be inferred using only the BVH node processing unit. For each intersected bounding box 3501A-I, the two respective triangles are passed to ray-tracing triangle/quad intersection unit 3615 to perform the ray-triangle intersection tests.

The grid primitive and implicit BVH node processing techniques described above may be integrated within or used as a pre-processing step to any of the traversal/intersection units described herein (e.g., such as ray/box traversal unit 4130 described below).

In one embodiment, extensions of such a 4x4 lossy grid primitive are used to support motion-blur processing with two time steps. One example is provided in the following code sequence:

```
            struct GridPrimMB
            {
              PrimLeafDesc leafDesc;   // 4B
              uint32_t    primIndex;  // 4B
              float3      vertex_time0[4];  // 48B
              float3      vertex_time1[4];  // 48B


       // total 32 bytes up to here


       struct {
         exp   : 6;  // shared exponent
         disp_x : 6;
         disp_y : 6;
         disp_z : 6;
       } disp_mag_time0[16],disp_mag_time1[16];        // 2x48B


    }; // 8 + 96 + 96 bytes total
```

Motion blur operations are analogous to simulating shutter time in a camera. In order to ray-trace this effect, moving from *t0* to *t1*, there are two representations of a triangle, one for *t0* and one for *t1*. In one embodiment, an interpolation is performed between them (e.g., interpolate the primitive representations at each of the two time points linearly at .5).

The downside of acceleration structures such as bounding volume hierarchies (BVHs) and k-d trees is that they require both time and memory to be built and stored. One way to reduce this overhead is to employ some sort of compression and/or quantization of the acceleration data structure, which works particularly well for BVHs, which naturally lend to conservative, incremental encoding. On the upside, this can significantly reduce the size of the acceleration structure often halving the size of BVH nodes. On the downside, compressing the BVH nodes also incurs overhead, which may fall into different categories. First, there is the obvious cost of decompressing each BVH node during traversal; second, in particular for hierarchical encoding schemes the need to track parent information slightly complicates the stack operations; and third, conservatively quantizing the bounds means that the bounding boxes are somewhat less tight than uncompressed ones, triggering a measurable increase in the number of nodes and primitives that have to be traversed and intersected, respectively.

Compressing the BVH by local quantization is a known method to reduce its size. An n-wide BVH node contains the axis-aligned bounding boxes (AABBs) of its "n" children in single precision floating point format. Local quantization expresses the "n" children AABBs relative to the AABB of the parent and stores these value in quantized e.g. 8 bit format, thereby reducing the size of BVH node.

Local quantization of the entire BVH introduces multiple overhead factors as (a) the de-quantized AABBs are coarser than the original single precision floating point AABBs, thereby introducing additional traversal and intersection steps for each ray and (b) the de-quantization operation itself is costly which adds and overhead to each ray traversal step. Because of these disadvantages, compressed BVHs are only used in specific application scenarios and not widely adopted.

One embodiment of the invention employs techniques to compress leaf nodes for hair primitives in a bounding-volume hierarchy as described in co-pending application entitled Apparatus and Method for Compressing Leaf Nodes of Bounding Volume Hierarchies, Serial No. 16/236,185, Filed December 28, 2018, which is assigned to the assignee of the present application. In particular, as described in the co-pending application, several groups of oriented primitives are stored together with a parent bounding box, eliminating child pointer storage in the leaf node. An oriented bounding box is then stored for each primitive using 16-bit coordinates that are quantized with respect to a corner of the parent box. Finally, a quantized normal is stored for each primitive group to indicate the orientation. This approach may lead to a significant reduction in the bandwidth and memory footprint for BVH hair primitives.

In some embodiments, BVH nodes are compressed (e.g. for an 8-wide BVH) by storing the parent bounding box and encoding N child bounding boxes (e.g., 8 children) relative to that parent bounding box using less precision. A disadvantage of applying this idea to each node of a BVH is that at every node some decompression overhead is introduced when traversing rays through this structure, which may reduce performance.

To address this issue, one embodiment of the invention uses the compressed nodes only at the lowest level of the BVH. This provides an advantage of the higher BVH levels running at optimal performance (i.e., they are touched as often as boxes are large, but there are very few of them), and compression on the lower/lowest levels is also very effective, as most data of the BVH is in the lowest level(s).

In addition, in one embodiment, quantization is also applied for BVH nodes that store oriented bounding boxes. As discussed below, the operations are somewhat more complicated than for axis-aligned bounding boxes. In one implementation, the use of compressed BVH nodes with oriented bounding boxes is combined with using the compressed nodes only at the lowest level (or lower levels) of the BVH.

Thus, one embodiment improves upon fully-compressed BVHs by introducing a single, dedicated layer of compressed leaf nodes, while using regular, uncompressed BVH nodes for interior nodes. One motivation behind this approach is that almost all of the savings of compression comes from the lowest levels of a BVH (which in particular for 4-wide and 8-wide BVHs make up for the vast majority of all nodes), while most of the overhead comes from interior nodes. Consequently, introducing a single layer of dedicated "compressed leaf nodes" gives almost the same (and in some cases, even better) compression gains as a fully-compressed BVH, while maintaining nearly the same traversal performance as an uncompressed one.

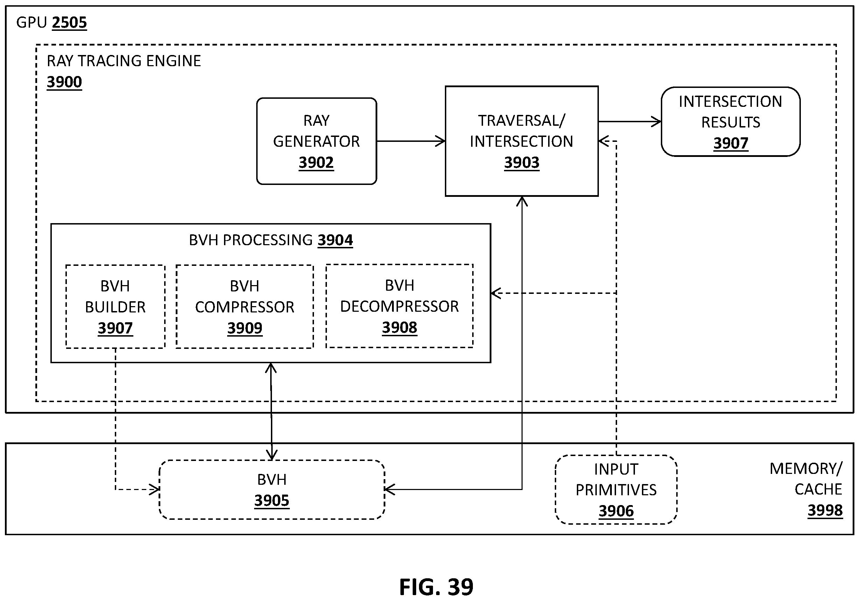

**Figure 39** illustrates an exemplary ray tracing engine 3900 which performs the leaf node compression and decompression operations described herein. In one embodiment, the ray tracing engine 3900 comprises circuitry of one or more of the ray tracing cores described above. Alternatively, the ray tracing engine 3900 may be implemented on the cores of the CPU or on other types of graphics cores (e.g., Gfx cores, tensor cores, etc).

In one embodiment, a ray generator 3902 generates rays which a traversal/intersection unit 3903 traces through a scene comprising a plurality of input primitives 3906. For example, an app such as a virtual reality game may generate streams of commands from which the input primitives 3906 are generated. The traversal/intersection unit 3903 traverses the rays through a BVH 3905 generated by a BVH builder 3907 and identifies hit points where the rays intersect one or more of the primitives 3906. Although illustrated as a single unit, the traversal/intersection unit 3903 may comprise a traversal unit coupled to a distinct intersection unit. These units may be implemented in circuitry, software/commands executed by the GPU or CPU, or any combination thereof.

In one embodiment, BVH processing circuitry/logic 3904 includes a BVH builder 3907 which generates the BVH 3905 as described herein, based on the spatial relationships between primitives 3906 in the scene. In addition, the BVH processing circuitry/logic 3904 includes BVH compressor 3909 and a BVH decompressor 3909 for compressing and decompressing the leaf nodes, respectively, as described herein. The following description will focus on 8-wide BVHs (BVH8) for the purpose of illustration.

As illustrated in **Figure 40**, one embodiment of a single 8-wide BVH node 4000A contains 8 bounding boxes 4001-4008 and 8 (64bit) child pointers/references 4010 pointing to the bounding boxes/leaf data 4001-4008. In one embodiment, BVH compressor 3925 performs an encoding in which the 8 child bounding boxes 4001A-4008A are expressed relative to the parent bounding box 4000A, and quantized to 8-bit uniform values, shown as bounding box leaf data 4001B-4008B. The quantized 8-wide BVH, QBVH8 node 4000B, is encoded by BVH compression 4025 using a start and extent value, stored as two 3-dimensional single precision vectors ($2 \times 12$ bytes). The eight quantized child bounding boxes 4001B-4008B are stored as 2 times 8 bytes for the bounding boxes' lower and upper bounds per dimension (48 bytes total). Note this layout differs from existing implementations as the extent is stored in full precision, which in general provides tighter bounds but requires more space.

In one embodiment, BVH decompressor 3926 decompresses the QBVH8 node 4000B as follows. The decompressed lower bounds in dimension i can be computed by $QBVH8.start_i + (byte\text{-}to\text{-}float)QBVH8.lower_i * QBVH8.extend_i$, which on the CPU 4099 requires five instructions per dimension and box: 2 loads (start,extend), byte-to-int load + upconversion, int-to-float conversion, and one multiply-add. In one embodiment, the decompression is done for all 8 quantized child bounding boxes 4001B-4008B in parallel using SIMD instructions, which adds an overhead of around 10 instructions to the ray-node intersection test, making it at least more than twice as expensive than in the standard uncompressed node case. In one embodiment, these instructions are executed on the cores of the CPU 4099. Alternatively, the a comparable set of instructions are executed by the ray tracing cores 4050.

Without pointers, a QBVH8 node requires 72 bytes while an uncompressed BVH8 node requires 192 bytes, which results in reduction factor of 2.66x. With 8 (64bit) pointers the reduction factor reduces to 1.88x, which makes it necessary to address the storage costs for handling leaf pointers.

In one embodiment, when compressing only the leaf layer of the BVH8 nodes into QBVH8 nodes, all children pointers of the 8 children 4001-4008 will only refer to leaf primitive data. In one implementation, this fact is exploited by storing all referenced primitive data directly after the QBVH8 node 4000B itself, as illustrated in **Figure 40.** This allows for reducing the QBVH8's full 64bit child pointers 4010 to just 8-bit offsets 4022. In one embodiment, if the primitive data is a fixed sized, the offsets 4022 are skipped completely as they can be directly computed from the index of the intersected bounding box and the pointer to the QBVH8 node 4000B itself.

When using a top-down BVH8 builder, compressing just the BVH8 leaf-level requires only slight modifications to the build process. In one embodiment these build modifications are implemented in the BVH builder 3907. During the recursive build phase the BVH builder 3907 tracks whether the current number of primitives is below a certain threshold. In one implementation N × M is the threshold where N refers to the width of the BVH, and M is the number of primitives within a BVH leaf. For a BVH8 node and, for example, four triangles per leaf, the threshold is 32. Hence for all sub-trees with less than 32 primitives, the BVH processing circuitry/logic 3904 will enter a special code path, where it will continue the surface area heuristic (SAH)-based splitting process but creates a single QBVH8 node 4000B. When the QBVH8 node 4000B is finally created, the BVH compressor 3909 then gathers all referenced primitive data and copies it right behind the QBVH8 node.

The actual BVH8 traversal performed by the ray tracing core 4050 or CPU 4099 is only slightly affected by the leaf-level compression. Essentially the leaf-level QBVH8 node 4000B is treated as an extended leaf type (e.g., it is marked as a leaf). This means the regular BVH8 top-down traversal continues until a QBVH node 4000B is reached. At this point, a single ray-QBVH node intersection is executed and for all of its intersected children 4001B-4008B, the respective leaf pointer is reconstructed and regular ray-primitive intersections are executed. Interestingly, ordering of the QBVH's intersected children 4001B-4008B based on intersection distance may not provide any measurable benefit as in the majority of cases only a single child is intersected by the ray anyway.

One embodiment of the leaf-level compression scheme allows even for lossless compression of the actual primitive leaf data by extracting common features. For example, triangles within a compressed-leaf BVH (CLBVH) node are very likely to share vertices/vertex indices and properties like the same objectID. By storing these shared properties only once per CLBVH node and using small local byte-sized indices in the primitives the memory consumption is reduced further.

In one embodiment, the techniques for leveraging common spatially-coherent geometric features within a BVH leaf are used for other more complex primitive types as well. Primitives such as hair segments are likely to share a common direction per-BVH leaf. In one embodiment, the BVH compressor 3909 implements a compression-scheme which takes this common direction property into account to efficiently compress oriented bounding boxes (OBBs) which have been shown to be very useful for bounding long diagonal primitive types.

The leaf-level compressed BVHs described herein introduce BVH node quantization only at the lowest BVH level and therefore allow for additional memory reduction optimizations while preserving the traversal performance of an uncompressed BVH. As only BVH nodes at the lowest level are quantized, all of its children point to leaf data 4001B-4008B which may be stored contiguously in a block of memory or one or more cache line(s) 3998.

The idea can also be applied to hierarchies that use oriented bounding boxes (OBB) which are typically used to speed up rendering of hair primitives. In order to illustrate one particular embodiment, the memory reductions in a typical case of a standard 8-wide BVH over triangles will be evaluated.

The layout of an 8-wide BVH node 4000 is represented in the following core sequence:

```
struct BVH8Node {
      float lowerX[8], upperX[8];
      // 8 x lower and upper bounds in the X dimension
      float lowerY[8], upperY[8];
      // 8 x lower and upper bounds in the Y dimension
      float lowerZ[8], upperZ[8];
      // 8 x lower and upper bounds in the Z dimension
       void *ptr[8];
      // 8 x 64bit pointers to the 8 child nodes or leaf data
};
```

and requires 276 bytes of memory. The layout of a standard 8-wide quantized Node may be defined as:

```
struct QBVH8Node {
      Vec3f start, scale;
       char lowerX[8], upperX[8];
      // 8 x byte quantized lower/upper bounds in the X dimension
       char lowerY[8], upperY[8];
      // 8 x byte quantized lower/upper bounds in the Y dimension
       char lowerZ[8], upperZ[8];
      // 8 x byte quantized lower/upper bounds in the Z dimension
       void *ptr[8];
```

```
        // 8 x 64bit pointers to the 8 child nodes or leaf data
    };
and requires 136 bytes.
```

Because only quantized BVH nodes are used at the leaf level, all children pointers will actually point to leaf data 4001A-4008A. In one embodiment, by storing the quantized node 4000B and all leaf data 4001B-4008B its children point to in a single continuous block of memory 3998, the 8 child pointers in the quantized BVH node 4000B are removed. Saving the child pointers reduces the quantized node layout to:

```
struct QBVH8NodeLeaf {
Vec3f start, scale;
        // start position, extend vector of the parent AABB
         char lowerX[8], upperX[8];
        // 8 x byte quantized lower and upper bounds in the X dimension
         char lowerY[8], upperY[8];
        // 8 x byte quantized lower and upper bounds in the Y dimension
         char lowerZ[8], upperZ[8];
        // 8 x byte quantized lower and upper bounds in the Z dimension
    };
```

which requires just 72 bytes. Due to the continuous layout in the memory/cache 3998, the child pointer of the i-th child can now be simply computed by: childPtr(i) = addr(QBVH8NodeLeaf) + sizeof(QBVH8NodeLeaf) + i * sizeof(LeafDataType).

As the nodes at lowest level of the BVH makes up for more than half of the entire size of the BVH, the leaf-level only compression described herein provide a reduction to 0.5 + 0.5 * 72/256 = .64x of the original size.

In addition, the overhead of having coarser bounds and the cost of decompressing quantized BVH nodes itself only occurs at the BVH leaf level (in contrast to all levels when the entire BVH is quantized). Thus, the often quite significant traversal and intersection overhead due to coarser bounds (introduced by quantization) is largely avoided.

Another benefit of the embodiments of the invention is improved hardware and software prefetching efficiency. This results from the fact that all leaf data is stored in a relatively small continuous block of memory or cache line(s).

Because the geometry at the BVH leaf level is spatially coherent, it is very likely that all primitives which are referenced by a QBVH8NodeLeaf node share common properties/features such as objectID, one or more vertices, etc. Consequently, one embodiment of the invention further reduces storage by removing primitive data duplication. For example, a primitive and associated data may be stored only once per QBVH8NodeLeaf node, thereby reducing memory consumption for leaf data further.

The effective bounding of hair primitives is described below as one example of significant memory reductions realized by exploiting common geometry properties at the BVH leaf level. To accurately bound a hair primitive, which is a long but thin structure oriented in space, a well- known approach is to calculate an oriented bounding box to tightly bound the geometry. First a coordinate space is calculated which is aligned to the hair direction. For example, the z-axis may be determined to point into the hair direction, while the x and y axes are perpendicular to the z-axis. Using this oriented space a standard AABB can now be used to tightly bound the hair primitive. Intersecting a ray with such an oriented bound requires first transforming the ray into the oriented space and then performing a standard ray/box intersection test.

A problem with this approach is its memory usage. The transformation into the oriented space requires 9 floating point values, while storing the bounding box requires an additional 6 floating point values, yielding 60 bytes in total.

In one embodiment of the invention, the BVH compressor 3925 compresses this oriented space and bounding box for multiple hair primitives that are spatially close together. These compressed bounds can then be stored inside the compressed leaf level to tightly bound the hair primitives stored inside the leaf. The following approach is used in one embodiment to compress the oriented bounds. The oriented space can be expressed by thee normalized vectors $v_x$, $v_y$, and $v_z$ that are orthogonal to each other. Transforming a point p into that space works by projecting it onto these axes:

$$p_x \;=\; dot(v_x,\, p)$$

$$p_y \;=\; dot(v_y,\, p)$$

$$p_z \;=\; dot(v_z,\, p)$$

As the vectors $v_x$, $v_y$, and $v_z$ are normalized, their components are in the range [-1,1]. These vectors are thus quantized using 8-bit signed fixed point numbers rather than using 8-bit signed integers and a constant scale. This way quantized $v_x'$, $v_y'$, and $v_y'$ are generated. This approach reduces the memory required to encode the oriented space from 36 bytes (9 floating point values) to only 9 bytes (9 fixed point numbers with 1 byte each).

In one embodiment, memory consumption of the oriented space is reduced further by taking advantage of the fact that all vectors are orthogonal to each other. Thus one only has to store two vectors (e.g., $p_y$' and $p_z$') and can calculate $p_x$' = $cross(p_y', p_z')$, further reducing the required storage to only six bytes.

What remains is quantizing the AABB inside the quantized oriented space. A problem here is that projecting a point p onto a compressed coordinate axis of that space (e.g., by calculating $dot(v_x', p)$) yields values of a potentially large range (as values p are typically encoded as floating point numbers). For that reason one would need to use floating point numbers to encode the bounds, reducing potential savings.

To solve this problem, one embodiment of the invention first transforms the multiple hair primitive into a space, where its coordinates are in the range [0, 1/√3]. This may be done by determining the world space axis aligned bounding box *b* of the multiple hair primitives, and using a transformation T that first translates by *b*.lower to the left, and then scales by *1*/max(*b.size.x*, *b.size.y.b.size.z*) in each coordinate:

$$ T(p) = \frac{1}{\sqrt{3}}(p - b.\,lower)/\max(b.\,size.\,x, b.\,size.\,y, b.\,size.\,z) $$

One embodiment ensures that the geometry after this transformation stays in the range [0, 1/√3] as then a projection of a transformed point onto a quantized vector $p_x$', $p_y$', or $p_z$' stays inside the range [-1,1]. This means the AABB of the curve geometry can be quantized when transformed using T and then transformed into the quantized oriented space. In one embodiment, 8-bit signed fixed point arithmetic is used. However, for precision reasons 16-bit signed fixed point numbers may be used (e.g., encoded using 16 bit signed integers and a constant scale). This reduces the memory requirements to encode the axis-aligned bounding box from 24 bytes (6 floating point values) to only 12 bytes (6 words) plus the offset b.lower (3 floats) and scale (1 float) which are shared for multiple hair primitives.

For example, having 8 hair primitives to bound, this embodiment reduces memory consumption from 8*60 bytes = 480 bytes to only 8*(6+12)+3*4+4 = 160 bytes, which is a reduction by 3x. Intersecting a ray with these quantized oriented bounds works by first transforming the ray using the transformation T, then projecting the ray using quantized $v_x$', $v_y$', and $v_z$'. Finally, the ray is intersected with the quantized AABB.

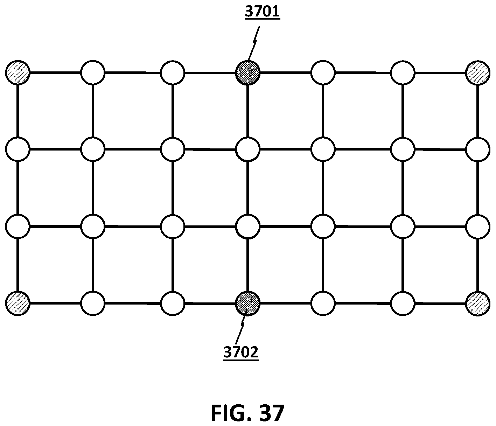

The fat leaves approach described above provides an opportunity for even more compression. Assuming there is an implicit single float3 pointer in the fat BVH leaf, pointing to the shared vertex data of multiple adjacent GridPrims, the vertex in each grid primitive can be indirectly addressed by byte-sized indices ("vertex_index_*"), thereby exploiting vertex sharing. In **Figure 37**, vertices 3701-3702 are shared - and stored in full precision. In this embodiment, the shared vertices 3701-3702 are only stored once and indices are stored which point to an array containing the unique vertices. Thus, instead of 48 bytes only 4 bytes are stored per timestamp. The indices in the following code sequence are used to identify the shared vertices.

```
struct GridPrimMBIndexed
{
        PrimLeafDesc leafDesc;   // 4B
        uint32_t    primIndex;  // 4B
        uint8_t     vertex_index_time0[4];  // 4B
        uint8_t     vertex_index_time1[4];  // 4B
    // total 16 bytes up to here
        struct {
          exp    : 5;  // shared exponent
          disp_x : 5;
          disp_y : 5;
          disp_z : 5;
        } disp_mag_time0[16],disp_mag_time1[16];        // 80 bytes
}; // 96 bytes total
```

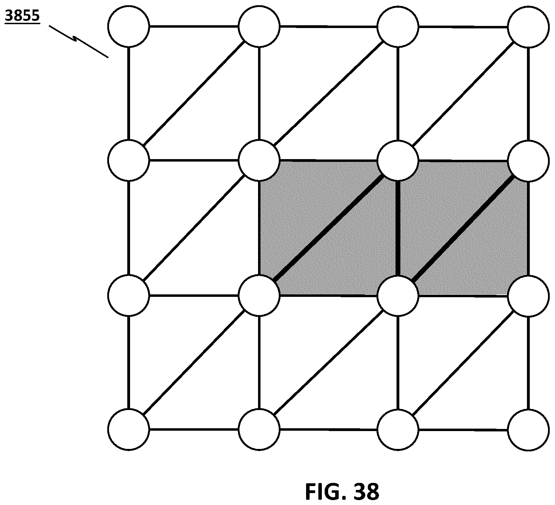

In one embodiment, shared edges of primitives are only evaluated once to conserve processing resources. In **Figure 38**, for example, it is assumed that a bounding box consists of the highlighted quads. Rather than intersecting all triangles individually, one embodiment of the invention performs ray-edge computations once for each of the three shared edges. The results of the three ray-edge computations are thus shared across the four triangles (i.e., only one ray-edge computation is performed for each shared edge). In addition, in one embodiment, the results are stored to on-chip memory (e.g., a scratch memory/cache directly accessible to the intersector unit).

APPARATUS AND METHOD FOR Box-Box TESTING AND

ACCELERATED COLLISION DETECTION FOR RAY TRACING

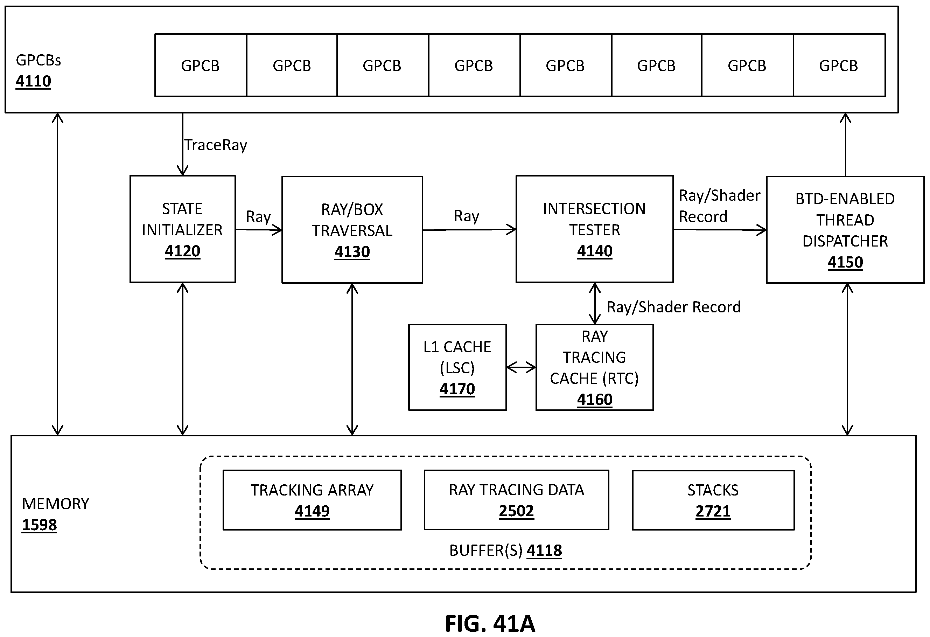

**Figure 41A-B** illustrate a ray tracing architecture in accordance with one embodiment of the invention. A plurality of graphics processor core blocks 4110 execute shaders and other program code related to ray tracing operations. A "Traceray" function executed on one of the graphics processor core blocks 4110 triggers a ray state initializer 4120 to initialize the state required to trace a current ray (identified via a ray ID/descriptor) through a bounding volume hierarchy (BVH) (e.g., stored in a in a stack 5121 in a memory buffer 4118 or other data structure in local or system memory 1598).
In one embodiment, if the Traceray function identifies a ray for which a prior traversal operation was partially completed, then the state initializer 4120 uses the unique ray ID to load the associated ray tracing data 2502 and/or stacks 5121 from one or more buffers 4118 in memory 1598. As mentioned, the memory 1598 may be an on-chip/local memory or cache and/or a system-level memory device.
As discussed with respect to other embodiments, a tracking array 4149 may be maintained to store the traversal progress for each ray. If the current ray has partially traversed a BVH, then the state initializer 4120 may use the tracking array 4149 to determine the BVH level/node at which to restart.
A traversal and raybox testing unit 4130 traverses the ray through the BVH. When a primitive has been identified within a leaf node of the BVH, instance/quad intersection tester 4140 tests the ray for intersection with the primitive (e.g., one or more primitive quads), retrieving an associated ray/shader record from a ray tracing cache 4160 integrated within the cache hierarchy of the graphics processor (shown here coupled to an L1 cache 4170). The instance/quad intersection tester 4140 is sometimes referred to herein simply as an intersection unit (e.g., intersection unit 5103 in **Figure 51).**
The ray/shader record is provided to a thread dispatcher 4150, which dispatches new threads to the graphics processor core blocks 4110 using, at least in part, the bindless thread dispatching techniques described herein. In one embodiment, the ray/box traversal unit 4130 includes the traversal/stack tracking logic 4348 described above, which tracks and stores traversal progress for each ray within the tracking array 4149.
A class of problems in rendering can be mapped to test box collisions with other bounding volumes or boxes (e.g.,

due to overlap). Such box queries can be used to enumerate geometry inside a query bounding box for various applications. For example, box queries can be used to collect photons during photon mapping, enumerate all light sources that may influence a query point (or query region), and/or to search for the closest surface point to some query point. In one embodiment, the box queries operate on the same BVH structure as the ray queries; thus the user can trace rays through some scene, and perform box queries on the same scene.

In one embodiment of the invention, box queries are treated similarly to ray queries with respect to ray tracing hardware/software, with the ray/box traversal unit 4130 performing traversal using box/box operations rather than ray/box operations. In one embodiment, the traversal unit 4130 can use the same set of features for box/box operations as used for ray/box operations including, but not limited to, motion blur, masks, flags, closest hit shaders, any hit shaders, miss shaders, and traversal shaders. One embodiment of the invention adds a bit to each ray tracing message or instruction (e.g., TraceRay as described herein) to indicate that the message/instruction is associated with a BoxQuery operation. In one implementation, BoxQuery is enabled in both synchronous and asynchronous ray tracing modes (e.g., using standard dispatch and bindless thread dispatch operations, respectively).

In one embodiment, once set to the BoxQuery mode via the bit, the ray tracing hardware/software (e.g., traversal unit 4130, instance/quad intersection tester 4140, etc) interprets the data associated with the ray tracing message/instruction as box data (e.g., min/max values in three dimensions). In one embodiment, traversal acceleration structures are generated and maintained as previously described, but a Box is initialized in place of a Ray for each primary StackID.

In one embodiment, hardware instancing is not performed for box queries. However, instancing may be emulated in software using traversal shaders. Thus, when an instance node is reached during a box query, the hardware may process the instance node as a procedural node. As the header of both structures is the same, this means that the hardware will invoke the shader stored in the header of the instance node, which can then continue the point query inside the instance.

In one embodiment, a ray flag is set to indicate that the instance/quad intersection tester 4140 will accept the first hit and end the search (e.g., ACCEPT FIRST_HIT AND_END_SEARCH flag). When this ray flag is not set, the intersected children are entered front to back according to their distance to the query box, similar to ray queries. When searching for the closest geometry to some point, this traversal order significantly improves performance, as is the case with ray queries.

One embodiment of the invention filters out false positive hits using any hit shaders. For example, while hardware may not perform an accurate box/triangle test at the leaf level, it will conservatively report all triangles of a hit leaf node. Further, when the search box is shrunken by an any hit shader, hardware may return primitives of a popped leaf node as a hit, even though the leaf node box may no longer overlap the shrunken query box.

As indicated in **Figure 41A,** a box query may be issued by the graphics processor core blocks 4110 sending a message/command to the hardware (i.e., Traceray). Processing then proceeds as described above - i.e., through the state initializer 4120, the ray/box traversal logic 4130, the instance/quad intersection tester 4140, and the bindless thread dispatcher 4150.

In one embodiment, the box query re-uses the MemRay data layout as used for ray queries, by storing the lower bounds of the query box in the same position as the ray origin, the upper bounds in the same position as the ray direction, and a query radius into the far value.

```
struct MemBox
{
    // 32 Bytes (semantics changed)
    Vec3f lower;       // the lower bounds of the query box
    Vec3f upper;       // the upper bounds of the query box
    float unused;
    float radius;      // additional extension of the query box (L0 norm)


    // 32 Bytes (identical to standard MemRay)
};
```

Using this MemBox layout, the hardware uses the box [lower-radius, upper+radius] to perform the query. Therefore, the stored bounds are extended in each dimension by some radius in L0 norm. This query radius can be useful to easily shrink the search area, e.g. for closest point searches.

As the MemBox layout just reuses the ray origin, ray direction, and $T_{far}$ members of the MemRay layout, data management in hardware does not need to be altered for ray queries. Rather, the data is stored in the internal storage (e.g., the ray tracing cache 4160 and L1 cache 4170) like the ray data, and will just be interpreted differently for box/box tests.

In one embodiment, the following operations are performed by the ray/state initialization unit 4120 and ray/box traversal unit 4130. The additional bit "BoxQueryEnable" from the TraceRay Message is pipelined in the state initializer 4120 (affecting its compaction across messages), providing an indication of the BoxQueryEnable setting to each ray/box traversal unit 4130.

The ray/box traversal unit 4130 stores "BoxQueryEnable" with each ray, sending this bit as a tag with the initial Ray load request. When the requested Ray data is returned from the memory interface, with BoxQueryEnable set, reciprocal computation is bypassed and instead a different configuration is loaded for all components in the RayStore (i.e., in accordance with a box rather than a ray).

The ray/box traversal unit 4130 pipelines the BoxQueryEnable bit to the underlying testing logic. In one embodiment, the raybox data path is modified in accordance with the following configuration settings. If BoxQueryEnable == 1, the box's plane is not changed as it is change based on the sign of the x, y and z components of the ray's direction. Checks performed for the ray which are unnecessary for the raybox are bypassed. For example, it is assumed that the querying box has no INF or NANs so these checks are bypassed in the data path.

In one embodiment, before processing by the hit-determination logic, another add operation is performed to determine the value lower + radius (basically the t-value from the hit) and upper - radius. In addition, upon hitting an "Instance Node" (in a hardware instancing implementation), it does not compute any transformation but instead launches an intersection shader using a shader ID in the instance node.

In one embodiment, when BoxQueryEnable is set, the ray/box traversal unit 4130 does not perform the NULL shader lookup for any hit shader. In addition, when BoxQueryEnable is set, when a valid node is of the QUAD, MESHLET type, the ray/box traversal unit 4130 invokes an intersection shader just as it would invoke an ANY HIT SHADER after updating the potential hit information in memory.

In one embodiment, a separate set of the various components illustrated in **Figure 41A** are provided in each multi-core group 1500A (e.g., within the ray tracing cores 1550). In this implementation, each multi-core group 1500A can operate in parallel on a different set of ray data and/or box data to perform traversal and intersection operations as described herein.

APPARATUS AND METHOD FOR MESHLET

COMPRESSION AND DECOMPRESSION FOR RAY TRACING

As described above, a "meshlet" is a subset of a mesh created through geometry partitioning which includes some number of vertices (e.g., 16, 32, 64, 256, etc) based on the number of associated attributes. Meshlets may be designed to share as many vertices as possible to allow for vertex re-use during rendering. This partitioning may be pre-computed to avoid runtime processing or may be performed dynamically at runtime each time a mesh is drawn.

One embodiment of the invention performs meshlet compression to reduce the storage requirements for the bottom level acceleration structures (BLASs). This embodiment takes advantage of the fact that a meshet represents a small piece of a larger mesh with similar vertices, to allow efficient compression within a 128B block of data. Note, however, that the underlying principles of the invention are not limited to any particular block size.

Meshlet compression may be performed at the time the corresponding bounding volume hierarchy (BVH) is built and decompressed at the BVH consumption point (e.g., by the ray tracing hardware block). In certain embodiments described below, meshlet decompression is performed between the L1 cache (sometimes "LSC Unit") and the ray tracing cache (sometimes "RTC Unit"). As described herein, the ray tracing cache is a high speed local cache used by the ray traversal/intersection hardware.

In one embodiment, meshlet compression is accelerated in hardware. For example, if the graphics processor core block path supports decompression (e.g., potentially to support traversal shader execution), meshlet decompression may be integrated in the common path out of the L1 cache.

In one embodiment, a message is used to initiate meshlet compression to 128B blocks in memory. For example, a 4 X 64B message input may be compressed to a 128B block output to the shader. In this implementation, an additional node type is added in the BVH to indicate association with a compressed meshlet.

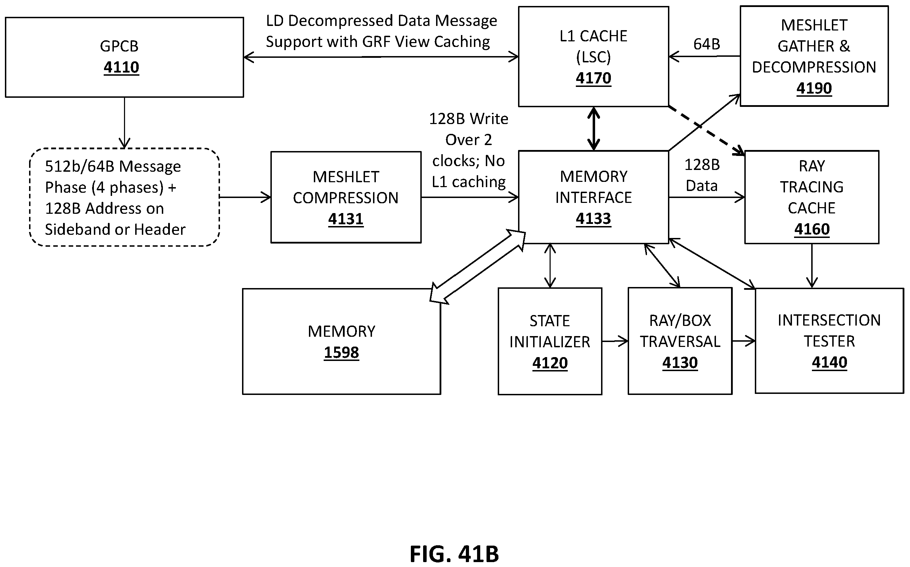

**Figure 41B** illustrates one particular implementation for meshlet compression including a meshlet compression block (RTMC) 4230 and a meshlet decompression block (RTMD) 4290 integrated within the ray tracing cluster. Meshlet compression 4230 is invoked when a new message is transmitted from a graphics processor core block 4110 executing a shader to the ray tracing cluster (e.g., within a ray tracing core 1550). In one embodiment, the message includes four 64B phases and a 128B write address. The message from the graphics core 4110 instructs the meshlet compression block 4131 where to locate the vertices and related meshet data in local memory 1598 (and/or system memory depending on the implementation). The meshlet compression block 4131 then performs meshlet compression as described herein. The compressed meshlet data may then be stored in the local memory 1598 and/or ray tracing cache 4160 via the memory interface 4133 and accessed by the instance/quad intersection tester 4140 and/or a traversal/intersection shader.

In **Figure 41B,** meshlet gather and decompression block 4190 may gather the compressed data for a meshlet and decompress the data into multiple 64B blocks. In one implementation, only decompressed meshlet data is stored within the L1 cache 4170. In one embodiment, meshlet decompression is activated while fetching the BVH node data based on the node-type (e.g., leaf node, compressed) and primitive-ID. The traversal shader can also access the compressed meshlet using the same semantics as the rest of the ray tracing implementation.

In one embodiment, the meshlet compression block 4131 accepts an array of input triangles from an graphics core 4110 and produces a compressed 128B meshlet leaf structure. A pair of consecutive triangles in this structure form a quad. In one implementation, the graphics core message includes up to 14 vertices and triangles as indicated in the code sequence below. The compressed meshlet is written to memory via memory interface 4133 at the address provided in the message.

In one embodiment, the shader computes the bit-budget for the set of meshlets and therefore the address is provided such that footprint compression is possible. These messages are initiated only for compressible meshlets.

```
struct CompressMeshletMsg {

   uint64_t   address;      // Header: 128B aligned destination address for the
   meshlet
```

```
float       vert_x[14];       // up to 14 vertex coordinates
uint32_t    vert_x_bits;      // max vertex bits
uint32_t    numPrims;          // Number of triangles (always even for quads)
float       vert_y[14];
uint32_t    vert_y_bits;      // max vertex bits
uint32_t    numIdx;            // Number of indices


float       vert_z[14];
uint32_t    vert_z_bits;      // max vertex bits
uint32_t    numPrimIDBits;


int32_t     primID[14];       // primIDs
PrimLeafDesc primLeafDesc;


struct {
  int8_t idx_x;
  int8_t idx_y;
  int8_t idx_z;
  int8_t last;                 // 1 if triangle is last in leaf, 0 otherwise
} index[14];                   // vertex indices


int32_t pad0;
int32_t pad1;
}
```

In one embodiment, the meshlet decompression block 4190 decompresses two consecutive quads (128B) from a 128B meshlet and stores the decompressed data in the L1 cache 4170. The tags in the L1 cache 4170 track the index of each decompressed quad (including the triangle index) and the meshlet address. The ray tracing cache 4160 as well as an graphics core 4110 can fetch a 64B decompressed quad from the L1 cache 4170. In one embodiment, an graphics core 4110 fetches a decompressed quad by issuing a MeshletQuadFetch message to the L1 cache 4160 as shown below. Separate messages may be issued for fetching the first 32 bytes and the last 32 bytes of the quad.

Shaders can access triangle vertices from the quad structure as shown below. In one embodiment, the "if' statements are replaced by "sel" instructions.

*// Assuming vertex i is a constant determined by the compiler*

```
float3 getVertexi(Quad& q, int triID, int vertexID) {
    if (triID == 0)
        return quad.vi;
    else if (i == j0)
        return quad.v0;
    else if (i == j1)
        return quad.v1;
    else if (i == j2)
        return quad.v2;
}
```

In one embodiment, The ray tracing cache 4160 can fetch a decompressed quad directly from the L1 cache 4170 bank by providing the meshlet address and quad index.

```
GetQuadData {
    uint1_t  msb; // MS 32B or LS 32B
    uint4_t  triangle_idx; // index of the triangle inside the meshlet. always even for quads.
    uint64_t meshlet_addr;
}
```

Meshlet Compression Process

After allocating bits for a fixed overhead such as geometric properties (e.g., flags and masks), data of the meshlet is added to the compressed block while computing the remaining bit-budget based on deltas on *(pos.x, pos.y, pos.z)* compared to *(base.x, base.y, base.z)* where the base values comprise the position of the first vertex in the list. Similarly prim-ID deltas may be computed as well. Since the delta is compared to the first vertex, it is cheaper to decompress with low latency. The base position and primIDs are part of the constant overhead in the data structure along with the width of the delta bits. For remaining vertices of an even number triangles, position deltas and prim-ID deltas are stored on different 64B blocks in order to pack them in parallel.

Using these techniques, the BVH build operation consumes lower bandwidth to memory upon writing out the compressed data via the memory interface 4133. In addition, in one embodiment, storing the compressed meshlet in the L3 cache allows for storage of more BVH data with the same L3 cache size. In one working implementation, more than 50% meshlets are compressed 2:1. While using a BVH with compressed meshlets, bandwidth savings at the memory results in power savings.

APPARATUS AND METHOD FOR BINDLESS THREAD DISPATCHING AND WORKGROUP/THREAD PREEMPTION IN A COMPUTE AND RAY TRACING PIPELINE

As described above, bindless thread dispatch (BTD) is a way of solving the SIMD divergence issue for Ray Tracing in implementations which do not support shared local memory (SLM) or memory barriers. Embodiments of the invention include support for generalized BTD which can be used to address SIMD divergence for various compute models. In one embodiment, any compute dispatch with a thread group barrier and SLM can spawn a bindless child thread and all of the threads can be regrouped and dispatched via BTD to improve efficiency. In one implementation, one bindless child thread is permitted at a time per parent and the originating threads are permitted to share their SLM space with the bindless child threads. Both SLM and barriers are released only when finally converged parents terminate (i.e., perform EOTs). One particular embodiment allows for amplification within callable mode allowing tree traversal cases with more than one child being spawned.

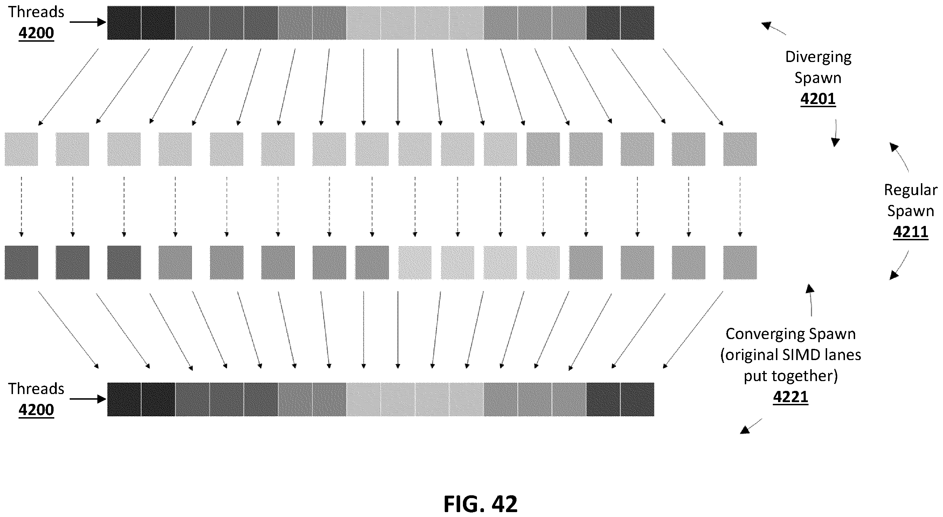

**Figure 42** graphically illustrates an initial set of threads 4200 which may be processed synchronously by the SIMD pipeline. For example, the threads 4200 may be dispatched an executed synchronously as a workgroup. In this embodiment, however, the initial set of synchronous threads 4200 may generate a plurality of diverging spawn threads 4201 which may produce other spawn threads 4211 within the asynchronous ray tracing architectures described herein. Eventually, converging spawn threads 4221 return to the original set of threads 4200 which may then continue synchronous execution, restoring the context as needed in accordance with the tracking array 4149.

In one embodiment, a bindless thread dispatch (BTD) function supports SIMD16 and SIMD32 modes, variable general purpose register (GPR) usage, shared local memory (SLM), and BTD barriers by persisting through the resumption of the parent thread following execution and completion (post-diverging and then converging spawn). One embodiment of the invention includes a hardware-managed implementation to resume the parent threads and a software-managed dereference of the SLM and barrier resources.

In one embodiment of the invention, the following terms have the following meanings:

Callable Mode: Threads that are spawned by bindless thread dispatch are in "Callable Mode." These threads can access the inherited shared local memory space and can optionally spawn a thread per thread in the callable mode. In this mode, threads do not have access to the workgroup-level barrier.

Workgroup (WG) Mode: When threads are executing in the same manner with constituent SIMD lanes as dispatched by the standard thread dispatch, they are defined to be in the workgroup mode. In this mode, threads have access to workgroup-level barriers as well as shared local memory. In one embodiment, the thread dispatch is initiated in response to a "compute walker" command, which initiates a compute-only context.

Ordinary Spawn: Also referred to as regular spawn threads 4211 **(Figure 42),** ordinary spawn are initiated whenever one callable invokes another. Such spawned threads are considered in the callable mode.

Diverging Spawn: As shown in **Figure 42,** diverging spawn threads 4201 are triggered when a thread transitions from workgroup mode to callable mode. A divergent spawn's arguments are the SIMD width and fixed function thread ID (FFTID), which are subgroup-uniform.

Converging Spawn: Converging spawn threads 4221 are executed when a thread transitions from callable mode back to workgroup mode. A converging spawn's arguments are a per-lane FFTID, and a mask indicating whether or not the lane's stack is empty. This mask must be computed dynamically by checking the value of the per-lane stack pointer at the return site. The compiler must compute this mask because these callable threads may invoke each other recursively. Lanes in a converging spawn which do not have the convergence bit set will behave like ordinary spawns.

Bindless thread dispatch solves the SIMD divergence issue for ray tracing in some implementations which do not allow shared local memory or barrier operations. In addition, in one embodiment of the invention, BTD is used to address SIMD divergence using a variety of compute models. In particular, any compute dispatch with a thread group barrier and shared local memory can spawn bindless child threads (e.g., one child thread at a time per parent) and all the same threads can be regrouped and dispatched by BTD for better efficiency. This embodiment allows the originating threads to share their shared local memory space with their child threads. The shared local memory allocations and barriers are released only when finally converged parents terminate (as indicated by end of thread (EOT) indicators). One embodiment of the invention also provides for amplification within callable mode, allowing tree traversal cases with more than one child being spawned.

Although not so limited, one embodiment of the invention is implemented on a system where no support for amplification is provided by any SIMD lane (i.e., allowing only a single outstanding SIMD lane in the form of diverged or converged spawn thread). In addition, in one implementation, the 32b of (FFTID, BARRIER_ID, SLM_ID) is sent to the BTD-enabled dispatcher 4150 upon dispatching a thread. In one embodiment, all these spaces are freed up prior to launching the threads and sending this information to the bindless thread dispatcher 4150. Only a single context is active at a time in one implementation. Therefore, a rogue kernel even after tempering FFTID cannot access the address space of the other context.

In one embodiment, if StackID allocation is enabled, shared local memory and barriers will no longer be dereferenced when a thread terminates. Instead, they are only dereferenced if all associated StackIDs have been released when the thread terminates. One embodiment prevents fixed-function thread ID (FFTID) leaks by ensuring that StackIDs are released properly.

In one embodiment, barrier messages are specified to take a barrier ID explicitly from the sending thread. This is necessary to enable barrier/SLM usage after a bindless thread dispatch call.

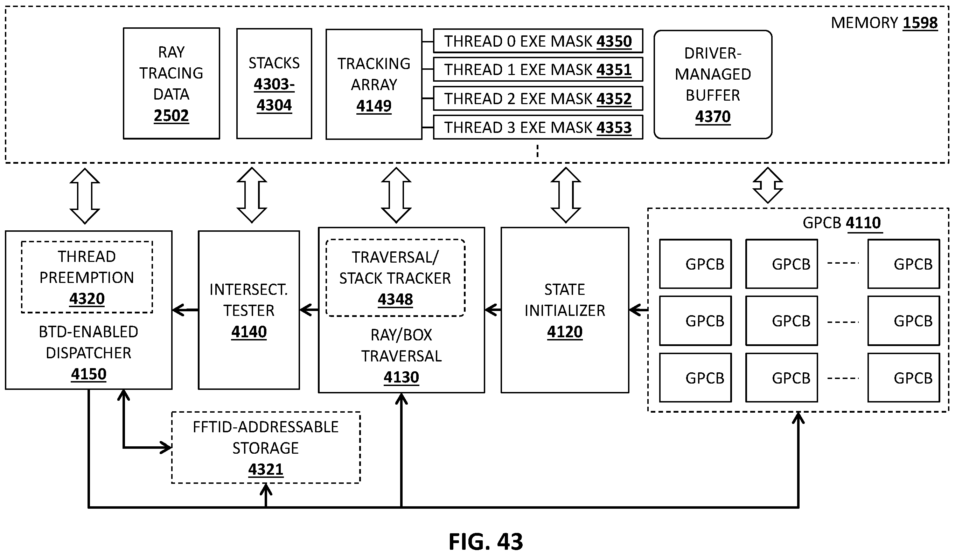

**Figure 43** illustrates one embodiment of an architecture for performing bindless thread dispatching and thread/workgroup preemption as described herein. The graphics processor core blocks 4110 of this embodiment support direct manipulation of the thread execution mask 4350-4353 and each BTD spawn message supports FFTID reference counting for re-spawning of a parent thread following completion of converging spawn 4221. Thus, the ray tracing circuitry described herein supports additional message variants for BTD spawn and TraceRay messages. In one embodiment, the BTD-enabled dispatcher 4150 maintains a per-FFTID (as assigned by thread dispatch) count of original SIMD lanes on diverging spawn threads 4201 and counts down for converging spawn threads 4221 to launch the resumption of the parent threads 4200.

Various events may be counted during execution including, but not limited to, regular spawn 4211 executions; diverging spawn executions 4201; converging spawn events 4221; a FFTID counter reaching a minimum threshold (e.g., 0); and loads performed for (FFTID, BARRIER_ID, SLM_ID).

In one embodiment, shared local memory (SLM) and barrier allocation are allowed with BTD-enabled threads (i.e., to honor ThreadGroup semantics). The BTD-enabled thread dispatcher 4150 decouples the FFTID release and the barrier ID release from the end of thread (EOT) indications (e.g., via specific messages).

In one embodiment, in order to support callable shaders from compute threads, a driver-managed buffer 4370 is used to store workgroup information across the bindless thread dispatches. In one particular implementation, the driver-managed buffer 4370 includes a plurality of entries, with each entry associated with a different FFTID.

In one embodiment, within the state initializer 4120, two bits are allocated to indicate the pipeline spawn type which is factored in for message compaction. For diverging messages, the state initializer 4120 also factors in the FFTID from the message and pipelines with each SIMD lane to the ray/box traversal block 4130 or bindless thread dispatcher 4150. For converging spawn 4221, there is an FFTID for each SIMD lane in the message and pipeline FFTID with each SIMD lane for the ray/box traversal unit 4130 or bindless thread dispatcher 4150. In one embodiment, the ray/box traversal unit 4130 also pipelines the spawn type, including converging spawn 4221. In particular, in one embodiment, the ray/box traversal unit 4130 pipelines and stores the FFTID with every ray converging spawn 4221 for TraceRay messages.

In one embodiment, the thread dispatcher 4150 has a dedicated interface to provide the following data structure in preparation for dispatching a new thread with the bindless thread dispatch enable bit set:

```
Struct tsl_sts_inf { // non-stallable interface
      Logic[8]  FFTID;
      Logic[8]  BARRIER_ID;
      Logic[8]  SLM_ID;
      Logic[8]  count valid simd_lanes;
}
```

The bindless thread dispatcher 4150 also processes the end of thread (EOT) message with three additional bits : Release_FFTID, Release_BARRIER_ID, Release_SLM_ID. As mentioned, the end of thread (EOT) message does not necessarily release/dereference all the allocations associated with the IDs, but only the ones with a release bit set. A typical use-case is when a diverging spawn 4201 is initiated, the spawning thread produces an EOT message but the release bit is not set. Its continuation after the converging spawn 4221 will produce another EOT message, but this time with the release bit set. Only at this stage will all the per-thread resources be recycled.

In one embodiment, the bindless thread dispatcher 4150 implements a new interface to load the FFTID, BARRIER_ID, SLM_ID and the lane count. It stores all of this information in an FFTID-addressable storage 4321 that is a certain number of entries deep (max_fftid, 144 entries deep in one embodiment). In one implementation, the BTD-enabled dispatcher 4150, in response to any regular spawn 4211 or diverging spawn 4201, uses this identifying information for each SIMD lane, performs queries to the FFTID-addressable storage 4321 on a per-FFTID basis, and stores the thread data in the sorting buffer as described above (see, e.g., content addressable memory 1801 in Figure 18). This results in storing an additional amount of data (e.g., 24bits) in the sorting buffer 1801 per SIMD lane.

Upon receiving a converging spawn message, for every SIMD lane from the state initializer 4120 or ray/box traversal block 4130 to the bindless thread dispatcher 4150, the per-FFTID count is decremented. When a given parent's FFTID counter becomes zero, the entire thread is scheduled with original execution masks 4350-4353 with a continuation shader record 1801 provided by the converging spawn message in the sorting circuitry 4008.

Different embodiments of the invention may operate in accordance with different configurations. For example, in one embodiment, all diverging spawns 4201 performed by a thread must have matching SIMD widths. In addition, in one embodiment, a SIMD lane must not perform a converging spawn 4221 with the ConvergenceMask bit set within the relevant execution mask 4350-4353 unless some earlier thread performed a diverging spawn with the same FFTID. If a diverging spawn 4201 is performed with a given StackID, a converging spawn 4221 must occur before the next diverging spawn.

If any SIMD lane in a thread performs a diverging spawn, then all lanes must eventually perform a diverging spawn. A thread which has performed a diverging spawn may not execute a barrier, or deadlock will occur. This restriction is necessary to enable spawns within divergent control flow. The parent subgroup cannot not be respawned until all lanes have diverged and reconverged.

A thread must eventually terminate after performing any spawn to guarantee forward progress. If multiple spawns are performed prior to thread termination, deadlock may occur. In one particular embodiment, the following invariants are followed, although the underlying principles of the invention are not so limited:

- All diverging spawns performed by a thread must have matching SIMD widths.

- A SIMD lane must not perform a converging spawn with the ConvergenceMask bit set within the relevant execution mask 4350-4353 unless some earlier thread performed a diverging spawn with the same FFTID.

- If a diverging spawn is performed with a given stackID, a converging spawn must occur before the next diverging spawn.

- If any SIMD lane in a thread performs a diverging spawn, then all lanes must eventually perform a diverging spawn. A thread which has performed a diverging spawn may not execute a barrier, or deadlock will occur. This restriction enables spawns within divergent control flow. The parent subgroup cannot not be respawned until all lanes have diverged and reconverged.

- A thread must eventually terminate after executing any spawn to guarantee forward progress. If multiple spawns are performed prior to thread termination, deadlock may occur.

In one embodiment, the BTD-enabled dispatcher 4150 includes thread preemption logic 4320 to preempt the execution of certain types of workloads/threads to free resources for executing other types of workloads/threads. For example, the various embodiments described herein may execute both compute workloads and graphics workloads (including ray tracing workloads) which may run at different priorities and/or have different latency requirements. To address the requirements of each workload/thread, one embodiment of the invention suspends ray traversal operations to free execution resources for a higher priority workload/thread or a workload/thread which will otherwise fail to meet specified latency requirements.

One embodiment reduces the storage requirements for traversal using a short stack 4303-4304 to store a limited number of BVH nodes during traversal operations. These techniques may be used by the embodiment in **Figures 43,** where the ray/box traversal unit 4130 efficiently pushes and pops entries to and from the short stack 4303-4304 to ensure that the required BVH nodes 5290-5291 are available. In addition, as traversal operations are performed, traversal/stack tracker 4348 updates the tracking data structure, referred to herein as the tracking array 4149, as well as the relevant stacks 4303-4304 and ray tracing data 2502. Using these techniques, when traversal of a ray is paused and restarted, the traversal circuitry/logic 4130 can consult the tracking data structure 4149 and access the relevant stacks 4303-4304 and ray tracing data 2502 to begin traversal operations for that ray at the same location within the BVH where it left off.

In one embodiment, the thread preemption logic 4320 determines when a set of traversal threads (or other thread types) are to be preempted as described herein (e.g., to free resources for a higher priority workload/thread) and notifies the ray/box traversal unit 4130 so that it can pause processing one of the current threads to free resources for processing the higher priority thread. In one embodiment, the "notification" is simply performed by dispatching instructions for a new thread before traversal is complete on an old thread.

Thus, one embodiment of the invention includes hardware support for both synchronous ray tracing, operating in workgroup mode (i.e., where all threads of a workgroup are executed synchronously), and asynchronous ray tracing, using bindless thread dispatch as described herein. These techniques dramatically improve performance compared to current systems which require all threads in a workgroup to complete prior to performing preemption. In contrast, the embodiments described herein can perform stack-level and thread-level preemption by closely tracking traversal operation, storing only the data required to restart, and using short stacks when appropriate. These techniques are possible, at least in part, because the ray tracing acceleration hardware and graphics processor core blocks 4110 communicate via a persistent memory structure 1598 which is managed at the per-ray level and per-BVH level.

When a Traceray message is generated as described above and there is a preemption request, the ray traversal operation may be preempted at various stages, including (1) not yet started, (2) partially completed and preempted, (3) traversal complete with no bindless thread dispatch, and (4) traversal complete but with a bindless thread dispatch. If the traversal is not yet started, then no additional data is required from the tracking array 4149 when the raytrace message is resumed. If the traversal was partially completed, then the traversal/stack tracker 4348 will read the tracking array 4149 to determine where to resume traversal, using the ray tracing data 2502 and stacks 5121 as required. It may query the tracking array 4149 using the unique ID assigned to each ray.

If the traversal was complete, and there was no bindless thread dispatch, then a bindless thread dispatch may be scheduled using any hit information stored in the tracking array 4149 (and/or other data structures 2502, 5121). If traversal completed and there was a bindless thread dispatch, then the bindless thread is restored and execution is resumed until complete.

In one embodiment, the tracking array 4149 includes an entry for each unique ray ID for rays in flight and each entry may include one of the execution masks 4350-4353 for a corresponding thread. Alternatively, the execution masks 4350-4353 may be stored in a separate data structure. In either implementation, each entry in the tracking array 4149 may include or be associated with a 1-bit value to indicate whether the corresponding ray needs to be resubmitted when the ray/box traversal unit 4130 resumes operation following a preemption. In one implementation, this 1-bit value is managed within a thread group (i.e., a workgroup). This bit may be set to 1 at the start of ray traversal and may be reset back to 0 when ray traversal is complete.

The techniques described herein allow traversal threads associated with ray traversal to be preempted by other threads (e.g., compute threads) without waiting for the traversal thread and/or the entire workgroup to complete, thereby improving performance associated with high priority and/or low latency threads. Moreover, because of the techniques described herein for tracking traversal progress, the traversal thread can be restarted where it left off, conserving a significant processing cycles and resource usage. In addition, the above-described embodiments allow a workgroup thread to spawn a bindless thread and provides mechanisms for reconvergence to arrive back to the original SIMD architecture state. These techniques effectively improve performance for ray tracing and compute threads by an order of magnitude.

APPARATUS AND METHOD FOR INTRA-BVH LEVEL-OF-DETAIL SELECTION

Embodiments of the invention include a multi-LoD traversal mechanism and node layout within a BVH which allows the rendering of multiple intra-mesh LoD levels using a fixed-function traversal hardware, without the need for an additional programmable shader. These embodiments reduce the frequency of BVH rebuilds across LoD changes and allow efficient stochastic LoD transitioning.

As described throughout this specification, ray tracing architectures typically rely on a Bounding Volume Hierarchy (BVH) for performing ray traversal and intersection. The BVH is constructed around objects in the graphics scene and each ray is then traversed through the nodes of the BVH to efficiently identify objects which may be intersected by the ray.

Modern real-time graphics APIs define Accelerating Structures (AS) as opaquely as possible to allow hardware-vendor-specific implementations. However, this AS generalization limits the complexity of the data structures that can be used and the programmability of the traversal operation.

Level of Detail (LoD) techniques are often used in most real-time rendering systems to limit the memory footprint and traversal cost of scene surfaces and volumes, and push the limits of visual complexity. Using LOD techniques, the complexity of a 3D model representation is reduced as instances of the 3D model become more distant from the viewer. Until recently, LoD techniques were implemented on a per-instance level, where the LoD is adjusted based on distance of the object instance from the viewer.

Most real-time LoD methods operate on a per-instance level, replacing complex surfaces or volumes with coarser representations based on a heuristic. In ray tracing APIs this involves replacing references to bottom level accelerating structures (BLAS) in a top level acceleration structure (TLAS). However, such sudden replacement usually results in visually distracting "popping" artifacts. Traversal Shaders are a programmable mechanism that allow per-ray BLAS selection and can also implement stochastic LoD transitions. An alternative approach is the usage of instance masks.

A new emerging trend is the direct rendering of massive micropolygon surfaces using a hierarchical LoD structure. One well-known example of adaptive micropolygon LoD rendering is Unreal Engine's Nanite, which generates a hierarchy of micropolygon clusters in a preprocessing step, forming a directed acyclic graph (DAG) structure. See, e.g., Brian Karis *et al.,* Nanite, A Deep Dive, Advances in Real-Time Rendering Course, Siggraph (2021). Before rendering, the LoD selection identifies a view-dependent cut in the DAG and the micropolygon clusters on the same DAG level form a crack-free continuous surface. Other intra-mesh dynamic LoD techniques such as adaptive tessellation are less flexible and require higher-level representations, such as parametric surfaces.

Intra-mesh micropolygon LoDs require frequent changes to the "active" micropolygon clusters, resulting in the rebuild of the TLAS and BLAS. They are ill-suited to current APIs and HW ray tracing implementations, and are limited to specialized software rasterization. These intra-mesh LoD techniques do not prevent "popping" artifacts upon LoD switching. Rather, such artifacts are alleviated by using subpixel-sized polygons and temporal filtering.

Per-instance LoD solutions, such as a traversal shader or instance mask testing are not suitable to intra-mesh LoDs. While different clusters could technically be treated as separate instances, this would be an inefficient solution, resulting in tiny bottom level acceleration structures in an extremely large, monolithic TLAS. In addition, treating clusters as instances would limit the applicability of these techniques (e.g., more than two acceleration structure levels would be needed for LoD transitioning). Moreover, the standard two-level hierarchy of TLAS and BLAS is not suitable for an LoD scheme for complex surfaces, as any topology change would require a full rebuild of the BLAS of the affected geometry.

To address these limitations, embodiments of the invention extend the concept of instance masks to the level of multi-LoD internal nodes in a BVH. These novel node types take a larger memory footprint compared to standard internal BVH nodes, but allow the efficient routing of the ray between two child nodes of identical bounds based on a per-ray bitmask comparison. This mechanism allows stochastic LoD selection within a BLAS or TLAS without the need for a programmable shader.

Some embodiments dynamically select an intra-mesh LoD during ray tracing using a new internal LoD node type referred to herein as a multi-LoD node or a dual child node. Just like a regular BVH internal node, it has a set of bounding boxes defined for its children, and the ray traversal enters a child node upon intersecting its bounding box. However, a multi-LoD node is a bounding box with two corresponding child nodes. After a successful intersection test a binary selection mechanism determines which child nodes are traversed for a given ray.

In terms of the ray traversal mechanism, one embodiment associates a bitmask with each internal LoD node, which is compared to a per-ray bitmask to perform the binary selection of one of the multi-LoD nodes. As long as the first half of the multi-LoD node always corresponds to the coarser LoD of the subtree, this single comparison would result in a consistent LoD selection for all children of the same node.

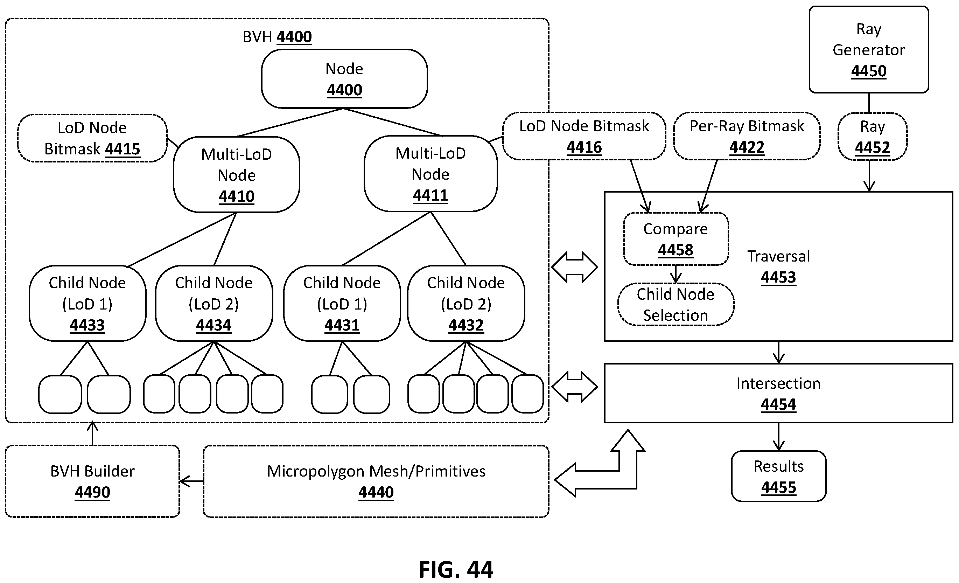

**Figure 44** illustrates an example BVH 4400 with two multi-LoD nodes 4410-4411 positioned beneath a parent node 4400. Each multi-LoD node 4410-4411 includes multiple child nodes 4431-4432 each associated with different LoDs. In particular, child node 4431 associated with a first LoD and child node 4432 associated with a second LoD (LoD2) are included under multi-LoD node 4411 in the hierarchy. Similarly, child node 4433 associated with a first LoD and child node 4434 associated with a second LoD (LoD2) are included under multi-LoD node 4410 in the hierarchy. In one embodiment, the first LoD (LoD1) comprises a relatively coarser LoD compared to the second LoD (LoD2), which provides greater precision when performing BVH traversal operations (e.g., with its bounding box subdivided into a larger number child bounding boxes).

In operation, if the traversal unit 4453 determines that a multi-LoD node 4411 is to be traversed by the ray (e.g., based on a ray/box test as described herein), then one of the two child nodes 4431-4432 are selected using the LoD node bitmask 4416. In particular, one of the two child nodes 4431-4432 of multi-LoD node 4411 are selected for traversal based on comparison of an associated LoD node bitmask 4416 with a per-ray bitmask 4422. Similarly, if the traversal unit 4453 determines that multi-LoD node 4410 is traversed by the ray, then only one of the two child nodes 4432-4433 of multi-LoD node 4410 are selected for traversal based on comparison of an associated LoD node bitmask 4415 with each per-ray bitmask 4422.

In operation, each ray 4452 produced by ray generation logic 4450 has an associated per-ray bitmask 4422. During traversal of the ray through the BVH by the traversal unit 4453, comparison logic 4458 compares the LoD node bitmask 4416 with the per-ray bitmask 4422 to determine which child node under multi-LoD node 4410 or multi-LoD node 4411 to select for further traversal. For example, if the ray 4452 is determined to traverse the bounding box of multi-LoD node 4411, then the LoD node bitmask 4416 is compared to the per-ray bitmask 4422 to determine whether to continue traversal with the first child node 4431 (at LoD1) or the second child node 4432 (at LoD2).

Various types of comparison operations may be performed by comparison logic 4458 including, but not limited to, less-than-or-equal-to (less_equal) and greater-than (greater). If the comparison operation returns true (i.e., the comparison requirement is met), then the first child node 4431 is used to continue traversal at LoD1; otherwise, the second child node 4432 is used for traversal at LoD2.

Traversal continues normally until an exit condition is reached. The subsequent traversal/intersection operations may be performed, for example, as described with respect to Figures 40-48, 86A-D, 87, 41A-B, and/or 91. The underlying principles of the invention are not limited to any particular subsequent traversal/intersection operations.

In some implementations, the micropolygon mesh may have multiple associated LoDs, where the current LoD may be selected based on a bitmask comparison operation such as described above and/or based on other variables (e.g., such as the current distance from the viewer).

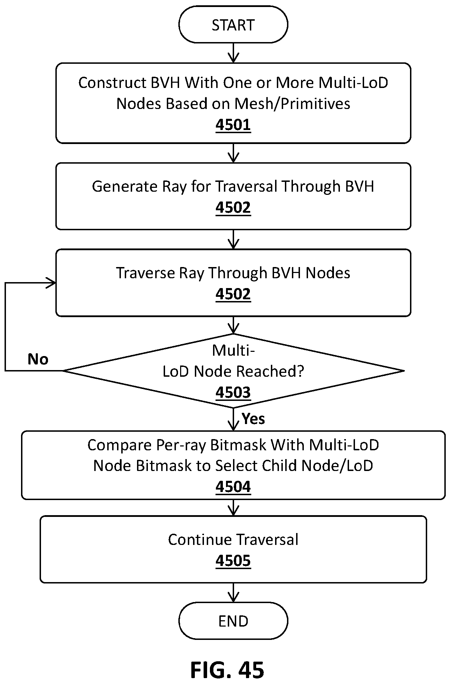

A method in accordance with one embodiment of the invention is illustrated in **Figure 45.** The method may be implemented on the various architectures described herein, but is not limited to any particular architecture.

At 4501, a BVH including one or more multi-LoD nodes is constructed based on the primitives/mesh of the current graphics scene. At 4502, a ray is generated for traversal through the BVH and, at 4502, the ray is traversed through a BVH node in the hierarchy. When a multi-LoD node is reached, determined at 4503, a per-ray bitmask associated with the ray is compared with a multi-LoD node bitmask associated with the LoD node at 4504 to select the child node and corresponding LoD to be used. At 4505 traversal continues through the selected child node/LoD and potentially other nodes of the BVH until an exit condition is reached.

Once the child node has been traversed, the process returns to 4502 if traversal is not complete, determined at 4506, and traversal proceeds through the next BVH node. When traversal is complete, at 4507, an intersection is determined with the mesh/primitives (or no intersection is determined if the ray misses the mesh/primitives) and the process returns to 4502.

Embodiments of the invention may employ different memory layout configurations depending on the implementation. In order to support cluster hierarchies without always replicating primitive leaves, one embodiment allows primitive leaves to be referenced from multiple parent LoD nodes (e.g., two child nodes with different LoDs). In these implementations, the micropolygon cluster hierarchy is a directed acyclic graph (DAG), which is the primary mechanism used for high-quality LoD clustering and crack-free surface tessellation when rendering micropolygon clusters from a cut from the DAG. However, this requires storing pointers or at least integer offsets for all children in the multi-LoD nodes 4410-4411, which makes their traversal more expensive and require a larger memory footprint compared to standard internal nodes.

One embodiment improves the rendering performance of Nanite-like micropolygon cluster hierarchies in two key ways. First, the frequency of BLAS rebuilds are reduced. Since multiple LoDs are present within the same BLAS (e.g., child nodes 4431-4434), the BLAS only needs to be rebuilt once a new LoD is required (e.g., LoD3). This reduces the BVH build cost, but also adds some overhead to the traversal itself, since the larger LoD nodes take more memory bandwidth and cache. To address this issue, the presence of such LoD nodes is limited to only 2-3 adjacent LoD levels within the entire BVH and cluster hierarchy.

Second, "popping" artifacts are eliminated by stochastic LoD transitioning. In particular, these embodiments provide for popping-free stochastic transitioning between cluster levels, the quality of which only depends on the number of bits allowed in the masks 4415-4416 of the multi-LoD internal nodes. This may not only improve the quality of surface rendering, but may yield better performance by allowing larger polygons without much noticeable difference.

With respect to BVH build considerations, API extensions are provided to allow a developer to take advantage of multi-LoD nodes 4410-4411 as described herein. In some implementations, the BVH builder 4490 receives a list of primitives along with their bounding boxes, and uses a heuristic such as SAH to construct the BVH. In case of micropolygon clusters, the BVH builder 4490 consider the bounding boxes of the coarsest "parent" primitives, over which the classical BVH structure could be built. Each of these parent clusters are used as the coarser child (e.g., child node 4431) within the aforementioned multi-LoD nodes 4410-4411, and their finer LoD sibling (e.g., child node 4432) is an internal node which continues the traversal to the finer clusters of each "parent" primitive. Thus, in one embodiment, the BVH builder 4490 is configured with the relationship between parent and child clusters to implement efficient memory layout, and also ignore the finer LoD primitives when constructing the initial, standard BVH.

While embodiments of the invention were described above in the context of micropolygon meshes, the underlying principles of the invention are not so limited. For example, the techniques described above may be used for other hierarchical LoD selection schemes including, but not limited to, sparse volumes.

APPARATUS AND METHOD FOR MANAGEABLE

FRAGMENTED ACCELERATION STRUCTURES

Acceleration structures (ASs) for real time raytracing are primarily implemented as Bounding Volume Hierarchies (BVHs), and are managed by a two-level macro structure. The bottom level AS (BLAS) are referenced in leaves of top-level AS (TLAS). The reference allows rays to be transformed from world space (TLAS space) to object space (BLAS space).

This model is challenged by two trends. First, applications require geometry to be maintained in fragments which are desired to be quickly flipped into higher or lower levels-of-detail (LODs). To reflect this, applications currently need to rebuild whole BLAS even if replacing just a fragment of its geometry whenever the number of primitives or connectivity (e.g., the way vertices are shared cross-triangles) is changed. In addition, as the TLAS becomes incrementally large, the changes that are affecting just a fragment of scene require a rebuild or at least an update of the AS. These problems become even more challenging when an application views both the BLAS and the TLAS as a monolithic opaque entity, that can be only rebuilt or updated as a whole.

One solution to the first problem is to build a separate BLAS for each LOD fragment, which places significant pressure on the TLAS builder (and its performance requirements) as the TLAS is built on a much bigger set of leaves. A solution to the second problem is to maintain two TLASs, one for dynamic objects and the other for static objects. To obtain the closest hit of given ray, applications must trace both TLASs (second traversal can cull off intersections search for second TLAS parts being further than hit found in the first traversal), choose a closer intersection, and then somehow manually execute the closest hit shader. Another possible solution would be to use multi-level instancing or programmable instancing.

However, these solutions all come at a cost. Multi-level instancing is difficult because it requires the state of each transformed ray to be maintained for each level of instancing traversal enters. It also requires complex calculations to obtain the object-to-world matrix in the shader. The object-to-world matrix is a superposition of all inversed transformation matrices for all instances along the ray's traversal path. Such a matrix would likely have to be computed in a shader at a computational and bandwidth utilization cost. Programmable instancing requires issuing the shader at each entrance to programmable instance which consumes significant time.

Embodiments of the invention address this problems by representing a BVH as separate parts that can be viewed by applications as separate smaller objects. These embodiments include refinements over traditional TLAS or BLAS systems and are less problematic than multi-level instancing. As used herein, an "AS-let" as an acceleration structure that may be used as a leaf of a higher-level acceleration structure, referred to as an "Acceleration Structure Linkage" or "AS linkage." The AS linkage can also be an AS-let, so multi-level linking is possible. The AS linkage can also directly have leaves that are not an AS, such as primitives or instances.

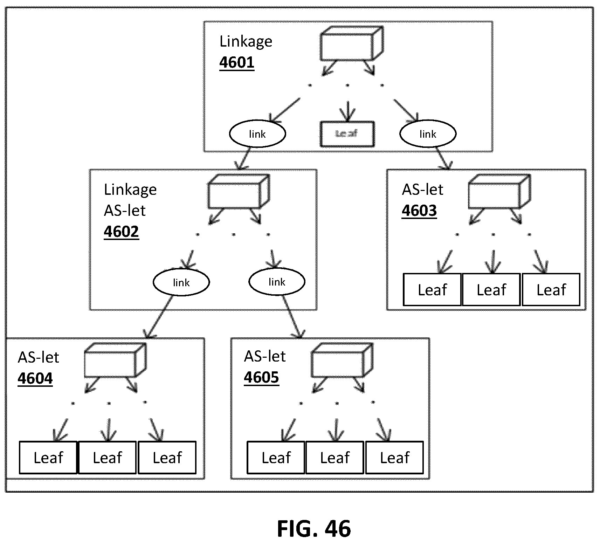

An example arrangement is illustrated in **Figure 46** including a linkage node 4601 at the top/root of the hierarchy with two direct children: a linkage AS-let node 4602 and an AS-let node 4603. The linkage AS-let node 4602 forms a link to two additional AS-let nodes 4604 while the AS-let node 4603 is a leaf node.

In some embodiments of the invention, the acceleration structure is a BVH with the internal node allowing full memory jumps for each of the child nodes and/or allowing limited jumps of relative offsets to children closely placed together in a defined memory region. These embodiments address the manageability problems mentioned above by providing a way to express the fragments of acceleration structures. In addition, these embodiments do not result in a performance penalty for traversing an instance or programmable instance as the traversal from the linkage to the AS-let referenced by it performs as efficiently as if it was the same BVH. These improved efficiencies allow the introduction of real-time RT to high-fidelity geometry-streaming based 3D engines.

As in a typical BVH, the AS of embodiments of the invention contains objects of a graphics scene and is used to search for collisions/hits of rays with the objects (referred to as "leaves" of AS) or in the objects during the ray-tracing phase. The search process is often called ray traversal.

The AS is constructed based on the set of objects, which can include:

(a) Instance objects, which include references to bottom-level acceleration structures (BLASs). Each instance object has a corresponding transformation assigned to it. Objects in the BLAS may be traversed by a ray which is transformed by the instance transformation. The AS built on the instance objects is often called top-level acceleration structure (TLAS)

(b) Triangles, which are the most common primitive objects for describing geometry in BLASs.

(c) Procedural primitives for which a program/formula is provided (e.g., as expressed by a shader) with an axis-aligned bounding box (AABB). If the traversing ray intersects the AABB, the user program determines whether there is a hit or not.

Once constructed, an AS may (and usually does) allow some properties of objects to be changed. This is the update operation that must maintain consistency of the structure while incorporating the user-desired changes.

As mentioned, an AS-let is an AS which can be referenced by a linkage. For example, AS-let nodes 4604-4605 are referenced by linkage AS-let node 4602. Some implementations may require or prefer this property to be applied prior to an AS build as it may require some modifications/ preparations for such a use.

As used herein, each "linkage" is an acceleration structure that allows one or more links to AS-lets as objects in addition to other AS object types, such as triangles, instances, and procedurals. A link is a reference to another AS-let. For example, linkage AS-let node 4602 includes references to AS-let nodes 4604-4605. It is similar to an instance, but does not involve any transformation when traversed. Thus, when a ray traversal reaches a link, the ray continues untransformed into what is contained by the referenced AS-let.

An acceleration structure can be both an AS-let and a linkage at the same time to form a multi-level linkage hierarchy, such as linkage AS-let 4602. For example, a linkage can link another linkage (that is also an AS-let). If R is a linkage, then R together with underlying AS-lets (linked directly and indirectly by it) forms a linkage hierarchy such as that illustrated in **Figure 46.** Note that there is no specific limit on the size of the hierarchy constructed with embodiments of the invention.

When a linkage acceleration structure is constructed for ray traversal, it follows usual rules for non-link objects. For each link object, the traversal operation searches for a hit in the linked AS-let (e.g., 4602). If the linked AS-let is a linkage, the AS-lets linked by it are also searched (e.g., 4604-4605), and so on.

Cycles in the linkage hierarchy should be avoided. For example, for a linkage L, all references in the underlying hierarchies should not be pointing to L, to avoid infinite searches.

In accordance with the embodiments of the invention, an application can build and maintain a multi-level linkage hierarchy of acceleration structures as shown in **Figure 46,** maintaining a combination of regular leaves (supported independently of this invention) and links to AS-lets in the same linkage. Applications can made decisions with respect to operations related to updating, building or performing no-ops for each hierarchy element independently. The described the linkage hierarchy can also be used in place of top and/or bottom level acceleration structures. For example, for the hierarchy in **Figure 46,** the application can update two AS-let nodes (e.g., two of nodes 4603-4605), leave one AS-let node untouched (one of nodes 4603-4605), update the linkage AS-let node 4602 and rebuild the linkage.

BVH build algorithms are designed around primrefs, where each primref is an AABB with some basic information about the object it references. Primref abstracts an AABB of a leaf to the builder algorithm. In some embodiments, primrefs for AS-lets can be generated with standard primrefs (encapsulating triangles or instances for example). Primrefs are then translated to leaves implementing the transition between linkages and as-lets.

In particular, in one embodiment of the invention, each primref indicates whether or not it is an AS-let node. Other entities comes before or after as-let primrefs so, in one embodiment, the distinction comes from a comparison of the placement of the primref vs first or last as-let primref. If there are no other entities, then no special distinction is needed. In one embodiment, a 1-bit in primref is used to express whether it is an AS-let node or not (e.g., 1 = AS-let node). If the primref is an AS-let node, the primref encodes directly or indirectly the pointer to AS-let BVH.

In one embodiment, AABB primrefs are generated for AS-let nodes as follows. If an AABB is provided, the AABB is used as a bounding box of a primref if a null pointer to AS-let is given. In such case, the pointer to the AS-let can be null and the AABB will be placed in the BVH, but it is disabled for traversal.

If only the AS-let pointer is provided, the BVH builder goes to the root node of the AS-let BVH and computes a bounding box of the root-node's children. Some implementations may keep the box precomputed in the header of the AS-let BVH that may be taken instead of computing it from the root.

The bounding box is used as an AABB of the primref. The AS-let primrefs together with primrefs of other entities if required are then used by the BVH build algorithm as usual.

Primrefs are translated to AS-let links. If a given internal node format allows a pointer/offset to all the children independently, the internal node parent for the primref should point to the root of the AS-let referenced by the primref.

If the format has only one pointer/offset to the array of children being close to each other, the root node of the AS-let can be copied into the linkage BVH and the pointer/offset adjusted if it is a relative to the node.

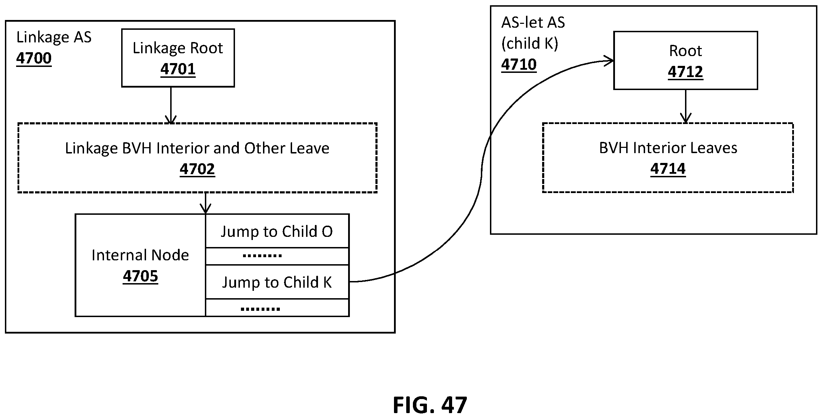

**Figure 47** illustrates a specific example in accordance with some embodiments of the invention. A linkage AS node 4700 is illustrated 4700 with a linkage root node 4701 positioned above a set of linkage BVH interior nodes 4702 (and potentially one or more leaf nodes) within the hierarchy. An internal node 4705 is highlighted with a set of jump references to a corresponding set of AS-let nodes. In particular, the jump reference for child node K, corresponding to AS-let acceleration structure 4710, points to the root node 4712 of AS-let AS 4710, which also includes a plurality of BVH interior/leaf nodes 4714 beneath the root node 4712 in the AS hierarchy.

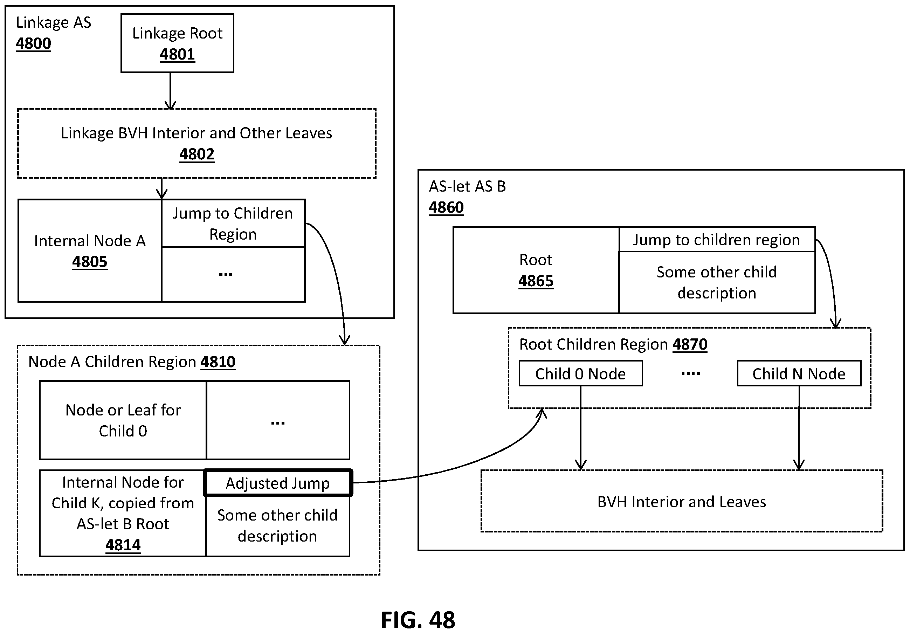

**Figure 48** illustrates another example in accordance with some embodiments of the invention. As in **Figure 47,** Linkage AS node 4800 includes a linkage root node 4801 and a set of linkage BVH interior nodes 4802 (and potentially other leaf nodes) forming a hierarchy. Internal node A 4805, which is highlighted, includes a primref referencing an AS-let child K. In this example, the root node 4865 of the AS-let acceleration structure B 4860 has been copied into the BVH within the node A children region 4810 as an internal node 4814. An adjusted jump pointer of the internal node for child K 4814 identifies the root children region 4870 of AS-let acceleration structure B 4860. The root children region 4870 of AS-let node B 4860 includes a plurality of child nodes (child 0 node, ... child N node).

With current 3D APIs the AS-let pointer provided may often be null. More generally, the interface may provide any type of indication that the interface is degenerated so that ray traversal cannot enter it. In such cases, implementing the AS-let linking leaf node would be as a non-traversable child that is allowed to be updated during AS update algorithms.

By way of example, and not limitation, for implementations which mark traversal validity per child node, it should be set to invalid for children that are degenerated AS-let link nodes. Some embodiments include a property setting associated with each node that disables traversal of a given node. A dummy node representing an AS-let link node (e.g., Internal node for child K 4814) is placed within the property set.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.).

EXAMPLES

The following are example implementations of different embodiments of the invention.

Example 1. An apparatus, comprising: acceleration structure construction logic to build an acceleration structure (AS) including a multi-level linkage hierarchy with different types of AS fragments, the different types of AS fragments including a first type of AS fragments with leaves, a second type of AS fragments including AS linkages, and a third type of AS fragment including both leaves and AS linkages, wherein to construct an AS fragment, the acceleration structure construction logic is to: evaluate a plurality of primitive references, determine whether each primitive reference indicates a primitive or an AS fragment, and if the primitive reference indicates an AS fragment, then encode a pointer or offset directly or indirectly into a bounding volume hierarchy (BVH) of the AS fragment; and traversal hardware logic to traverse a ray through the AS.

Example 2. The apparatus of example 1 wherein a primitive reference which indicates a primitive, is to reference a triangle, an instance, or a procedural primitive.

Example 3. The apparatus of examples 1 or 2 wherein each AS fragment of the second type of AS fragments includes one or more linkages to other AS fragments and/or to objects.

Example 4. The apparatus of any of claims 1-3 wherein each AS fragment of the third type of AS fragments includes one or more linkages to AS fragments of the first type.

Example 5. The apparatus of any of claims 1-4 wherein to construct the AS, the AS construction hardware logic is to generate an internal node of an AS fragment of the second type or the third type from a root node of an AS fragment of any type.

Example 6. The apparatus of any of claims 1-5 wherein the AS construction hardware logic is to generate an internal node of an AS fragment, the internal node including a jump reference to one or more BVH nodes of the AS fragment.

Example 7. The apparatus of any of claims 1-6 wherein the generated internal node is to be stored within a children region contained in the AS fragment of the second type or the third type adjacent to one or more other internal nodes, primitives, or instances.

Example 8. A method, comprising: building an acceleration structure (AS) including a multi-level linkage hierarchy with different types of AS fragments, the different types of AS fragments including a first type of AS fragments with leaves, a second type of AS fragments including AS linkages, and a third type of AS fragment including both leaves and AS linkages, the AS fragment is to be constructed by performing the operations of: evaluating a plurality of primitive references, determining whether each primitive reference indicates a primitive or an AS fragment, and if the primitive reference indicates an AS fragment, then encoding a pointer or offset directly or indirectly into a bounding volume hierarchy (BVH) of the AS fragment; and traversing a ray through the AS.

Example 9. The method of example 8 wherein a primitive reference which indicates a primitive, is to reference a triangle, an instance, or a procedural primitive.

Example 10. The method of examples 8 or 9 wherein each AS fragment of the second type of AS fragments includes one or more linkages to other AS fragments and/or to objects.

Example 11. The method of any of claims 8-10 wherein each AS fragment of the third type of AS fragments includes one or more linkages to AS fragments of the first type.

Example 12. The method of any of claims 8-11 wherein to construct the AS, generating an internal node of an AS fragment of the second type or the third type from a root node of an AS fragment of any type.

Example 13. The method of any of claims 8-12 wherein to construct the AS, generating an internal node of an AS fragment, the internal node including a jump reference to one or more BVH nodes of the AS fragment.

Example 14. The method of any of claims 8-13 wherein the generated internal node is to be stored within a children region contained in the AS fragment of the second type or the third type adjacent to one or more other internal nodes, primitives, or instances.

Example 15. A machine-readable medium having program code stored thereon which, when executed by a machine, cause the machine to perform the operations of: building an acceleration structure (AS) including a multi-level linkage hierarchy with different types of AS fragments, the different types of AS fragments including a first type of AS fragments with leaves, a second type of AS fragments including AS linkages, and a third type of AS fragment including both leaves and AS linkages, the AS fragment is to be constructed by performing the operations of: evaluating a plurality of primitive references, determining whether each primitive reference indicates a primitive or an AS fragment, and if the primitive reference indicates an AS fragment, then encoding a pointer or offset directly or indirectly into a bounding volume hierarchy (BVH) of the AS fragment; and traversing a ray through the AS.

Example 16. The machine-readable medium of example 15 wherein a primitive reference which indicates a primitive, is to reference a triangle, an instance, or a procedural primitive.

Example 17. The machine-readable medium of examples 15 or 16 wherein each AS fragment of the second type of AS fragments includes one or more linkages to other AS fragments and/or to objects.

Example 18. The machine-readable medium of any of claims 15-17 wherein each AS fragment of the third type of AS fragments includes one or more linkages to AS fragments of the first type.

Example 19. The machine-readable medium of any of claims 15-19 wherein to construct the AS, generating an internal node of an AS fragment of the second type or the third type from a root node of an AS fragment of any type.

Example 20. The machine-readable medium of any of claims 15-19 wherein to construct the AS, generating an internal node of an AS fragment, the internal node including a jump reference to one or more BVH nodes of the AS fragment.

Example 21. The machine-readable medium of any of claims 15-20 wherein the generated internal node is to be stored within a children region contained in the AS fragment of the second type or the third type adjacent to one or more other internal nodes, primitives, or instances.

In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware.

Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

**Claims**

1. An apparatus, comprising:
   acceleration structure construction logic to build an acceleration structure (AS) including a multi-level linkage hierarchy with different types of AS fragments, the different types of AS fragments including a first type of AS fragments with leaves, a second type of AS fragments including AS linkages, and a third type of AS fragment including both leaves and AS linkages, wherein to construct an AS fragment, the acceleration structure construction logic is to:

   evaluate a plurality of primitive references,
   determine whether each primitive reference indicates a primitive or an AS fragment, and
   if the primitive reference indicates an AS fragment, then encode a pointer or offset directly or indirectly into a bounding volume hierarchy (BVH) of the AS fragment; and
   traversal hardware logic to traverse a ray through the AS.

2. The apparatus of claim 1 wherein a primitive reference which indicates a primitive, is to reference a triangle, an instance, or a procedural primitive.

3. The apparatus of claim 1 or 2 wherein each AS fragment of the second type of AS fragments includes one or more linkages to other AS fragments and/or to objects.

4. The apparatus of any of claims 1 to 3 wherein each AS fragment of the third type of AS fragments includes one or more linkages to AS fragments of the first type.

5. The apparatus of any of claims 1 to 4 wherein to construct the AS, the AS construction hardware logic is to generate an internal node of an AS fragment of the second type or the third type from a root node of an AS fragment of any type.

6. The apparatus of claim 5 wherein the AS construction hardware logic is to generate an internal node of an AS fragment, the internal node including a jump reference to one or more BVH nodes of the AS fragment.

7. The apparatus of claim 5 wherein the generated internal node is to be stored within a children region contained in the AS fragment of the second type or the third type adjacent to one or more other internal nodes, primitives, or instances.

8. A method, comprising:

   building an acceleration structure (AS) including a multi-level linkage hierarchy with different types of AS fragments, the different types of AS fragments including a first type of AS fragments with leaves, a second type of AS fragments including AS linkages, and a third type of AS fragment including both leaves and AS linkages, the AS fragment is to be constructed by performing the operations of:

evaluating a plurality of primitive references,
determining whether each primitive reference indicates a primitive or an AS fragment, and
if the primitive reference indicates an AS fragment, then encoding a pointer or offset directly or indirectly into a bounding volume hierarchy (BVH) of the AS fragment; and

traversing a ray through the AS.

9. The method of claim 8 wherein a primitive reference which indicates a primitive, is to reference a triangle, an instance, or a procedural primitive.

10. The method of claim 8 or 9 wherein each AS fragment of the second type of AS fragments includes one or more linkages to other AS fragments and/or to objects.

11. The method of any of claims 8 to 10 wherein each AS fragment of the third type of AS fragments includes one or more linkages to AS fragments of the first type.

12. The method of any of claims 8 to 11 wherein to construct the AS, generating an internal node of an AS fragment of the second type or the third type from a root node of an AS fragment of any type.

13. The method of any of claims 8 to 12 wherein to construct the AS, generating an internal node of an AS fragment, the internal node including a jump reference to one or more BVH nodes of the AS fragment.

14. The method of claim 12 wherein the generated internal node is to be stored within a children region contained in the AS fragment of the second type or the third type adjacent to one or more other internal nodes, primitives, or instances.

15. A machine-readable medium having program code stored thereon which, when executed by a machine, cause the machine to perform the operations of:

building an acceleration structure (AS) including a multi-level linkage hierarchy with different types of AS fragments, the different types of AS fragments including a first type of AS fragments with leaves, a second type of AS fragments including AS linkages, and a third type of AS fragment including both leaves and AS linkages, the AS fragment is to be constructed by performing the operations of:

evaluating a plurality of primitive references,
determining whether each primitive reference indicates a primitive or an AS fragment, and
if the primitive reference indicates an AS fragment, then encoding a pointer or offset directly or indirectly into a bounding volume hierarchy (BVH) of the AS fragment; and

traversing a ray through the AS.

PROCESSOR(S)
102

MEMORY DEVICE - 120

INSTRUCTIONS - 121

DATA - 122

CACHE
104

REGISTER
FILE
106

PROCESSOR CORE(S) - 107

INSTRUCTION SET
109

MEMORY
CONTROLLER
116

GRAPHICS PROCESSOR(S)
108

DISPLAY DEVICE
111

EXTERNAL
GRAPHICS PROCESSOR
118

ACCELERATOR
112

EXTERNAL
ACCELERATOR
119

INTERFACE BUS(ES) - 110

DATA STORAGE
DEVICE
124

PLATFORM
CONTROLLER
HUB
130

TOUCH SENSORS
125

WIRELESS
TRANSCEIVER
126

FIRMWARE INTERFACE
128

NETWORK
CONTROLLER
134

AUDIO
CONTROLLER
146

LEGACY I/O
CONTROLLER
140

100

KEYBOARD
/MOUSE - 143

CAMERA
144

USB CONTROLLER(S)
142

**FIG. 1**

PROCESSOR 200

| | |
|---|---|
| | |

CORE 202A
CACHE UNIT(S) 204A

CORE 202N
CACHE UNIT(S) 204N

SHARED CACHE UNIT(S) - 206

RING - 212

SYSTEM AGENT CORE 210

DISPLAY CONTROLLER 211

MEMORY CONTROLLER 214

BUS CONTROLLER UNIT(S) 216

EMBEDDED MEMORY MODULE 218

I/O 213

GRAPHICS PROCESSOR 208

**FIG. 2A**

**FIG. 2B**

219

| GEOMETRY & FIXED FUNCTION PIPELINE 231 | GRAPHICS SOC INTERFACE 232 | GRAPHICS MICROCONTROLLER 233 | MEDIA PIPELINE 234 | PIXEL BACKENDS 235 | 230 |

221A

| Vector Engine 222A | Matrix 223A | Cache/ SLM 228A | Sampler 226A |
| Vector Engine 224A | Matrix 225A | | Ray Tracing 227A |

221B

| Vector Engine 222B | Matrix 223B | Cache/ SLM 228B | Sampler 226B |
| Vector Engine 224B | Matrix 225B | | Ray Tracing 227B |

221C

| Vector Engine 222C | Matrix 223C | Cache/ SLM 228C | Sampler 226C |
| Vector Engine 224C | Matrix 225C | | Ray Tracing 227C |

SHARED/ CACHE MEMORY 236

RASTERIZER 237

ADDITIONAL FIXED FUNCTION LOGIC 238

221D

| Vector Engine 222D | Matrix 223D | Cache/ SLM 228D | Sampler 226D |
| Vector Engine 224D | Matrix 225D | | Ray Tracing 227D |

221E

| Vector Engine 222E | Matrix 223E | Cache/ SLM 228E | Sampler 226E |
| Vector Engine 224E | Matrix 225E | | Ray Tracing 227E |

221F

| Vector Engine 222F | Matrix 223F | Cache/ SLM 228F | Sampler 226F |
| Vector Engine 224F | Matrix 225F | | Ray Tracing 227F |

**FIG. 2C**

**FIG. 2D**

EP 4 571 656 A1

GRAPHICS PROCESSOR
300

GRAPHICS PROCESSING
ENGINE
310

| DISPLAY CONTROLLER 302 | COPY ENGINE 304 | 3D PIPELINE 312 | 3D/MEDIA SUB-SYSTEM 315 | MEDIA PIPELINE 316 | VIDEO CODEC ENGINE 306 |

MEMORY INTERFACE - 314

DISPLAY DEVICE
318

*FIG. 3A*

EP 4 571 656 A1

*FIG. 3B*

FIG. 3C

**FIG. 4**

EP 4 571 656 A1

**FIG. 5A**

EP 4 571 656 A1

FIG. 5B

FIG. 5C

**FIG. 6**

EP 4 571 656 A1

GRAPHICS PROCESSOR INSTRUCTION
FORMATS
700

128-BIT INSTRUCTION
710

| OPCODE 712 | CONTROL 714 | EXEC-SIZE 716 | DEST 718 | SRC0 720 | SRC1 722 | SRC2 724 | ACCESS/ADDRESS MODE 726 |
|---|---|---|---|---|---|---|---|

64-BIT COMPACT
INSTRUCTION
730

| OPCODE 712 | INDEX 713 | CONTROL 714 | DEST 718 | SRC0 720 | SRC1 722 |
|---|---|---|---|---|---|

OPCODE DECODE
740

| 7 | 6 | 5 | 4 | 3 | 2 | 1 | 0 |
|---|---|---|---|---|---|---|---|

opcode=000xxxxb ◄─── Move/Logic - 742

opcode=0010xxxxb ◄─── Miscellaneous - 746

opcode=0011xxxxb ◄─── Flow Control - 744

opcode=0100xxxxb ◄─── Parallel Math - 748

opcode=0101xxxxb ◄─── Vector Math - 750

*FIG. 7*

GRAPHICS
PROCESSOR
800

MEDIA PIPELINE
830

DISPLAY ENGINE
840

COMMAND
STREAMER
803

GEOMETRY
PIPELINE
820

802

VIDEO
FRONT-END
834

MEDIA
ENGINE
837

2D ENGINE
841

DISPLAY
CONTROLLER
843

Vertex Fetcher
805

831

EXECUTION LOGIC

850

RING INTERCONNECT

THREAD DISPATCHER

VERTEX
SHADER
807

HULL
SHADER
811

TESSELLATOR
813

DOMAIN
SHADER
817

GEOMETRY
SHADER
819

STREAM
OUT
823

CLIP/
SETUP
829

L1
CACHE
851

GRAPHICS
CORES
852A

GRAPHICS
CORES
852B

SAMPLER
854

MEM
INTF.
856

TEXTURE
CACHE
858

RASTER/
DEPTH
873

L3
CACHE
875

PIXEL
OPS
877

RENDER
CACHE
878

DEPTH
CACHE
879

RENDER
OUTPUT
PIPELINE
870

FIG. 8

EP 4 571 656 A1

## FIG. 9A

GRAPHICS PROCESSOR COMMAND
FORMAT
900

| CLIENT 902 | OPCODE 904 | SUB-OPCODE 905 | DATA 906 | COMMAND SIZE 908 |
|---|---|---|---|---|

## FIG. 9B

GRAPHICS PROCESSOR COMMAND
SEQUENCE
910

```
PIPELINE FLUSH
912
```

```
PIPELINE SELECT
913
```

```
PIPELINE CONTROL
914
```

```
RETURN BUFFER STATE
916
```

922 — 3D     920 — Pipeline? — Media 924

| 3D PIPELINE STATE 930 | MEDIA PIPELINE STATE 940 |
|---|---|
| 3D PRIMITIVE 932 | MEDIA OBJECT 942 |
| EXECUTE 934 | EXECUTE 944 |

80

DATA PROCESSING SYSTEM - 1000

3D GRAPHICS APPLICATION
1010

EXECUTABLE INSTRUCTIONS
1014

SHADER INSTRUCTIONS
1012

GRAPHICS OBJECTS
1016

MEMORY
1050

OPERATING SYSTEM (OS)
1020

USER MODE GRAPHICS DRIVER
1026

SHADER COMPILER
1027

SHADER COMPILER
1024

GRAPHICS API
1022

KERNEL MODE GRAPHICS DRIVER
1029

OS KERNEL MODE FUNCTIONS
1028

GRAPHICS PROCESSOR
1032

PROCESSOR
1030

GENERAL PURPOSE CORE(s)
1034

FIG. 10

81

IP CORE DEVELOPMENT - 1100

SOFTWARE SIMULATION 1110

SIMULATION MODEL 1112

REGISTER TRANSFER LEVEL DESIGN 1115

HARDWARE MODEL (HDL OR PHYSICAL DESIGN DATA) 1120

DESIGN FACILITY 1130

NON-VOLATILE MEMORY 1140

FABRICATION FACILITY 1165

WIRED CONNECTION 1150

WIRELESS CONNECTION 1160

**FIG. 11A**

EP 4 571 656 A1

PACKAGE
ASSEMBLY
1170

LOGIC
1172

INTERCONNECT
STRUCTURE
1173

LOGIC or I/O
1174

BRIDGE
1182

SUBSTRATE
1180

PACKAGE
INTERCONNECT
1183

## FIG. 11B

**FIG. 11C**

EP 4 571 656 A1

1194

Interchangeable Chiplets
1195

Base Chiplet
1196

Bridge
Interconnect
1197

Base Chiplet
1198

**FIG. 11D**

SOC
INTEGRATED CIRCUIT
1200

APPLICATION
PROCESSOR(s)
1205

GRAPHICS
PROCESSOR
1210

IMAGE
PROCESSOR
1215

VIDEO
PROCESSOR
1220

USB
1225

UART
1230

SPI/
SDIO
1235

$I^2S/I^2C$
1240

DISPLAY
1245

SECURITY
ENGINE
1270

MEMORY
1265

FLASH
1260

MIPI
1255

HDMI
1250

*FIG. 12*

GRAPHICS PROCESSOR
1310

VERTEX PROCESSOR
1305

FRAGMENT
PROCESSOR
1315A

FRAGMENT
PROCESSOR
1315C

- - -

FRAGMENT
PROCESSOR
1315N-1

FRAGMENT
PROCESSOR
1315B

FRAGMENT
PROCESSOR
1315D

- - -

FRAGMENT
PROCESSOR
1315N

MMU
1320A

MMU
1320B

CACHE
1325A

CACHE
1325B

INTERCONNECT
1330A

INTERCONNECT
1330B

FIG. 13

GRAPHICS PROCESSOR
1340

INTER-CORE TASK-MANAGER
(e.g., THREAD DISPATCHER)
1345

| SHADER CORE 1355A | SHADER CORE 1355C | SHADER CORE 1355E | - - - | SHADER CORE 1355N-1 |
| SHADER CORE 1355B | SHADER CORE 1355D | SHADER CORE 1355F | - - - | SHADER CORE 1355N |

TILING UNIT
1358

| MMU 1320A | MMU 1320B |
| CACHE 1325A | CACHE 1325B |
| INTERCONNECT 1330A | INTERCONNECT 1330B |

*FIG. 14*

FIG. 15

**FIG. 16**

ASSIGNED STACKS
**1701**

Primary Shader

Hit Shader

Traversal Shader

Continuation

Ray-BVH Intersect

FREE STACK POOL
**1702**

CALL STACK REFERENCES

**FIG. 17**

**FIG. 18**

**FIG. 19**

Legend:
- Inner Traversal 1903
- Outer Traversal 1904
- Traversal Node 1905
- Leaf Node with Triangles 1906
- Leaf Node with Custom Primitives 1907

TOP-LEVEL BVH 1900 — BVH0

BOTTOM-LEVEL BVH 1901 — BVH1

BOTTOM-LEVEL BVH 1902 — BVH2

TRAVERSAL STATE **2000**

WORLD RAY, HIT INFO **2001**

OBJECT RAY **2002**

CALL STACK OFFSET **2003**

TRAVERSAL OFFSET **2004**

CALL STACK **2005**

INNER STACK, RAY PTR, BVH PTR

INNER STACK, RAY PTR, BVH PTR

INNER STATE **2010**

FIG. 20

**FIG. 21**

FIG. 22A

3 dispatch cycles

FIG. 22B

EP 4 571 656 A1

SIMD/SIMT
CORES/
EXE UNITS
**1601**

**2301**

t=1 ✖ t=2

t=1

C1

TRAV.
STATE
**2201**

Memory
(Cached)

RAY-BVH TRAVERSAL/
INTERSECTION
**1605**

**2301**

SCHEDULER
**1607**

SHADER DEFERRAL/
AGGREGATOR **2306**

SORTING
**1608**

1 dispatch cycle

**FIG. 23**

97

**FIG. 24**

**FIG. 25**

EP 4 571 656 A1

100

```
                        ┌─────────┐
                        │  START  │
                        └────┬────┘
                             │
   ┌────────────────────────▼────────────────────────┐
   │  EXECUTE INSTRUCTIONS OF PRIMARY GRAPHICS        │◄──┐
──►│  THREAD ON PRIMARY PROCESSOR CIRCUITRY           │   │
   │                    2601                          │   │
   └────────────────────────┬────────────────────────┘   │
                            │                            │
              ◄─────────────▼─────────────►              │
                  RAY TRACING (RT) INSTRUCTION?      No ──┘
                            2602
                             │
                            Yes
                             │
           ┌─────────────────▼─────────────────┐
           │      DECODE RT INSTRUCTION        │
           │               2603                │
           └─────────────────┬─────────────────┘
                             │
           ┌─────────────────▼─────────────────┐
           │       SCHEDULE AND DISPATCH       │
           │  TO RAY TRACING EXECUTION CIRCUITRY│
           │               2604                │
           └─────────────────┬─────────────────┘
                             │
           ┌─────────────────▼─────────────────┐
           │      EXECUTE RT INSTRUCTION ON    │
           │  RAY TRACING EXECUTION CIRCUITRY  │
           │               2605                │
           └─────────────────┬─────────────────┘
                             │
           ┌─────────────────▼─────────────────┐
           │  STORE RT RESULTS IN MEMORY/REGISTERS│
           │               2606                │
           └─────────────────┬─────────────────┘
                             │
           ┌─────────────────▼─────────────────┐
           │    NOTIFY PRIMARY GRAPHICS THREAD │
           │               2607                │
           └─────────────────┬─────────────────┘

   ┌───────────────────────────────┐
   │  PROCESS RT RESULTS WITHIN     │
   │  PRIMARY GRAPHICS THREAD       │
   │             2608               │
   └───────────────────────────────┘
```

**FIG. 26**

**FIG. 27**

ORIGINAL MESH
**2891**

DISPLACEMENT
FUNCTION
**2892**

MESH WITH
DISPLACEMENT
**2893**

**FIG. 28A**

EP 4 571 656 A1

**FIG. 28B**

EP 4 571 656 A1

SURFACE
2900

BASE
SUBDIVISION
SURFACE
2901

DISPLACEMENT
MAPPING
2902

FIG. 29A

DIFFERENCE VECTORS **2922**

v2

v3

v4

d4

v1

d3

d2

d1

COARSE BASE MESH
**2903**

**FIG. 29B**

FIG. 29C

START

GENERATE DISPLACEMENT-MAPPED MESH
FROM BASE SUBDIVISION SURFACE
**3001**

GENERATE OR IDENTIFY BASE MESH
**3002**

QUANTIZE DISPLACEMENT VALUES OF DISPLACEMENT-
MAPPED MESH IN VIEW OF BASE MESH TO GENERATE
3D DISPLACEMENT ARRAY OF DIFFERENCE VECTORS
**3003**

GENERATE BASE COORDINATES ASSOCIATED
WITH THE COARSE BASE MESH
**3004**

STORE COMPRESSED DISPLACED MESH COMPRISING 3D
DISPLACEMENT ARRAY AND BASE COORDINATES
**3005**

READ PRIMITIVE?
**3006**

Y

GENERATE DISPLACED GRID FROM
COMPRESSED DISPLACED MESH
**3003**

END

**FIG. 30**

**FIG. 31**

**FIG. 32**

FIG. 33

EP 4 571 656 A1

FIG. 34

TESSELATOR
3450

111

**FIG. 35**

FIG. 36

FIG. 37

3855

FIG. 38

**FIG. 39**

FIG. 40

**FIG. 41A**

FIG. 41B

MESHLET GATHER & DECOMPRESSION **4190**

RAY TRACING CACHE **4160**

INTERSECTION TESTER **4140**

64B

128B Data

L1 CACHE (LSC) **4170**

MEMORY INTERFACE **4133**

RAY/BOX TRAVERSAL **4130**

STATE INITIALIZER **4120**

LD Decompressed Data Message Support with GRF View Caching

128B Write Over 2 clocks; No L1 caching

MESHLET COMPRESSION **4131**

MEMORY **1598**

GPCB **4110**

512b/64B Message Phase (4 phases) + 128B Address on Sideband or Header

**FIG. 42**

**FIG. 43**

**FIG. 44**

START

Construct BVH With One or More Multi-LoD
Nodes Based on Mesh/Primitives
**4501**

Generate Ray for Traversal Through BVH
**4502**

Traverse Ray Through BVH Nodes
**4502**

Multi-
LoD Node Reached?
**4503**

No

Yes

Compare Per-ray Bitmask With Multi-LoD
Node Bitmask to Select Child Node/LoD
**4504**

Continue Traversal
**4505**

END

**FIG. 45**

**FIG. 46**

FIG. 47

**Linkage AS 4800**

Linkage Root **4801**

Linkage BVH Interior and Other Leaves **4802**

Internal Node A **4805** | Jump to Children Region / ...

**AS-let AS B 4860**

Root **4865** | Jump to children region / Some other child description

**Root Children Region 4870**

Child 0 Node · · · · Child N Node

BVH Interior and Leaves

**Node A Children Region 4810**

Node or Leaf for Child 0 | ...

Internal Node for Child K, copied from AS-let B Root **4814** | Adjusted Jump / Some other child description

**FIG. 48**

EP 4 571 656 A1

Europäisches
Patentamt

European
Patent Office

Office européen
des brevets

# EUROPEAN SEARCH REPORT

**Application Number**

EP 24 20 5635

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOSHUA BARCZAK: "An Improved Multi-Level Raytracing Algorithm", INTERNET CITATION, 19 June 2009 (2009-06-19), pages 1-6, 1, XP002758772, Retrieved from the Internet: URL:http://web.archive.org/web/20150318205 455/http://www.joshbarczak.com/pathcompres sion.pdf [retrieved on 2016-06-15] * abstract * * section 3.3 * * figure 4 * | 1-15 | INV. G06T15/06 |
| X | KULKARNI PARITOSH PARITOSH KULKARNI@AMD COM ET AL: "Fused BVH to Ray Trace Level of Detail Meshes", PROCEEDINGS OF THE 2022 ACM SIGSAC CONFERENCE ON COMPUTER AND COMMUNICATIONS SECURITY, ACMPUB27, NEW YORK, NY, USA, 6 December 2022 (2022-12-06), pages 1-2, XP058955868, DOI: 10.1145/3550082.3564211 ISBN: 978-1-4503-9466-6 * abstract * * sections 2, 2.2, 2.5, 2.6 * * figures 2, 4 * | 1-15 | |
| A | TESSARI L. ET AL: "Stochastic Subsets for BVH Construction", CHAPTER 1: MONTE CARLO PATH TRACING, vol. 42, no. 2, 23 May 2023 (2023-05-23), pages 255-267, XP93058097, Oxford DOI: 10.1111/cgf.14759 * abstract * * sections 1, 4 * | 1-15 | |

**TECHNICAL FIELDS SEARCHED (IPC)**

G06T

The present search report has been drawn up for all claims

| Place of search | Date of completion of the search | Examiner |
|---|---|---|
| Berlin | 7 March 2025 | Kröner, Sabine |

EPO FORM 1503 03.82 (P04C01)